# EUROPÄISCHE PATENTSCHRIFT

(11) **EP 1 952 969 B1**
(45) Veröffentlichungstag und Bekanntmachung des Hinweises auf die Patenterteilung: **23.05.2018**
(21) Anmeldenummer: 08001257.8
(22) Anmeldetag: 23.01.2008
(51) Int. Cl.: B29C 47/86, B29C 47/90, E04F 13/04, E04F 13/06, E04F 19/02, E04F 19/06, E06B 1/62

(54) **Bauprofilleiste aus extrudiertem Kunststoff mit einer Oberflächenverankerungsstruktur**
Molding component made from extruded plastic with a surface anchoring structure
Profilé de construction en plastique extrudé avec structure d'ancrage en surface

(30) Priorität: 24.01.2007 DE 102007003511
(43) Veröffentlichungstag der Anmeldung: 06.08.2008
(73) Patentinhaber: Lehrhuber, Konrad, 4981 Reichersberg (AT)
(72) Erfinder: Lehrhuber, Konrad, 4981 Reichersberg (AT)
(74) Vertreter: Konnerth, Dieter Hans

(56) Entgegenhaltungen:
- EP-A1- 0 015 312
- EP-A1- 1 384 835
- DE-A1- 3 405 918
- DE-A1- 19 530 270
- US-A1- 2002 023 399

## Beschreibung

Die Erfindung betrifft eine Bauprofilleiste aus Kunststoff, die gemäß dem Oberbegriff des Anspruchs 1 an ihrer Oberfläche eine Vertiefungen aufweisende Verankerungsstruktur als Haftgrund für aufzubringendes bildsames Material aufweist, sowie ein Verfahren gemäß dem Oberbegriff des Anspruchs 16 und eine Vorrichtung zum Herstellen einer solchen Bauprofilleiste.

Bildsames Material ist üblicherweise ein plastisches Material, das nach der Verarbeitung einen Trocknungs-, Abbinde- oder Aushärtungsvorgang aufweist. Bildsames Material ist beispielsweise Farbe, Lack, Lasur, Putz, Spachtelmasse, Estrich, Beton, mineralische Klebmasse, plastischer Dichtstoff, Klebstoff und dergleichen.

Bauprofilleisten aus extrudiertem Kunststoff werden insbesondere bei Nassputz, WDVS (Wärmedämmverbundsystem), Trockenbau, Elektroinstallation, Estrich, Beton- und Fliesenarbeiten verwendet als beispielsweise Abstandhalter, Installationsschächte oder -rohre, Abzugshilfen, Renovationsprofile, Kantenschutzprofile, Dehnfugenprofile, Abschlussprofile oder Bauteilanschlussprofile verwendet.

Wenn nach der Verarbeitung Anteile der Bauprofilleisten an der sichtbaren Oberfläche verbleiben, kann insbesondere bei Farbgestaltungen eine Beschichtung dieses Anteils mit Farbe oder Lack vorgesehen sein. Da Kunststoff grundsätzlich ein nicht saugendes Material ist, ist zur Verbindung von bildsamem Material mit einer Bauprofilleiste aus Kunststoff eine mechanische Verankerung erforderlich.

Aus dem Stand der Technik sind dazu verschiedene Techniken bekannt.

Für Malerarbeiten werden bisher die zu beschichtenden Flächen des Kunststoffbauteils entweder mit Säure angeätzt oder mit Schleifpapier oder dergleichen angeschliffen und damit für einen Farbauftrag etwas aufgerauht. Das geschieht zumeist an der Baustelle im eingebauten Zustand. Dabei existiert die Gefahr, dass ein benachbartes Bauteil beschädigt wird. Bei komplex geformten Kunststoffoberflächen mit Abwinkelungen ist die Herstellung der rauen Oberfläche schwierig. Diese manuelle Tätigkeit ist daher eine besonders riskante, aufwendige und teuere Lösung.

Bei der Verbindung mit Putz und Spachtelmassen werden Bauprofilleisten gerne mit Durchbrechungen bzw. Ausstanzungen versehen. Das setzt jedoch eine bestimmte Form oder Funktion der Bauprofilleiste voraus. Bei extrudierten Profilen mit Hohlkammern ist eine Stanzung technisch nicht möglich. Das gilt ebenso für exponierte oder besonders kleine Profilanteile. Auch ungünstig angeordnete Profilanteile sind für eine Stanzvorrichtung unzugänglich. Manchmal ist eine Durchbrechung auch unerwünscht, um z. B. eine Dehnfuge abdichtend zu überdecken.

Auch mittels Formgebung des Kunststoffprofils kann eine mechanische Verankerung bereitgestellt werden.

Es sind zahlreiche Lösungen von extrudierten Putzprofilen mit im Querschnitt rillenförmig gestalteten Vertiefungen bekannt. In der DE 195 39 527 C2 ist eine gattungsgemäße Bauprofilleiste in Gestalt einer Winkelleiste mit Armiermaterial für den Putz auf einer Wärmedämmung offenbart. Dabei weist ein Frontbereich eines Längsvorsprungs der Winkelleiste eine Putzverankerungsstruktur mit Vertiefungen auf, die mit Hilfe von rotierbaren Werkzeugen in Form einer Rändelung hergestellt werden. Dadurch werden zusätzlich zu den bekannten Längsrillen auch Querrillen erzeugt. Die Rillen dienen der Einbettung einer aufzubringenden Putzschicht.

Des Weiteren ist aus der DE 197 09 428 A1 eine Anputzleiste für Fensterstöcke, Türstöcke oder dergleichen bekannt geworden. Diese soll durch eine ebenfalls gerändelte Profiloberfläche mit Vertiefungen Putz, insbesondere die Feinanteile von Putz, in sehr dünner Schicht halten.

Aus der DE 200 08 712 U1 ist eine gerändelte Oberfläche bekannt, die Halt für Anteile von Putz, insbesondere Feinanteile, und Anstrichfarbe in sehr dünner Schicht bietet.

Bei diesen Lösungen weisen diese Vertiefungen jedoch eine glatte Oberfläche und eine gleichmäßige Struktur auf.

Eine aus der US 2002/023399 A1 bekannte Bauprofilleiste weist unregelmäßige und raue Oberflächenstrukturen zum Verankern von Schaum- oder Stuckmaterial auf.

Bei einer aus der EP 1 384 835 A1 bekannten Bauprofilleiste kann die Oberfläche des Einputzwinkels mindestens bereichsweise aufgeraut, gerillt, gepixelt oder koronisiert sein, um eine gute Putzhaftung zu ermöglichen.

Die EP 0 015 312 A1 offenbart einen extrudierten Hohlprofilstrang aus thermoplastischem Kunststoff, der eine Oberflächenstruktur mit Vertiefungen enthält. Dieser Hohlprofilstrang wird durch eine Extrusionsdüse erzeugt und in einer sich anschließenden Kalibriervorrichtung unter die Erweichungstemperatur des Kunststoffes abgekühlt. In die Kalibiervorrichtung lässt man zusammen mit dem Kunststoffstrang ein mit einer negativen Oberflächenstruktur versehendes flexibles Band einlaufen und trennt es nach dem Austritt aus der Kalibriervorrichtung vom dem durch Prägen profilierten und strukturierten Kunststoffstrang wieder ab.

Aus der EP 1 637 664 A1 ist eine Profilleiste für Abdeckplatten von Gebäudewänden bekannt, die eine Längsnut mit einer oder mehreren Hinterschneidungen aufweist. Diese Längsnut soll eine zusätzliche Verankerung für einen Kleber eines aufzubringenden Gittergewebes und für eine Putzschicht bereitstellen. Die Mindestdicke von Profilstegen und deren geometrische Ausformung erfordern dabei im Bereich der Verankerung für bildsame Materialien eine Schichtdicke von zumindest 2,0 mm, zumeist jedoch mindestens 3,0 mm oder mehr. Ansonsten ist eine fachgerechte Einspachtelung des bildsamen Materials kaum zu gewährleisten und/oder sehr aufwendig und teuer. Es können zumeist auch nur eine oder zwei Hinterschneidungen je Verankerungsfläche ausgebildet werden. Eine gleichmäßige Feinverteilung über die jeweilige Verankerungsfläche ist nicht möglich. Für dünne Spachtelungen, Farben und Lacke ist diese Technik daher ungeeignet. Im Verwendungsbereich der Profilleiste ist auch oft nicht genügend Platz für eine solche räumliche Ausbildung einer oder mehrerer Längsnuten mit Hinterschneidung. Diese Technik verursacht auch zusätzliche Kosten für das Werkzeug und die Produktion. Eine Anpassung der Hinterschneidungen an verschiedene bildsame Materialien während der Produktion ist nicht möglich.

Aufgabe der Erfindung ist es, eine eingangs genannte Bauprofilleiste anzugeben, deren Vertiefungen aufweisende Verankerungsstruktur an der Oberfläche gegenüber bekannten Prägeverfahren in verbesserter und vereinfachter Weise herstellbar ist, sowie ein Verfahren und eine Vorrichtung zum Herstellen einer solchen Bauprofilleiste anzugeben.

Die Aufgabe wird erfindungsgemäß durch eine Bauprofilleiste mit den Merkmalen des Anspruchs 1 sowie durch ein Verfahren mit den Merkmalen des Anspruchs 16 und eine Vorrichtung mit den Merkmalen des Anspruchs 20 gelöst. Vorteilhafte Ausgestaltungen der Erfindung sind jeweils in den abhängigen Ansprüchen angegeben.

Zur Überprüfung, Qualitätsbestimmung und Beschreibung der Oberflächen der erfindungsgemäßen Bauprofilleisten werden nachfolgend erläuterte Messverfahren für die Rauheit und die Welligkeit der Oberflächen verwendet. Die allgemein als Vertiefungen bezeichneten Oberflächenstrukturen werden in zwei Gruppen aufgeteilt und als Riefen und als Spitzen bezeichnet. Dazu wird bei den Messverfahren nicht von einer Oberfläche ausgegangen, in die Vertiefungen eingebracht werden. Es wird die Oberflächenstruktur herstellungstechnisch neutral betrachtet und eine sog. Mittellinie oder Nulllinie der Oberfläche bestimmt. Von der Nulllinie weg erstrecken sich in einen Probekörper sog. Riefen und vom Probekörper weg sog. Spitzen.

Es gibt eine Reihe wichtiger Rauheitsparameter:
Ein vorangestellter Buchstabe s vor einem Rauheitsparameter bedeutet, dass es sich um einen Flächenwert (surface) anstelle eines Linearwertes handelt.

Lc = die Grenzwellenlänge. Die Messdaten einer Messung werden mittels einer zu bestimmenden Grenzwellenlänge Lc gefiltert. Diese Filterung erfüllt bei der Messung und Bewertung von Oberflächen zwei Funktionen.
Sie dient einerseits dazu, einzelne Extremwerte einer Messung, sog. Ausreißer, zu glätten. Ansonsten würden diese Ausreißer die tatsächlich durchschnittliche Rauheit überdecken bzw. verzerren.
Andererseits dient sie zur Differenzierung zwischen Rauheit und Welligkeit.

Welligkeit unterscheidet sich signifikant von Rauheit. Um die tatsächlich vorliegende Rauheit einer Oberfläche zu bestimmen und bewerten zu können, werden deren wellige Anteile bestmöglich subtrahiert. Das geschieht beispielsweise durch die Filterung der Messdaten mittels einer Grenzwellenlänge, die kleiner ist als die Wellenlänge der welligen Oberflächenanteile. Je kleiner die Grenzwellenlänge, desto mehr wellige Anteile werden eliminiert. Dabei werden jedoch auch Anteile der Rauheit subtrahiert, die insbesondere größer sind, als die Grenzwellenlänge. Insbesondere geometrisch gleichmäßig geformte Strukturen weisen hohe Anteile von Welligkeit auf.
Gefilterte Rauwerte werden durch ein großes R gekennzeichnet.
Ungefilterte Rauwerte werden durch ein großes P gekennzeichnet.

Mittenrauwert Ra oder Pa = der arithmetische Mittelwert aller Beträge aller Profilwerte eines Rauheitsprofils.
Nach der Messung aller Profilwerte eines Rauheitsprofils wird eine Nulllinie als Mittellinie zwischen den Spitzen und Riefen errechnet. Von der Nulllinie aus werden an allen Messpunkten die Beträge aller Profilwerte als mathematisch absolute Werte errechnet. Anschließend wird der arithmetische Mittelwert aller absoluten Werte bestimmt. Das ist der Mittenrauwert Ra oder Pa.

Zur einfacheren Lesbarkeit ist nachfolgend jeweils nur die Bezeichnung für die gefilterten Rauwerte angegeben.

Quadratischer Mittenrauwert Rq = der quadratische Mittelwert aller Profilwerte eines Rauheitsprofils.
Nach der Messung aller Profilwerte eines Rauheitsprofils wird eine Nulllinie als Mittellinie zwischen den Spitzen und Riefen errechnet. Von der Nulllinie aus werden an allen Messpunkten die Beträge aller Profilwerte als absolute Werte errechnet. Dann werden diese Werte quadriert. Anschließend wird der arithmetische Mittelwert aller quadrierten Werte bestimmt und daraus die mathematische Wurzel gezogen. Das ist der Quadratische Mittenrauwert Rq. Bei diesem Wert ist der Einfluss einzelner Extremwerte größer als beim Mittenrauwert Ra. Rq ist daher größer oder gleich Ra.

Einzelrautiefe Rzi = der Abstand zwischen der höchsten Spitze und der tiefsten Riefe innerhalb eines Segments (Einzelmessstrecke) von i Segmenten einer Gesamtmessstrecke.

Gemittelte Rautiefe Rz = der arithmetische Mittelwert von i Einzelrautiefen Rzi aufeinanderfolgender Segmente (Einzelmessstrecken). Rz ist daher größer oder gleich Rzi.

Maximale Rautiefe Rmax = die größte Einzelrautiefe Rzi eines Segments von i Segmenten innerhalb einer Gesamtmessstrecke. Rmax ist daher größer oder gleich Rz.

Rauhtiefe Rt = der Abstand zwischen der höchsten Spitze und der tiefsten Riefe innerhalb einer Gesamtmessstrecke. Rt ist daher größer oder gleich Rmax.

Maximale Riefentiefe Rv = der Abstand zwischen der errechneten Mittellinie und der tiefsten Riefe innerhalb einer Gesamtmessstrecke.

Glättungstiefe Rp = der Abstand zwischen der errechneten Mittellinie und der höchsten Spitze innerhalb einer Gesamtmessstrecke.

Traglastkurven und Höhenhistogramme werden aus allen Beträgen aller Profilwerte des Rauheitsprofils unabhängig von den Mittenrauwerten ermittelt.

Eine Traglastkurve gibt an, wie groß die Schnittfläche durch die x-y-Ebene in einer bestimmten Höhe eines Messkörpers ist. Die Größe der Schnittfläche wird in % einer Gesamtmessstrecke bzw. Messfläche angegeben. Eine typische Traglastkurve ist S-förmig und weist ungefähr mittig einen Wendepunkt auf.

Mittels der Traglastkurve wird der zugehörige Nullwert der z-Achse bestimmt. Vom Wendepunkt der Traglastkurve wird ein Lot auf die z-Achse gefällt. Das Lot markiert die Nulllinie der z-Achse. Diese Nulllinie ist zumeist nicht identisch mit der Nulllinie der Mittenrauwerte.

Der Kernbereich einer Gesamtmessstrecke wird ebenfalls mittels der Traglastkurve bestimmt. Vom Wendepunkt der Traglastkurve wird ein Lot auf die %-Achse gefällt. Von diesem Punkt aus werden beiderseits entlang der %-Achse jeweils 20% abgegriffen, so dass vom unteren Endpunkt zum oberen Endpunkt eine Strecke von 40% entsteht. Diese Strecke definiert den Kernbereich der Gesamtmessstrecke also das Rauheitskernprofil.

Kernrautiefe Rk = die Tiefe des Rauheitskernprofils, also des Kernbereichs zwischen Spitzen und Riefen.
Um die Kernrautiefe, also die Längenausdehnung in der z-Achse zu bestimmen, wird jeweils vom oberen und vom unteren Endpunkt des Kernbereichs an der %-Achse ein Lot auf die Traglastkurve gefällt. Von diesen beiden Punkten an der Traglastkurve ausgehend wird wiederum ein Lot auf die z-Achse gefällt. Die Strecke entlang der z-Achse zwischen diesen beiden Punkten gibt die Kernrautiefe wieder.

Reduzierte Spitzenhöhe Rpk = die gemittelte Höhe der aus einem Rauheitskernprofil, also dem Kernbereich, einer Gesamtmessstrecke herausragenden Spitzen. Um die reduzierte Spitzenhöhe Rpk zu bestimmen, wird an den Wendepunkt der Traglastkurve eine Tangente angelegt. Der Schnittpunkt zwischen der Tangente und der 0%-Linie (ist gleich der z-Achse) ist die reduzierte Spitzenhöhe Rpk.

Reduzierte Spitzentiefe Rvk = die gemittelte Tiefe der aus einem Rauheitskernprofil, also dem Kernbereich, einer Gesamtmessstrecke herausragenden Riefen. Um die reduzierte Spitzentiefe Rvk zu bestimmen, wird an den Wendepunkt der Traglastkurve eine Tangente angelegt. Der Schnittpunkt zwischen der Tangente und der 100%-Linie ist, lotrecht an der z-Achse abgelesen, die reduzierte Spitzentiefe Rvk.

Kleinster Materialanteil Mr1 = der Materialanteil oberhalb eines Rauheitskernprofils.
Um Mr1 zu bestimmen, wird von einer reduzierten Spitzenhöhe Rpk ein Lot auf die Traglastkurve gefällt. Von diesem Schnittpunkt aus wird ein Lot auf die %-Achse gefällt. Der Schnittpunkt mit der %-Achse gibt den kleinsten Materialanteil Mr1 in % wieder.

Größter Materialanteil Mr2 = der Materialanteil unterhalb eines Rauheitskernprofils.
Um Mr2 zu bestimmen, wird von einer reduzierte Spitzentiefe Rvk ein Lot auf die Traglastkurve gefällt. Von diesem Schnittpunkt aus wird ein Lot auf die %-Achse gefällt. Der Schnittpunkt mit der %-Achse gibt den größten Materialanteil Mr2 in % wieder.

Ein Höhenhistogramm gibt an, wie häufig ein Höhenpunkt einer Gesamtmessstrecke vorkommt. Die Häufigkeit wird in % einer Gesamtmessstrecke bzw. Messfläche angegeben. Eine schmale und hohe Kurve weist auf eine sehr glatte Oberfläche hin.

Rlo = die gemessene wahre Oberfläche.

Rlr = das Verhältnis der geometrischen zur gemessenen wahren Oberfläche.

Rda = die Steigungen an den Oberflächen. Rda ist ein Flächenwert. Ist Rda gleich 0, so liegen keine messbaren Steigungen an einem Messkörper vor. Senkrechten und Hinterschneidungen fließen nicht in die Messung von Steigungen ein.

Eine erfindungsgemäße Bauprofilleiste weist unregelmäßig geformte Vertiefungen und/oder eine unregelmäßige Anordnung der Vertiefungen auf. Dadurch erhöht sich die Haftfähigkeit für aufgebrachtes bildsames Material, da generell die Adhäsionskräfte gegenüber regelmäßigen Verankerungsstrukturen zunehmen. Eine derartige Verankerungsstruktur ist bei im wesentlichen allen Profilgeometrien herstellbar. Sie ist jeweils für die entsprechende Aufgabe der Bauprofilleiste angepasst formbar und daher für die Verbindung mit den jeweiligen bildsamen Materialien geeignet. Die Anforderungen an eine dauerhafte Verbindung des Formkörpers mit bildsamem Material werden erfüllt.

Wesentlich ist hierbei, dass die Verankerungsstruktur bzw. die Vertiefungen in dem die Oberfläche oder die obere Schicht der Bauprofilleiste bildenden Kunststoff gebildet sind. Vorteilhaft ist demnach bei der erfindungsgemäßen Bauprofilleiste, bei der die Vertiefungen aus dem Kunststoffmaterial der Leiste geformt sind, dass kein zusätzlicher Materialauftrag, wie z. B. Sand gemäß der CH 356 262 A, eine Papierschicht gemäß der US 5 131 198 A oder ein Kunstharzüberzug gemäß der DE 697 16 193 T2, zum Herstellen einer Verankerungsstruktur erforderlich ist. Die erfindungsgemäße Bauprofilleiste weist somit im Bereich der Verankerungsstruktur bzw. der Vertiefungen keine geprägte, in irgendeiner Art regelmäßige oder sich wiederholende Oberfläche im Gegensatz zu einer geprägten Oberfläche auf.

Die Vertiefungen können in ihrer z-Achse gegenüber Rändelungen oder Stegformungen vergleichsweise klein gebildet sein und dabei eine gleiche oder höhere Haftfähigkeit für bildsames Material aufweisen als die bisherigen Lösungsansätze.

Außerdem tritt im Gegensatz zu den Lösungen des Standes der Technik eine erfindungsgemäße Oberfläche einer Bauprofilleiste mit Vertiefungen bei dünn aufgebrachten Schichten bildsamen Materials, wie beispielsweise Farbe oder Lack, nicht hervor oder sie ist dem Erscheinungsbild des bildsamen Materials oder der benachbarten Oberfläche optisch angepasst. Dadurch ist die Lösung optisch einwandfrei.

Damit werden die Nachteile der bekannten Lösungen vermieden.

Die allgemein als Vertiefungen bezeichneten Oberflächenstrukturen werden durch Riefen und Spitzen gebildet. Um diese zu unterscheiden wird die Oberflächenstruktur herstellungstechnisch neutral betrachtet und eine sog. Mittellinie oder Nulllinie der Oberfläche bestimmt. Von der Nulllinie ausgehend erstrecken sich in eine Bauprofilleiste sog. Riefen und von einer Bauprofilleiste wegweisend sog. Spitzen.

Eine erfindungsgemäße Bauprofilleiste ist durch Extrusion von Kunststoff hergestellt. Dadurch ist die Bauprofilleiste einfach und preiswert herstellbar.

Bevorzugt sind die Vertiefungen räumlich unregelmäßig geformt und/oder angeordnet. Dadurch erhöht sich die Haftfähigkeit für aufgebrachtes bildsames Material. Bei bildsamem Material in sehr dünner Schicht, wie beispielsweise bei Farbe oder Lack, kann sich eine Verankerungsstruktur nach dem Auftrag des bildsamen Materials zumindest teilweise optisch abzeichnen. Eine unregelmäßige Struktur ist dabei optisch attraktiver als eine geometrische Struktur.

Die Vertiefungen sind bevorzugt kleinteilig ausgebildet oder angeordnet. Dadurch erreicht man eine hohe Haftfähigkeit für aufgebrachtes bildsames Material und eine gute optische Präsentation. Beispielsweise weist eine durchschnittliche Fläche der Verankerungsstruktur von 2 mm x 2 mm durchschnittlich mehr als 9 oder 25 oder 100 oder 225 oder 400 Vertiefungen auf.

In einer bevorzugten Ausführung weisen zumindest einige der Vertiefungen zumindest eine Hinterschneidung auf. Hinterschneidungen erhöhen deutlich die Haftfähigkeit für aufgebrachtes bildsames Material. Kunststoffprofile reagieren auf Temperaturschwankungen mit deutlichen Längenänderungen. Dadurch steigt insbesondere bei glatten Oberflächen oder glatten Vertiefungen die Wahrscheinlichkeit, dass aufgebrachtes bildsames Material in ganzen Schichten oder Stücken abplatzt. Daher ist eine besonders hohe Haftfähigkeit für aufgebrachtes bildsames Material erforderlich. Unregelmäßige Strukturen führen zu einer feinteiligen Untergliederung solcher Schichten, wodurch alleine schon die Haftfähigkeit erhöht wird. Werden jedoch Hinterschneidungen gebildet, so wird die Haftfähigkeit optimiert.

Eine besonders vorteilhafte Gestaltungsform für eine hohe Haftfähigkeit und gleichzeitig eine gute optische Präsentation ist dadurch gekennzeichnet, dass die Verankerungsstruktur bzw. zumindest eine Vertiefung eine schuppige und/oder zerklüftete und/oder rauhe und/oder scharfkantige Struktur aufweist.

Die bestehenden Kunststoffarten sind für die Formung einer Verankerungsstruktur unterschiedlich gut geeignet. Es ist daher vorteilhaft, wenn das Material für die Verankerungsstruktur bzw. die Vertiefungen optimal für eine gute Formung gewählt ist und ein basisgebender Bereich der Bauprofilleiste oder auch der Rest der Profilleiste aus einem anderen, für die Formung der Profilleiste optimalen Material gebildet sind. Dabei können diese unterschiedlichen Kunststoffe beispielsweise unterschiedlich farbig gestaltet sein. Oder das gewählte Material ist für die Formung der Verankerungsstruktur bei besonders dicken oder dünnen Stegen optimal geeignet. Zweckmäßigerweise wird die Bauprofilleiste in den Bereichen der Verankerungsstruktur durch eine schichtartige Extrusion zweier Kunststoffe gebildet, wobei die eine Kunststoffschicht eine Tragschicht ist und in der anderen Kunststoffschicht eine Verankerungsstruktur bzw. Vertiefungen gebildet ist bzw. sind. Damit kann der Kunststoff für die Verankerungsstruktur bzw. die Vertiefungen optimal gewählt werden.

Bevorzugt ist das Material der Verankerungsstruktur coextrudiert oder mechanisch, beispielsweise durch Kleben, mit der Bauprofilleiste verbunden. Damit können zwei unterschiedliche Kunststoffe miteinander verbunden werden, die jeweils optimierte Eigenschaften aufweisen.

Es hat sich gezeigt, dass sich Verankerungsstrukturen sehr gut an Profilstegen mit einer Dicke von 0,6 mm bis 5 mm, bevorzugt von 0,7 bis 3 mm und insbesondere von 0,8 mm bis 1,5 mm anformen lassen. Dünnere Stege sind bei extrudierten Profilen nahezu nicht kontinuierlich herstellbar. Dickere Stege verändern die Temperaturverhältnisse, so dass die Formung von Verankerungsstrukturen erschwert wird. Es ist daher vorteilhaft, wenn ein Profilsteg der Bauprofilleiste im Bereich der Verankerungsstruktur eine Dicke von 0,6 mm bis 5 mm, bevorzugt eine Dicke von 0,7 bis 3 mm und insbesondere eine Dicke von 0,8 mm bis 1,5 mm aufweist.

Unter den Kunststoffen sind Polyvinylchlorid, Polyethylen, Polypropylen, Polystyrol oder Polyurethan sehr gut zur Formung von Verankerungsstrukturen geeignet. Die Formung erfolgt bevorzugt mittels Hartkunststoffen. Aber auch Weichkunststoffe sind dafür geeignet. Bevorzugt werden bei Weichkunststoffen lediglich schmale Bereiche von Bauprofilleisten, wie beispielsweise Dichtlippen, mit Verankerungsstrukturen versehen. Es ist daher vorteilhaft, wenn die Verankerungsstruktur und/oder ein zugeordneter basisgebender Bereich der Bauprofilleiste aus Polyvinylchlorid, Polyethylen, Polypropylen, Polystyrol oder Polyurethan geformt ist.

Mit unterschiedlich geformten benachbarten Vertiefungen erreicht man eine hohe Haftfähigkeit für aufgebrachtes bildsames Material und eine gute optische Präsentation. Dazu sind in einer bevorzugten Gestaltung der Erfindung die Vertiefungen in der Längserstreckung und/oder der Querstreckung der Bauprofilleiste unregelmäßig geformt und/oder unregelmäßig angeordnet. Beispielsweise ist die Häufigkeit des Auftretens zweier im wesentlichen oder annähernd identischer Vertiefungen bezogen auf einen Radius ihres 10-fachen maximalen räumlichen Einzelmaßes kleiner 1/10 oder kleiner 1/20 oder kleiner 1/50 oder kleiner 1/100 oder kleiner 1/300. Das bedeutet, dass in einem Areal von etwa der 314-fachen Fläche einer einzelnen Vertiefung maximal in etwa 31 oder 15 oder 6 oder 3 oder auch nur eine einzelne annähernd identische Vertiefung(en) angeordnet sind bzw. ist.

In einer bevorzugten Gestaltung der Erfindung weist die Bauprofilleiste einen oder mehrere insbesondere längserstreckte Bereiche mit einer Verankerungsstruktur bzw. Vertiefungen auf. Somit stehen für unterschiedliche Anforderungen in der praktischen Anwendung bei Bedarf auch mehrere Verankerungsstrukturen bzw. Vertiefungen bereit. Bei zumindest zwei Bereichen mit einer Verankerungsstruktur bzw. Vertiefungen können diese gleich oder unterschiedlich gebildet sein. Das ist besonders vorteilhaft, wenn unterschiedliche bildsame Materialien verwendet werden. Beispielsweise wird einerseits eine Bauprofilleiste mit einem Kleber an einem Untergrund befestigt und andererseits diese Bauprofilleiste nach der Verarbeitung mit einem Farbauftrag versehen.

Die Rauheit einer Verankerungsstruktur kann messtechnisch mittels verschiedener Rauheitsparameter dargestellt werden. Damit sind erfindungsgemäße Verankerungsstrukturen und/oder Vertiefungen gegenüber dem Stand der Technik abgrenzbar. Es sind jedoch sehr unterschiedliche, insbesondere kleinteilige Verankerungsstrukturen und/oder Vertiefungen erfindungsgemäß herstellbar. Auch die bildsamen Materialien sind bezüglich ihrer Feinheit bzw. Korngrößen sehr unterschiedlich. Es ist vorteilhaft, sowohl die Verankerungsstrukturen und/oder Vertiefungen als auch die bildsamen Materialien in Klassen bzw. Gruppen einzuteilen. Dadurch lassen sich in der praktischen Anwendung vorteilhafte Kombinationen bestimmter Klassen von Rauheit mit bestimmten Gruppen von körnigem bildsamen Material darstellen.

Beispielsweise ist der sPa-Wert oder der sRa-Wert im Bereich der Verankerungsstruktur größer 1 µm (Klasse 1) oder 3 µm (Klasse 2) oder 8 µm (Klasse 3) oder 20 µm (Klasse 4) oder 50 µm (Klasse 5).

Des weiteren kann der sPq-Wert oder der sRq-Wert im Bereich der Verankerungsstruktur größer 1 µm (Klasse 1) oder 4 µm (Klasse 2) oder 10 µm (Klasse 3) oder 25 µm (Klasse 4) oder 60 µm (Klasse 5) sein.

Bevorzugt kann der sPz-Wert oder der sRz-Wert im Bereich der Verankerungsstruktur größer 25 µm (Klasse 1) oder 50 µm (Klasse 2) oder 100 µm (Klasse 3) oder 200 µm (Klasse 4) oder 400 µm (Klasse 5) sein.

Insbesondere ist das Verhältnis des sPz-Wertes zum sPa-Wert oder des sRz-Wertes zum sRa-Wert im Bereich der Verankerungsstruktur kleiner 20 oder 13 oder 8 oder 6 oder 4,5.

Oder das Verhältnis des sPz-Wertes zum sPq-Wert oder des sRz-Wertes zum sRq-Wert ist im Bereich der Verankerungsstruktur kleiner 15 oder 10 oder 7 oder 5 oder 4.

Oder der sPmax-Wert oder der sRmax-Wert und/oder der sPt-Wert oder der sRt-Wert der Verankerungsstruktur ist größer 50 µm (Klasse 1) oder 90 µm (Klasse 2) oder 150 µm (Klasse 3) oder 250 µm (Klasse 4) oder 400 µm (Klasse 5).

Oder der sPk-Wert oder der sRk-Wert ist im Bereich der Verankerungsstruktur größer 3 µm (Klasse 1) oder 10 µm (Klasse 2) oder 25 µm (Klasse 3) oder 60 µm (Klasse 4) oder 150 µm (Klasse 5).

Oder der sPpk-Wert oder der sRpk-Wert und/oder der sPvk-Wert oder der sRvk-Wert ist im Bereich der Verankerungsstruktur größer 2 µm (Klasse 1) oder 8 µm (Klasse 2) oder 20 µm (Klasse 3) oder 40 µm (Klasse 4) oder 60 µm (Klasse 5).

Oder der sPlr-Wert oder der sRlr-Wert ist im Bereich der Verankerungsstruktur größer 1,1 (Klasse 1) oder 1,3 (Klasse 2) oder 1,6 (Klasse 3) oder 2,0 (Klasse 4) oder 2,5 (Klasse 5).

Oder der Peak im Höhenhistogramm ist im Bereich der Verankerungsstruktur kleiner 2% (Klasse 1) oder 1% (Klasse 2) oder 0,5% (Klasse 3) oder 0,2% (Klasse 4) oder 0,1 % (Klasse 5).

Oder das Höhenhistogramm weist im Bereich der Verankerungsstruktur im wesentlichen eine dreieckige Grundform auf.

Oder die Traglastkurve ist im Bereich der Verankerungsstruktur im wesentlichen S-förmig gebildet.

Bezüglich der Verbindung von Verankerungsstrukturen mit bildsamem Material teilt man letzteres bevorzugt in folgende drei Gruppen:
Bildsames Material, das ein Korngemisch mit einem Größtkorn bis 50 µm aufweist und/oder der Gruppe der Anstrichmittel insbesondere der Bautenanstrichmittel wie Lacke, Farben, Grundierungen und Lasuren zuzuordnen ist, bildet eine erste Gruppe A.

Bildsames Material, das ein Korngemisch mit einem Größtkorn größer 50 µm bis 1200 µm aufweist und/oder der Gruppe der Spachtelmassen und feinkörnigen Putze zuzuordnen ist, bildet eine zweite Gruppe B.

Bildsames Material, das ein Korngemisch mit einem Größtkorn größer 1200 µm aufweist und/oder der Gruppe der grobkörnigen Putze zuzuordnen ist, bildet eine dritte Gruppe C.

Verankerungsstrukturen mit Rauheitswerten der Klassen 1 bis 3 sind bevorzugt zur Verbindung mit bildsamem Material der Gruppe A vorgesehen. Verankerungsstrukturen mit Rauheitswerten der Klassen 3 bis 4 sind bevorzugt zur Verbindung mit bildsamem Material der Gruppe B vorgesehen. Verankerungsstrukturen mit Rauheitswerten der Klassen 4 bis 5 sind bevorzugt zur Verbindung mit bildsamem Material der Gruppe C vorgesehen.
Mit dieser Ausgestaltung sind die jeweiligen Verankerungsstrukturen bzw. Bauprofilleisten für eine bestmögliche Kombination mit bildsamem Material zugeordnet. Dadurch werden optimale Ergebnisse mit einer hohe Haftfähigkeit und gleichzeitig eine gute optische Präsentation erreicht.

Bei den vorgenannten Unterscheidungen und Zuordnungen ist es wichtig, die Welligkeit einer Verankerungsstruktur von deren Rauheit unterscheiden zu können. Denn die Rauheit ist für die Qualität der Haftfähigkeit und der optischen Präsentation maßgebend. Es ist vorteilhaft, bei Verankerungsstrukturen mit Mischformen aus Welligkeit und Rauheit diese voneinander unterscheiden zu können. Dazu filtert man bei den Rauheitswerten im Bereich der Verankerungsstruktur und/oder einem oder mehreren der angegebenen Rauheitsparameter die zugrunde gelegten Messdaten mittels einer Grenzwellenlänge Lc von beispielsweise 1000 µm. Dadurch werden nicht nur einzelne Extremwerte einer Messung, sog.

Ausreißer, geglättet. Es wird vor allem die tatsächlich vorliegende Rauheit einer Verankerungsstruktur bestimmt, da deren wellige Anteile entsprechend dem Maß der Grenzwellenlänge subtrahiert werden. Es werden aber auch kleinere Grenzwellenlängen wie beispielsweise 500 µm oder 100 µm oder 50 µm oder 10 µm zur Filterung angewendet. Je kleiner die Grenzwellenlänge, desto mehr wellige Anteile werden eliminiert. Dabei werden jedoch auch Anteile der Rauheit subtrahiert, die insbesondere größer sind, als die Grenzwellenlänge. Es ist daher vorteilhaft, wenn bei den Rauheitswerten im Bereich der Verankerungsstruktur und/oder einem oder mehreren der angegebenen Rauheitsparameter die zugrunde gelegten Messdaten mittels einer Grenzwellenlänge von Lc = 1000 µm im Bereich der Verankerungsstruktur gefiltert sind und/oder nach Abzug von Wellenstrukturen und/oder Rauheitswerten durch Prägung oder sich wiederholender Strukturen und/oder über die Länge gleichmäßig angeformter Stege gebildet sind.

Bei mathematisch bzw. geometrisch einfach erfassbaren Wellenstrukturen und/oder Rauheitswerten durch Prägung oder sich wiederholender Strukturen und/oder über die Länge gleichmäßig angeformter Stege können diese zur Bereinigung der Messwerte ohne Rauheitsfilterung direkt subtrahiert werden.

Bei dem erfindungsgemäßen Verfahren zum Herstellen einer erfindungsgemäßen Bauprofilleiste wird die Verankerungsstruktur durch eine zumindest partielle Kühlung der Bauprofilleiste bei ihrem Austritt aus dem Extrusionswerkzeug hergestellt. Diese Kühlung erfolgt bevorzugt im Endbereich des Extrusionswerkzeugs, insbesondere der letzten Werkzeugplatte. Durch die Kühlung eines Endabschnitts des Extrusionswerkzeugs wird das vorbeifließende, plastische Kunststoffmaterial der Bauprofilleiste gekühlt. Dadurch erfolgt eine Erstarrung des plastischen Materials noch im Extrusionswerkzeug. Um eine Verankerungsstruktur für bildsames Material herzustellen, wird die Kühlung so gestaltet, dass nicht der gesamte Steg der Bauprofilleiste durchgehend erstarrt, denn dadurch würde sich keine Verankerungsstruktur bilden und der Extrusionsstrang würde reißen. Die Kühlung wird daher_so gestaltet, dass lediglich eine Oberflächenschicht des plastischen Materials erstarrt. Kunststoffe haben einen großen Temperaturkoeffizienten. Die gekühlte Oberflächenschicht zieht sich daher zusammen und zerreißt, abhängig von den Material-, Extrusions- und Kühlwerten, in kleine Teilchen mit einer Größe von wenigen µm bis zu Teilchen im Millimeterbereich. Diese Teilchen haften durch die Kühlung kurzfristig am Extrusionswerkzeug an und werden dann von dem darunter liegenden plastischen Material eines Steges der Bauprofilleiste, an dem die Verankerungsstruktur gebildet wird. mitgezogen. Durch diesen Vorgang einer Urformung entsteht am Düsenausgang des Extrusionswerkzeuges eine zerklüftete, unregelmäßig geformte Oberfläche der Bauprofilleiste. Die Verankerungsstruktur entsteht demnach durch eine Materialreaktion einer Oberflächenschicht. Diese erscheint optisch porös mit einer Mikrostruktur, besteht aus vielen kleinen individuell geformten Teilen und ist bzw. erscheint willkürlich oder ungeplant, also keiner Regel einer Gleichmäßigkeit unterworfen. Gleichwohl weist die Verankerungsstruktur bei kontinuierlicher Herstellung der Bauprofilleiste manche Gleichmäßigkeit auf, die mit Rauheitsparametern beschrieben werden kann. Es entsteht beispielsweise eine im wesentlichen einheitliche Schichtdicke einer Verankerungsstruktur. Innerhalb der Verankerungsstruktur jedoch sind die Spitzen und Riefen unregelmäßig geformt und verteilt.

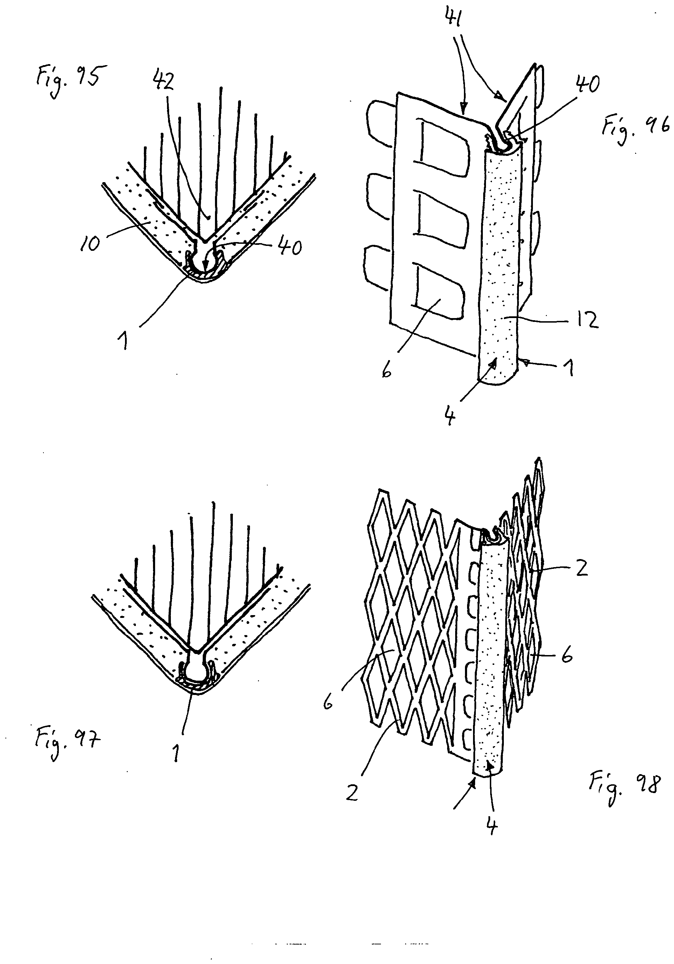

Durch das erfindungsgemäße Verfahren können Bauprofilleisten mit komplexen Formen eine Verankerungsstruktur aufweisen. Rändelräder können technisch bedingt nur bestimmte Areale einer Profilleiste räumlich erreichen. Dabei findet eine Prägung mit einem sich wiederholenden Muster statt. Durch das Rändeln erfolgt häufig auch eine bogenartige Verformung der Profilleiste in Längsrichtung, wodurch diese zumeist unbrauchbar wird. Rändeln ist daher nur für einfache, im wesentlichen flache Profilleisten oder Anteile davon geeignet. Beispielsweise sind das kleine Aufsteckprofile für haltgebende Nassputzprofile, wie sie in den nachfolgenden Figuren 95 bis 101 und 104, 105, 107, 116 beschrieben sind. Gerändelte Oberflächen sind jedoch, im Rahmen ihrer begrenzten technischen Eigenschaften, nur für den Auftrag ausreichend dicker Schichten bildsamen Materials und nicht für Farbauftrag geeignet. Eine erfindungsgemäße Verankerungsstruktur bzw. Bauprofilleiste ist frei von diesen Einschränkungen.

Bei der beschriebenen Herstellung einer Verankerungsstruktur sind verschiedenen Werte bei der Extrusion maßgebend. Das sind insbesondere:
Der zu verwendende Kunststoff und seine Materialeigenschaften.
Die Extrusionstemperatur, also die Temperatur des Kunststoffes bzw. des Extrusionswerkzeugs im Bereich vor und bei der Kühlung.
Das Maß der Kühlung, also die Kühltemperatur, die Länge der Kühlstrecke, und die Wärmeleitfähigkeit der Kühlanordnung.
Die Dicke des zu kühlenden Steges.
Die Extrusionsgeschwindigkeit und die Druckverhältnisse bzw. die Materialverteilung im Bereich der herzustellenden Verankerungsstruktur.
Die Rauhigkeit der Verankerungsstruktur ist besonders hoch bei einem großen Temperaturunterschied zwischen Extrusionstemperatur und Kühleinrichtung, bei einer langen Kühlstrecke, bei einer hohen Wärmeleitfähigkeit der Kühlanordnung, bei einer geringen Dicke des zu kühlenden Steges, bei hoher Extrusionsgeschwindigkeit, bei insgesamt hohem Druck, bei niedrigerem Druck bzw. weniger Materialfluss im Bereich der Verankerungsstruktur im Vergleich zu den benachbarten Anteilen des Profilquerschnitts im Extrusionswerkzeug.

Eine übliche Extrusionstemperatur ist beispielsweise 150°C bis 170°C. Eine gut geeignete Kühltemperatur im Kühlkreislauf wird zumeist etwa 80°C bis 130°C betragen. Aber auch Temperaturen bis 60°C oder 40°C oder darunter werden angewendet. Die Länge der Kühlstrecke ist beispielsweise bis zu 10 mm oder 8 mm. Aber auch 6 mm oder 4 mm oder weniger werden angewendet. Die Vorschubgeschwindigkeit der Bauprofilleiste bei der Extrusion beträgt z. B. 8 bis 15 m/min.

Bei der Kühlung erfolgt eine anteilige Kühlung der Oberflächenschicht in Richtung der Materialdicke, d. h. es wird ein Temperaturgradient quer durch das Material erzeugt.

Um die Qualität der Verankerungsstruktur nicht zu beeinflussen, wird zumindest der Bereich der Verankerungsstruktur nicht kalibriert. Durch eine Kalibrierung würde im schlechtesten Fall die Verankerungsstruktur komplett geglättet, so dass sie keine Rauheit aufweisen würde. Es kann jedoch auch im Bereich der Verankerungsstruktur ein schmaler Flächenbereich kalibriert werden, um die Vorteile einer Kalibrierung auch im Bereich der Verankerungsstruktur in gewissem Umfang zu erzielen, wobei die Funktion und Qualität der Verankerungsstruktur im wesentlichen erhalten bleibt.

Durch das beschriebene Verfahren werden zumeist eine Vielzahl von Hinterschneidungen gebildet. Das erhöht die Haftfähigkeit für bildsames Material. Um die Anzahl oder die Qualität der Hinterschneidungen zu erhöhen, ist in einer bevorzugten Ausführung die Bauprofilleiste im Bereich der Verankerungsstruktur teilkalibriert. Dadurch wird die Verankerungsstruktur im Bereich ihrer Spitzen zumindest teilweise umgelenkt und die Hinterschneidung dadurch verstärkt.

Die Kühlung erfolgt mittels einer Kühleinrichtung, die ein Teil des Extrusionswerkzeugs ist oder an diesem angebracht ist.

Bei der Vorrichtung zum Herstellen einer erfindungsgemäßen Bauprofilleiste ist eine Kühleinrichtung an einem Extrusionswerkzeug am Austritt der extrudierten Bauprofilleiste derart angeordnet oder integriert, dass eine Kontaktfläche der Kühleinrichtung mit der austretenden extrudierten Bauprofilleiste in Formgebungskontakt ist und die Verankerungsstruktur herstellt.

Eine derartige Bauprofilleiste bzw. eine Vorrichtung zu deren Herstellung hat gegenüber allen bisherigen Lösungsansätzen den Vorteil, dass der Verarbeitungsaufwand und der Materialaufwand gering ist. Dadurch ist die Verankerungsstruktur einfach und preiswert bei der Produktion der Bauprofilleiste herstellbar. Gleichzeitig ist die Qualität der Verankerungsstruktur gegenüber dem Stand der Technik deutlich besser. Diese Lösung stellt gegenüber dem Stand der Technik mehr bzw. neue Anwendungsmöglichkeiten und mehr bzw. neue Gestaltungsmöglichkeiten einer Verankerungsstruktur bereit.

Nachfolgend werden Ausführungsbeispiele von Bauprofilleisten unter Bezugnahme auf die Zeichnung näher erläutert. Es zeigt:
- Fig. 1: ein ungefiltertes Messbild eines Ausschnitts einer Bauprofilleiste Probe 0 aus dem Stand der Technik in einer Draufsicht mit Maßangaben und Höhenmessskala;
- Fig. 2: ein ungefiltertes Messbild eines Ausschnitts einer erfindungsgemäßen Bauprofilleiste Probe 1 in einer Draufsicht mit Maßangaben und Höhenmessskala;
- Fig. 3: ein ungefiltertes Messbild eines Ausschnitts einer erfindungsgemäßen Bauprofilleiste Probe 2 in einer Draufsicht mit Maßangaben und Höhenmessskala;
- Fig. 4: ein ungefiltertes Messbild eines Ausschnitts einer erfindungsgemäßen Bauprofilleiste Probe 3 in einer Draufsicht mit Maßangaben und Höhenmessskala;
- Fig. 5: ein ungefiltertes Messbild eines Ausschnitts einer erfindungsgemäßen Bauprofilleiste Probe 4 in einer Draufsicht mit Maßangaben und Höhenmessskala;
- Fig. 6: ein ungefiltertes Messbild eines Ausschnitts einer erfindungsgemäßen Bauprofilleiste Probe 5 in einer Draufsicht mit Maßangaben und Höhenmessskala;
- Fig. 7: ein ungefiltertes Messbild eines Ausschnitts einer erfindungsgemäßen Bauprofilleiste Probe 6 in einer Draufsicht mit Maßangaben und Höhenmessskala;
- Fig. 8: ein ungefiltertes Messbild eines Ausschnitts einer erfindungsgemäßen Bauprofilleiste Probe 7 in einer Draufsicht mit Maßangaben und Höhenmessskala;
- Fig. 9: ein ungefiltertes Messbild eines Ausschnitts einer Bauprofilleiste Probe 8 mit Rändelung aus dem Stand der Technik in einer Draufsicht mit Maßangaben und Höhenmessskala;
- Fig. 10: ein ungefiltertes Messbild eines Ausschnitts einer erfindungsgemäßen Bauprofilleiste Probe 9 in einer Draufsicht mit Maßangaben und Höhenmessskala;
- Fig. 11: ein ungefiltertes Messbild eines Ausschnitts einer erfindungsgemäßen Bauprofilleiste Probe 10 in einer Draufsicht mit Maßangaben und Höhenmessskala;
- Fig. 12: ein ungefiltertes Messbild eines Ausschnitts einer erfindungsgemäßen Bauprofilleiste Probe 11 in einer Draufsicht mit Maßangaben und Höhenmessskala;
- Fig. 13: ein ungefiltertes Messbild eines Ausschnitts einer erfindungsgemäßen Bauprofilleiste Probe 12 in einer Draufsicht mit Maßangaben und Höhenmessskala;
- Fig. 14: ein ungefiltertes Messbild eines Ausschnitts einer Bauprofilleiste Probe 0 aus dem Stand der Technik in einer perspektivischen Ansicht mit Maßangaben;
- Fig. 15: eine Darstellung gemäß Figur 14 mit einer Variation der Höhenskala;
- Fig. 16: eine Darstellung gemäß Figur 14 mit einer weiteren Variation der Höhenskala;
- Fig. 17: ein ungefiltertes Messbild eines Ausschnitts einer erfindungsgemäßen Bauprofilleiste Probe 1 in einer perspektivischen Ansicht mit Maßangaben;
- Fig. 18: eine Darstellung gemäß Figur 17 mit einer Variation der Höhenskala;
- Fig. 19: ein ungefiltertes Messbild eines Ausschnitts einer erfindungsgemäßen Bauprofilleiste Probe 2 in einer perspektivischen Ansicht mit Maßangaben;
- Fig. 20: eine Darstellung gemäß Figur 19 mit einer Variation der Höhenskala;
- Fig. 21: eine Darstellung gemäß Figur 19 mit einer weiteren Variation der Höhenskala;
- Fig. 22: ein ungefiltertes Messbild eines Ausschnitts einer erfindungsgemäßen Bauprofilleiste Probe 3 in einer perspektivischen Ansicht mit Maßangaben;
- Fig. 23: eine Darstellung gemäß Figur 22 mit einer Variation der Höhenskala;
- Fig. 24: eine Darstellung gemäß Figur 22 mit einer weiteren Variation der Höhenskala;
- Fig. 25: ein ungefiltertes Messbild eines Ausschnitts einer erfindungsgemäßen Bauprofilleiste Probe 4 in einer perspektivischen Ansicht mit Maßangaben;
- Fig. 26: eine Darstellung gemäß Figur 25 mit einer Variation der Höhenskala;
- Fig. 27: ein ungefiltertes Messbild eines Ausschnitts einer erfindungsgemäßen Bauprofilleiste Probe 5 in einer perspektivischen Ansicht mit Maßangaben;
- Fig. 28: eine Darstellung gemäß Figur 27 mit einer Variation der Höhenskala;
- Fig. 29: eine Darstellung gemäß Figur 27 mit einer weiteren Variation der Höhenskala;
- Fig. 30: ein ungefiltertes Messbild eines Ausschnitts einer erfindungsgemäßen Bauprofilleiste Probe 6 in einer perspektivischen Ansicht mit Maßangaben;
- Fig. 31: eine Darstellung gemäß Figur 30 mit einer Variation der Höhenskala;
- Fig. 32: eine Darstellung gemäß Figur 30 mit einer weiteren Variation der Höhenskala;
- Fig. 33: ein ungefiltertes Messbild eines Ausschnitts einer erfindungsgemäßen Bauprofilleiste Probe 7 in einer perspektivischen Ansicht mit Maßangaben;
- Fig. 34: eine Darstellung gemäß Figur 33 mit einer Variation der Höhenskala;
- Fig. 35: ein ungefiltertes Messbild eines Ausschnitts einer Bauprofilleiste Probe 8 mit Rändelung aus dem Stand der Technik in einer perspektivischen Ansicht mit Maßangaben;
- Fig. 36: eine Darstellung gemäß Figur 35 mit einer Variation der Höhenskala;
- Fig. 37: ein ungefiltertes Messbild eines Ausschnitts einer erfindungsgemäßen Bauprofilleiste Probe 9 in einer perspektivischen Ansicht mit Maßangaben;
- Fig. 38: eine Darstellung gemäß Figur 37 mit einer Variation der Höhenskala;
- Fig. 39: ein ungefiltertes Messbild eines Ausschnitts einer erfindungsgemäßen Bauprofilleiste Probe 10 in einer perspektivischen Ansicht mit Maßangaben;
- Fig. 40: eine Darstellung gemäß Figur 39 mit einer Variation der Höhenskala;
- Fig. 41: ein ungefiltertes Messbild eines Ausschnitts einer erfindungsgemäßen Bauprofilleiste Probe 11 in einer perspektivischen Ansicht mit Maßangaben;
- Fig. 42: eine Darstellung gemäß Figur 41 mit einer Variation der Höhenskala;
- Fig. 43: ein ungefiltertes Messbild eines Ausschnitts einer erfindungsgemäßen Bauprofilleiste Probe 12 in einer perspektivischen Ansicht mit Maßangaben;
- Fig. 44: eine Darstellung gemäß Figur 43 mit einer Variation der Höhenskala;
- Fig. 45: ein gefiltertes Messbild eines Ausschnitts einer Bauprofilleiste Probe 0 aus dem Stand der Technik in einer Draufsicht mit Maßangaben und Höhenmessskala;
- Fig. 46: ein gefiltertes Messbild eines Ausschnitts einer erfindungsgemäßen Bauprofilleiste Probe 1 in einer Draufsicht mit Maßangaben und Höhenmessskala;
- Fig. 47: ein gefiltertes Messbild eines Ausschnitts einer erfindungsgemäßen Bauprofilleiste Probe 2 in einer Draufsicht mit Maßangaben und Höhenmessskala;
- Fig. 48: ein gefiltertes Messbild eines Ausschnitts einer erfindungsgemäßen Bauprofilleiste Probe 3 in einer Draufsicht mit Maßangaben und Höhenmessskala;
- Fig. 49: ein gefiltertes Messbild eines Ausschnitts einer erfindungsgemäßen Bauprofilleiste Probe 4 in einer Draufsicht mit Maßangaben und Höhenmessskala;
- Fig. 50: ein gefiltertes Messbild eines Ausschnitts einer erfindungsgemäßen Bauprofilleiste Probe 5 in einer Draufsicht mit Maßangaben und Höhenmessskala;
- Fig. 51: ein gefiltertes Messbild eines Ausschnitts einer erfindungsgemäßen Bauprofilleiste Probe 6 in einer Draufsicht mit Maßangaben und Höhenmessskala;
- Fig. 52: ein gefiltertes Messbild eines Ausschnitts einer erfindungsgemäßen Bauprofilleiste Probe 7 in einer Draufsicht mit Maßangaben und Höhenmessskala;
- Fig. 53: ein gefiltertes Messbild eines Ausschnitts einer Bauprofilleiste Probe 0 aus dem Stand der Technik in einer perspektivischen Ansicht mit Maßangaben;
- Fig. 54: ein gefiltertes Messbild eines Ausschnitts einer erfindungsgemäßen Bauprofilleiste Probe 1 in einer perspektivischen Ansicht mit Maßangaben;
- Fig. 55: ein gefiltertes Messbild eines Ausschnitts einer erfindungsgemäßen Bauprofilleiste Probe 2 in einer perspektivischen Ansicht mit Maßangaben;
- Fig. 56: ein gefiltertes Messbild eines Ausschnitts einer erfindungsgemäßen Bauprofilleiste Probe 3 in einer perspektivischen Ansicht mit Maßangaben;
- Fig. 57: ein gefiltertes Messbild eines Ausschnitts einer erfindungsgemäßen Bauprofilleiste Probe 4 in einer perspektivischen Ansicht mit Maßangaben;
- Fig. 58: ein gefiltertes Messbild eines Ausschnitts einer erfindungsgemäßen Bauprofilleiste Probe 5 in einer perspektivischen Ansicht mit Maßangaben;
- Fig. 59: ein gefiltertes Messbild eines Ausschnitts einer erfindungsgemäßen Bauprofilleiste Probe 6 in einer perspektivischen Ansicht mit Maßangaben;
- Fig. 60: ein gefiltertes Messbild eines Ausschnitts einer erfindungsgemäßen Bauprofilleiste Probe 7 in einer perspektivischen Ansicht mit Maßangaben;
- Fig. 61a: eine Tabelle mit den ungefilterten Rauheitswerten von Ausschnitten der Proben 0 bis 7;
- Fig. 61b: eine Tabelle mit den gefilterten Rauheitswerten von Ausschnitten der Proben 0 bis 7;
- Fig. 62: ein Höhenhistogramm eines Ausschnitts einer Bauprofilleiste Probe 0 aus dem Stand der Technik;
- Fig. 63: ein Höhenhistogramm eines Ausschnitts einer erfindungsgemäßen Bauprofilleiste Probe 1;
- Fig. 64: ein Höhenhistogramm eines Ausschnitts einer erfindungsgemäßen Bauprofilleiste Probe 2;
- Fig. 65: ein Höhenhistogramm eines Ausschnitts einer erfindungsgemäßen Bauprofilleiste Probe 3;
- Fig. 66: ein Höhenhistogramm eines Ausschnitts einer erfindungsgemäßen Bauprofilleiste Probe 4;
- Fig. 67: ein Höhenhistogramm eines Ausschnitts einer erfindungsgemäßen Bauprofilleiste Probe 5;
- Fig. 68: ein Höhenhistogramm eines Ausschnitts einer erfindungsgemäßen Bauprofilleiste Probe 6;
- Fig. 69: ein Höhenhistogramm eines Ausschnitts einer erfindungsgemäßen Bauprofilleiste Probe 7;
- Fig. 70: eine Traglastkurve eines Ausschnitts einer Bauprofilleiste Probe 0 aus dem Stand der Technik;
- Fig. 71: eine Traglastkurve eines Ausschnitts einer erfindungsgemäßen Bauprofilleiste Probe 1;
- Fig. 72: eine Traglastkurve eines Ausschnitts einer erfindungsgemäßen Bauprofilleiste Probe 2;
- Fig. 73: eine Traglastkurve eines Ausschnitts einer erfindungsgemäßen Bauprofilleiste Probe 3;
- Fig. 74: eine Traglastkurve eines Ausschnitts einer erfindungsgemäßen Bauprofilleiste Probe 4;
- Fig. 75: eine Traglastkurve eines Ausschnitts einer erfindungsgemäßen Bauprofilleiste Probe 5;
- Fig. 76: eine Traglastkurve eines Ausschnitts einer erfindungsgemäßen Bauprofilleiste Probe 6;
- Fig. 77: eine Traglastkurve eines Ausschnitts einer erfindungsgemäßen Bauprofilleiste Probe 7;
- Fig. 78: eine Messkurve einer Linearmessung eines Streckenabschnitts einer Bauprofilleiste Probe 0 aus dem Stand der Technik mit Maßangaben;
- Fig. 79: eine Messkurve einer Linearmessung eines Streckenabschnitts einer erfindungsgemäßen Bauprofilleiste Probe 1 mit Maßangaben;
- Fig. 80: eine Messkurve einer Linearmessung eines Streckenabschnitts einer erfindungsgemäßen Bauprofilleiste Probe 2 mit Maßangaben;
- Fig. 81: eine Messkurve einer Linearmessung eines Streckenabschnitts einer erfindungsgemäßen Bauprofilleiste Probe 3 mit Maßangaben;
- Fig. 82: eine Messkurve einer Linearmessung eines Streckenabschnitts einer erfindungsgemäßen Bauprofilleiste Probe 4 mit Maßangaben;
- Fig. 83: eine Messkurve einer Linearmessung eines Streckenabschnitts einer erfindungsgemäßen Bauprofilleiste Probe 5 mit Maßangaben;
- Fig. 84: eine Messkurve einer Linearmessung eines Streckenabschnitts einer erfindungsgemäßen Bauprofilleiste Probe 6 mit Maßangaben;
- Fig. 85: eine Messkurve einer Linearmessung eines Streckenabschnitts einer erfindungsgemäßen Bauprofilleiste Probe 7 mit Maßangaben;
- Fig. 86: eine Tabelle mit den gefilterten Rauheitswerten von Streckenabschnitten der Proben 0 bis 7;
- Fig. 87: eine Tabelle gemäß Figur 86 mit einer Variation des Filters;
- Fig. 88: eine Tabelle gemäß Figur 86 mit einer weiteren Variation des Filters;
- Fig. 89: eine Tabelle gemäß Figur 86 mit einer weiteren Variation des Filters;
- Fig. 90: in einer perspektivischen Draufsicht eine erfindungsgemäße Bauprofilleiste in Gestalt einer Winkelleiste mit Oberflächen mit unterschiedlich fein gestalteter Rauhigkeit zum Auftragen von Farbe oder Lacke bzw. Putz;
- Fig. 91: in einer Querschnittansicht die in Fig. 90 dargestellte Bauprofilleiste in ihrer Einbaustellung;
- Fig. 92 bis Fig. 136: in unterschiedlichen Ansichten Ausführungsbeispiele von erfindungsgemäßen Bauprofilleisten und Einbauanordnungen der Bauprofilleisten; und
- Fig. 137 bis Fig. 142: in unterschiedlichen Ansichten Ausführungsbeispiele von Vorrichtung zum Herstellen einer erfindungsgemäßen Bauprofilleiste.

An insgesamt 13 Proben von Bauprofilleisten wurde die Oberflächenrauheit vergleichend charakterisiert. Dazu wurde die Oberflächentopographie der Proben mittels einem MicroProf-Messgerät mit chromatischem Sensor (CWL) aufgenommen. Die Proben wurden ohne weitere Präparation direkt vermessen, wobei sie mit fokussiertem Weißlicht beleuchtet wurden.

Der Sensor misst die wellenlängenabhängige (chromatische) Verteilung des reflektierten Lichts und ermittelt aus dieser die absolute Höheninformation. Der Sensor hat einen Abstand zur jeweiligen Messprobe von mehreren Millimetern und arbeitet berührungsfrei und zerstörungsfrei. Für die Messungen wurde ein Sensor mit einem z-Messbereich von 3 mm verwendet. Dabei ist die Auflösung in z-Richtung (Höhenwerte der Spitzen und Riefen) maximal 30 nm. Die Auflösung in x- und y-Richtung (Flächenwerte) ist 5 - 6 µm.

Das Besondere an diesem Messprinzip ist, dass die bei optischen Verfahren üblichen großen Messfehler durch Kanteneffekte praktisch nicht auftreten. Man erhält die Oberflächentopographie als quantitativ vorliegendes Datenfeld, so dass nach der Messung beliebige Abstände, Höhen und Winkel, Rauheiten und Welligkeiten, wie auch Ebenheiten in den aus den Datenfeldern hergestellten Bildern vermessen werden können.

Hinterschneidungen können mit diesem Verfahren nicht gemessen werden. Diese werden als Senkrechte dargestellt. Die Areale unter den Hinterschneidungen und zum Teil auch an den Senkrechten fließen nicht in die Messergebnisse ein. Die tatsächliche wahre Oberfläche ist in diesem Falle größer als der Messwert der wahren Oberfläche Rlo.

Die Topographie wurde bei den vorliegenden Messungen von flächigen Ausschnitten verschiedener Bauprofilleisten mit einer gemessenen Originalfläche von 10 mm x 10 mm mit einem Messpunktabstand von 20 µm aufgenommen. Das ergibt insgesamt 500 x 500 = 250.000 Messpunkte je Probe. Es wurde 1 Messung je Probe durchgeführt. Anschließend wurde jeweils eine möglichst repräsentative Messfläche von 8 mm x 8 mm ausgewählt. Die geometrische Oberfläche dieser Messfläche ist damit 8 mm x 8 mm = 64 mm.

Die jeweilige Messfläche der Topographieaufnahmen wurde mit einem Wert der Grenzwellenlänge Lc von 1 mm rauheitsgefiltert. Bei der Rauheitsfilterung werden u.a. die welligen Anteile der Topographie abhängig vom gewählten Lc-Wert herausgefiltert. Außerdem wird ein Bereich in der Größe der Grenzwellenlänge um den Umfang der Topographieaufnahme herum eliminiert.

Zur Bestimmung der Einzelrautiefen Rzi wurde die Messfläche in i = 5 gleich große Einzelsegmente unterteilt.

Die nachfolgenden Darstellungen der Messergebnisse (Messbilder, Höhenhistogramme, Traglastkurven, Messkurven) in Papierform sind gegenüber der Digitalform weniger detailliert. Die Messergebnisse stehen bei Bedarf auch in Digitalform zur Verfügung.

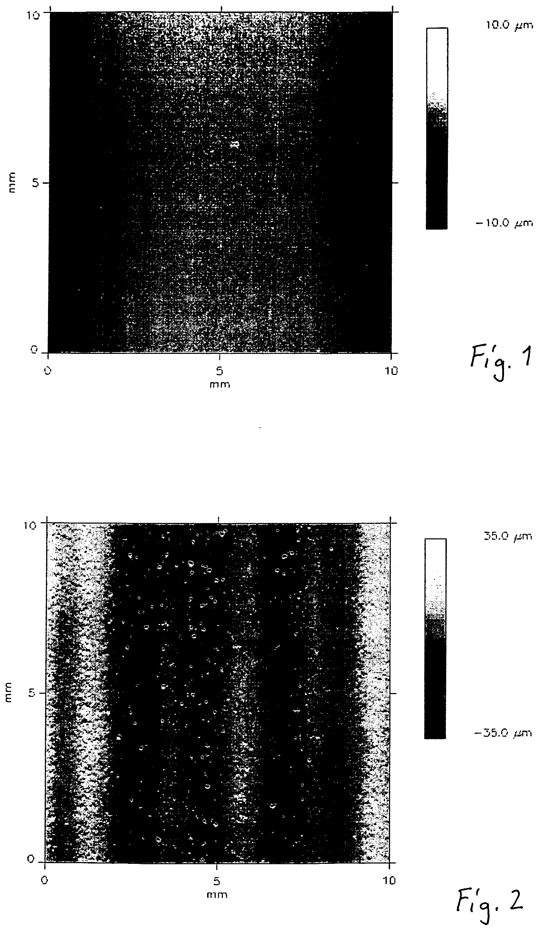

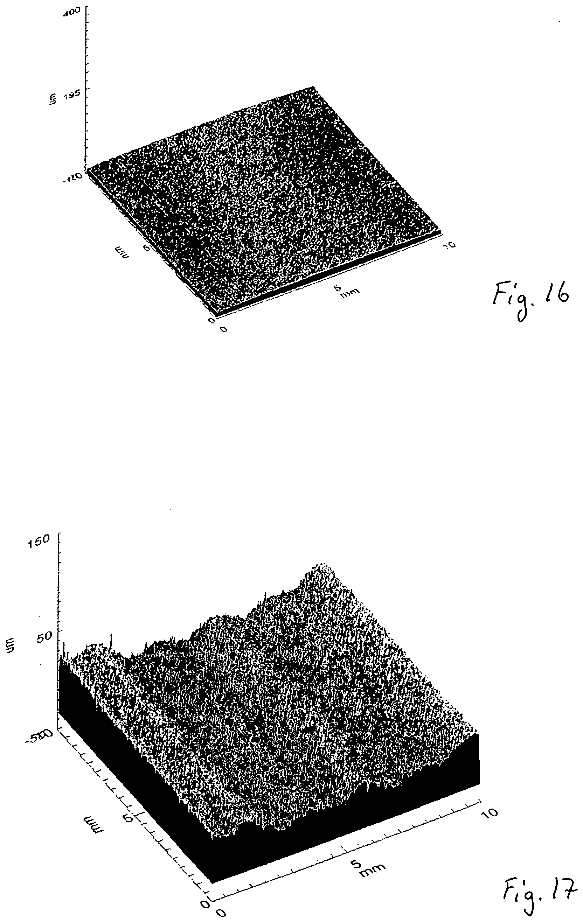

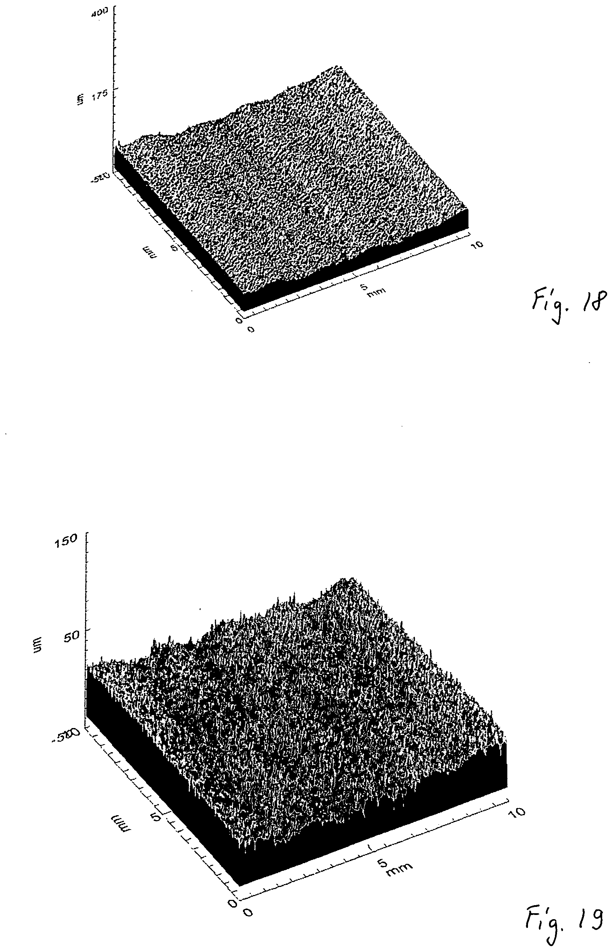

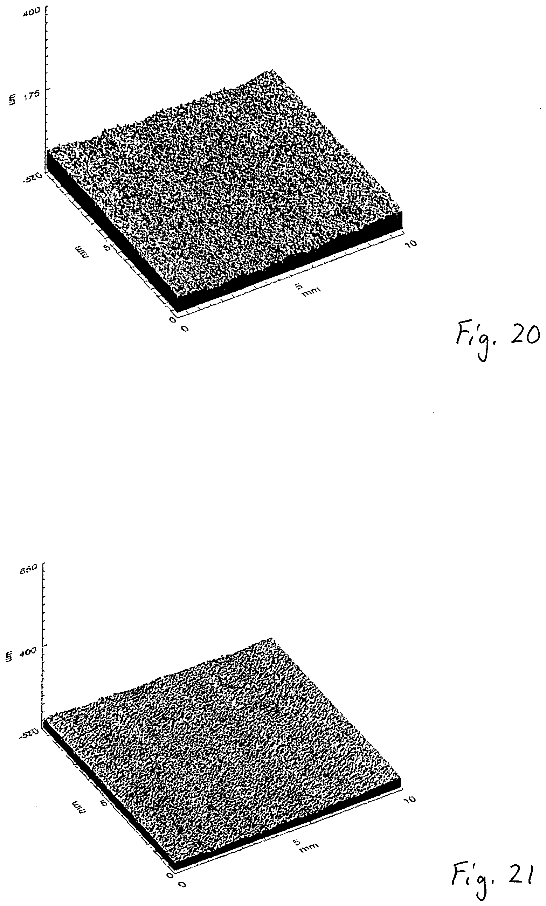

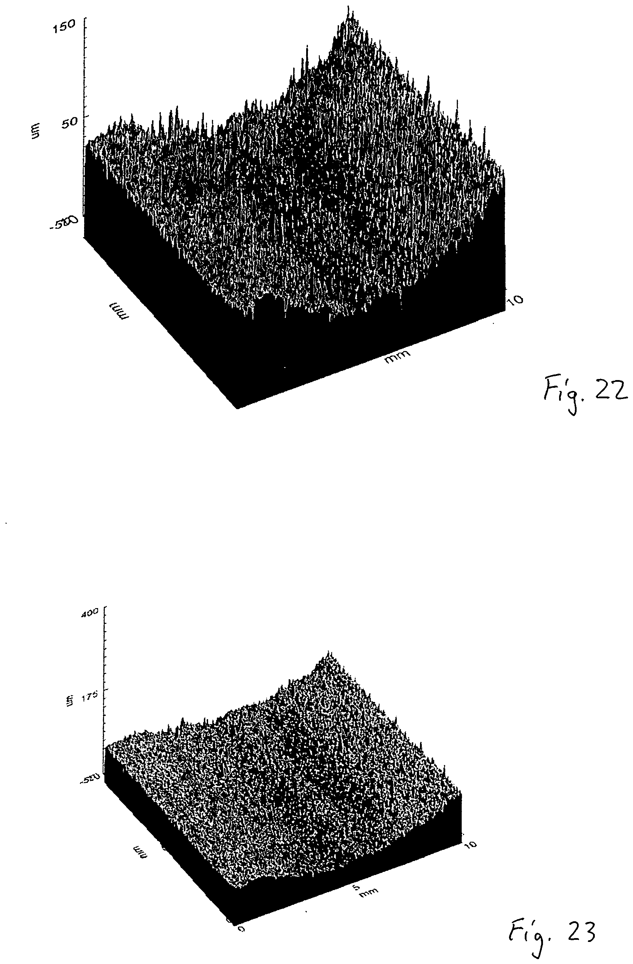

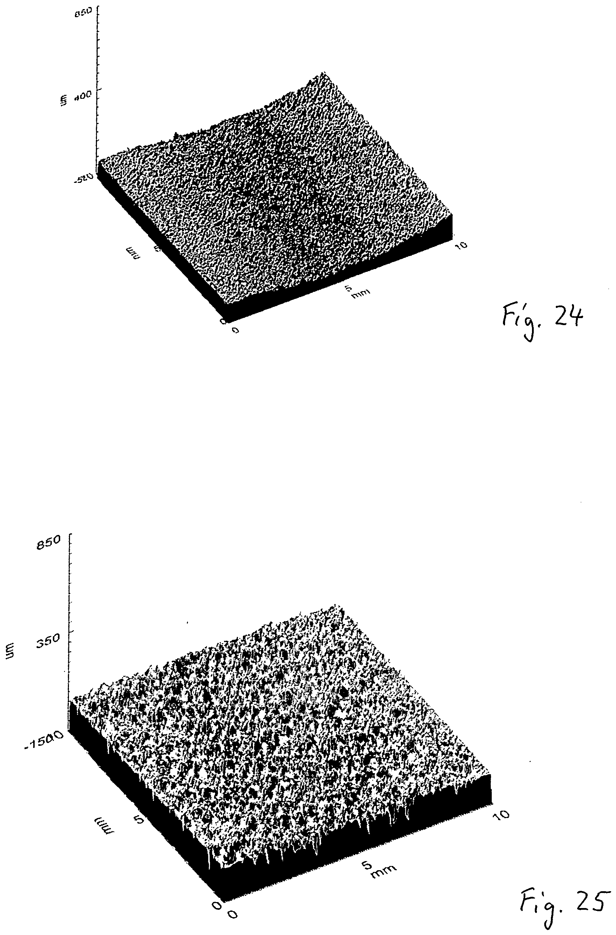

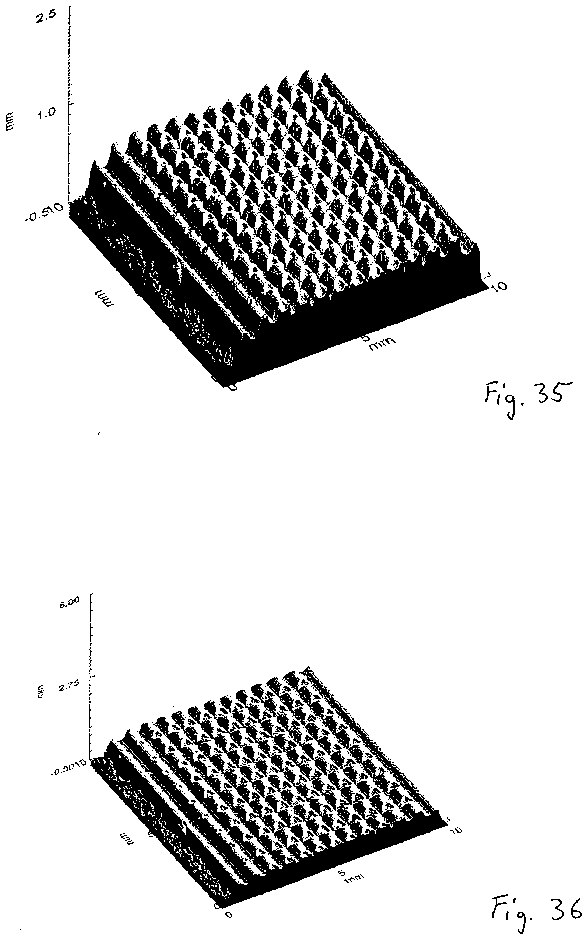

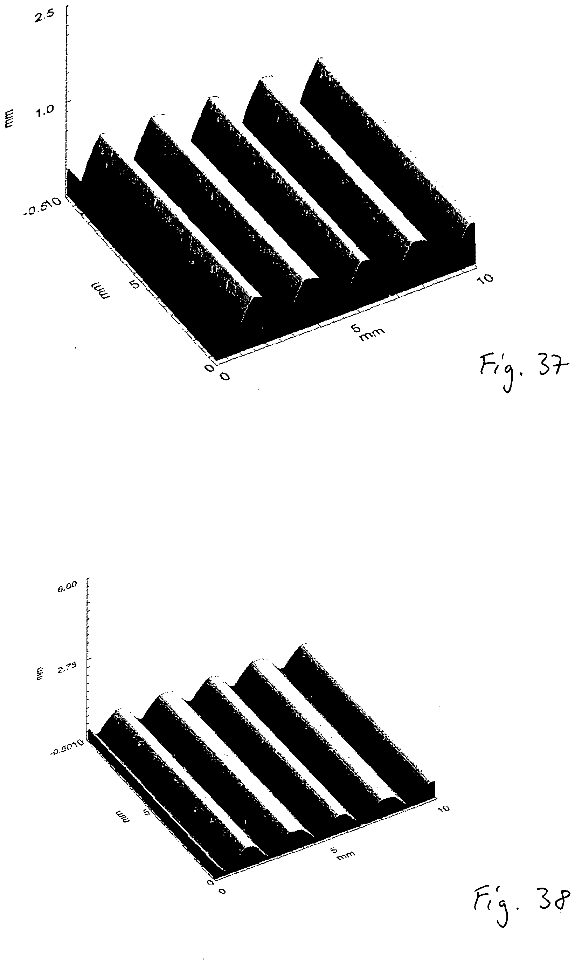

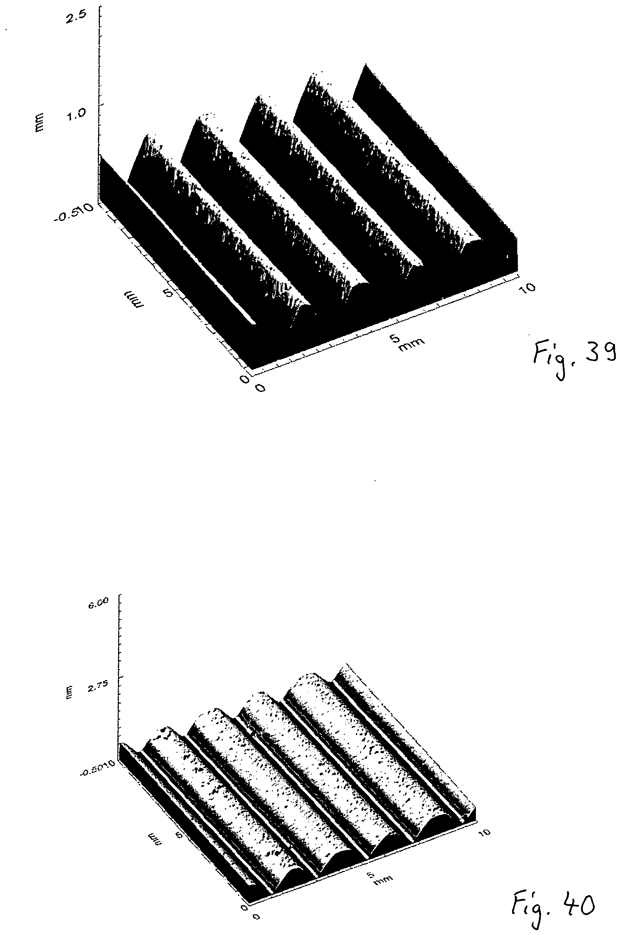

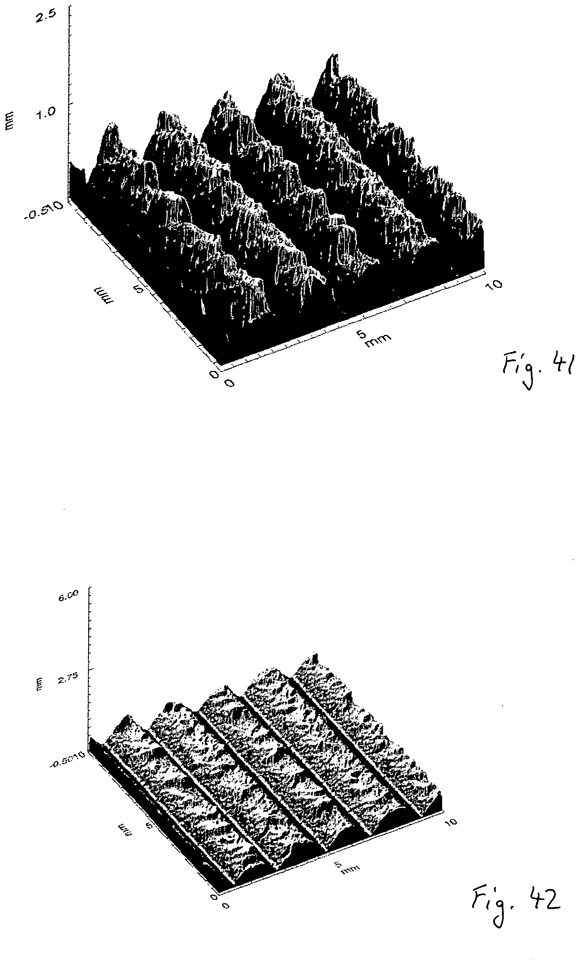

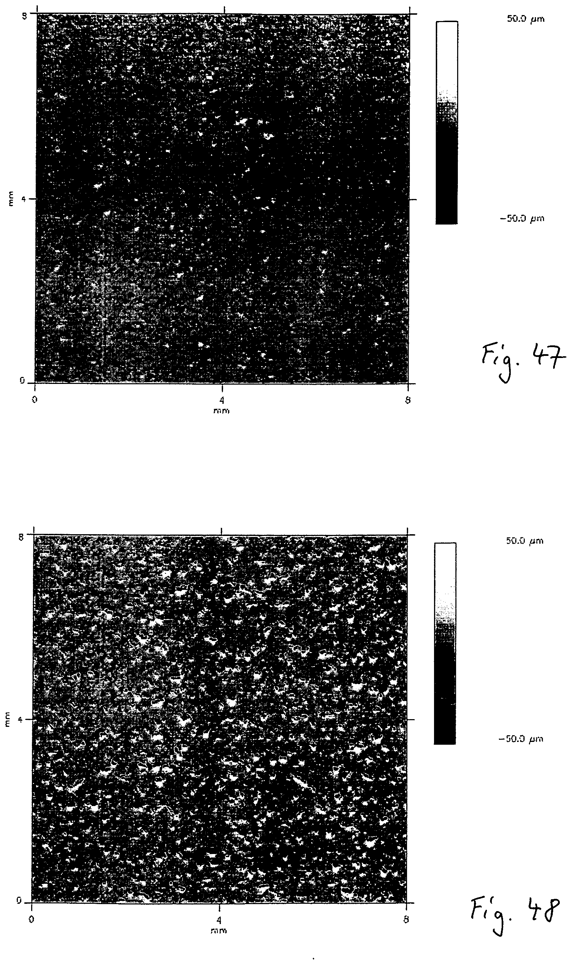

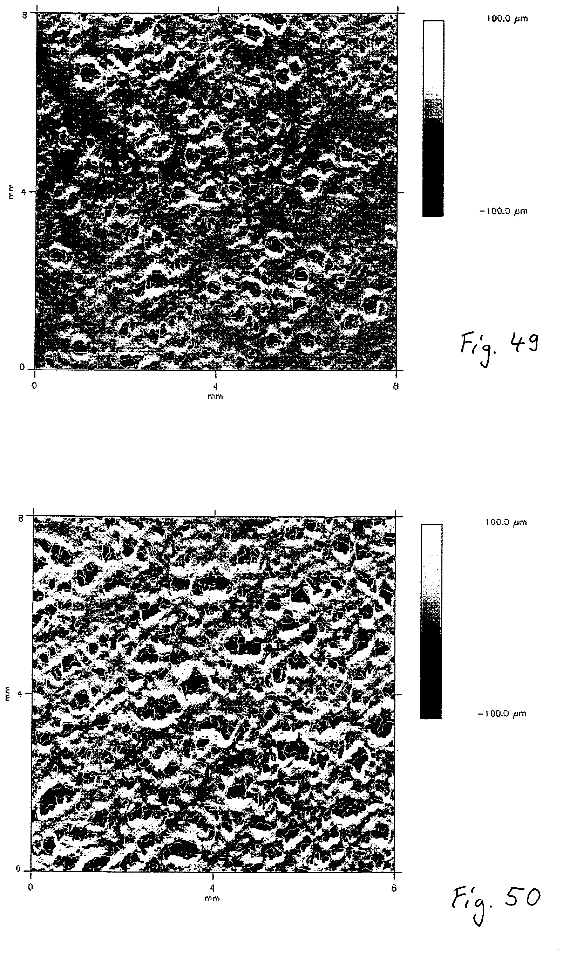

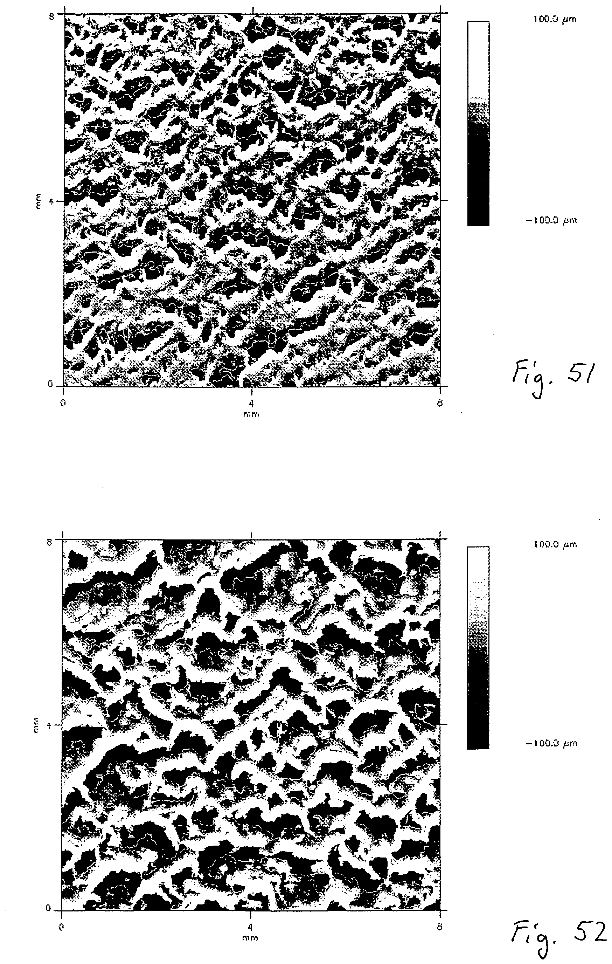

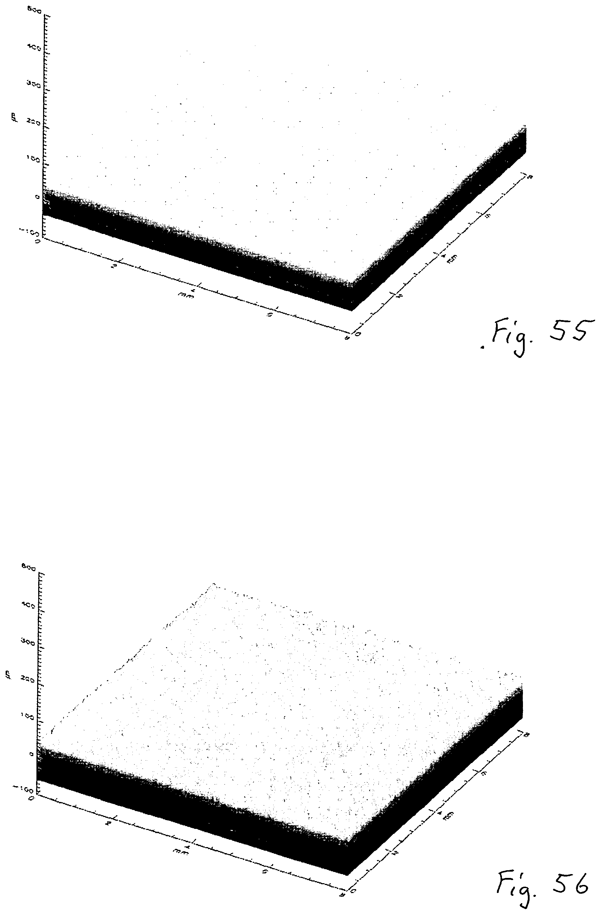

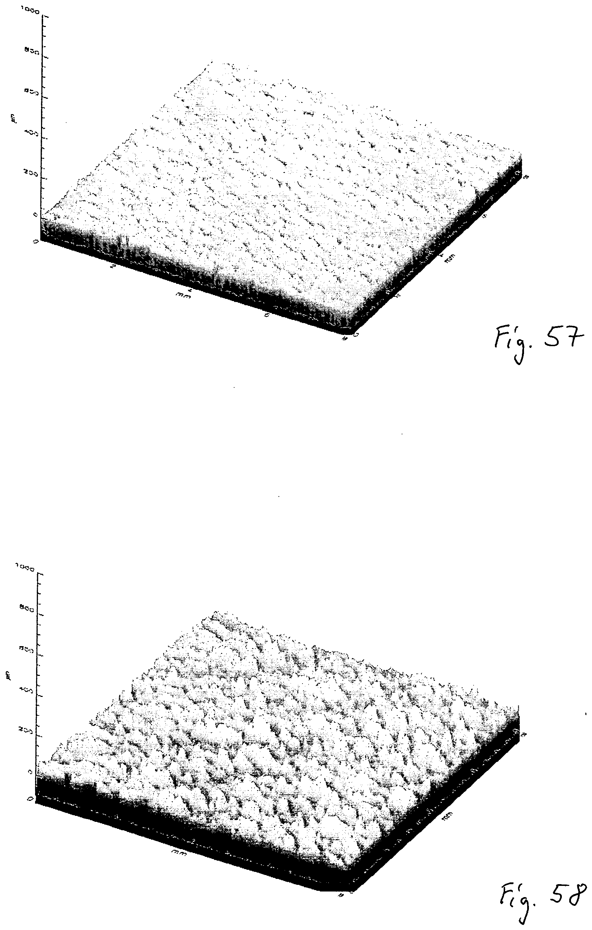

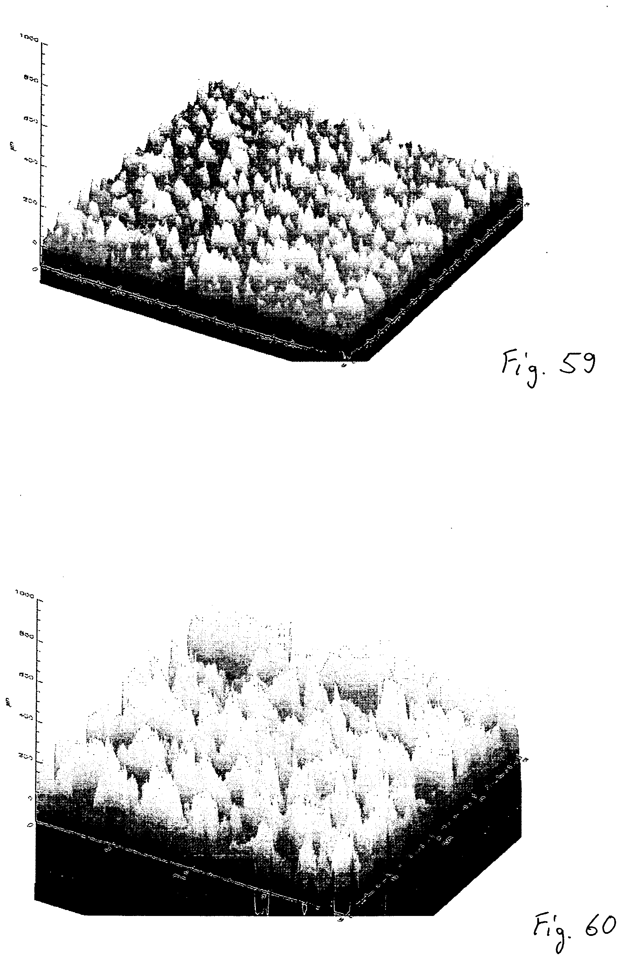

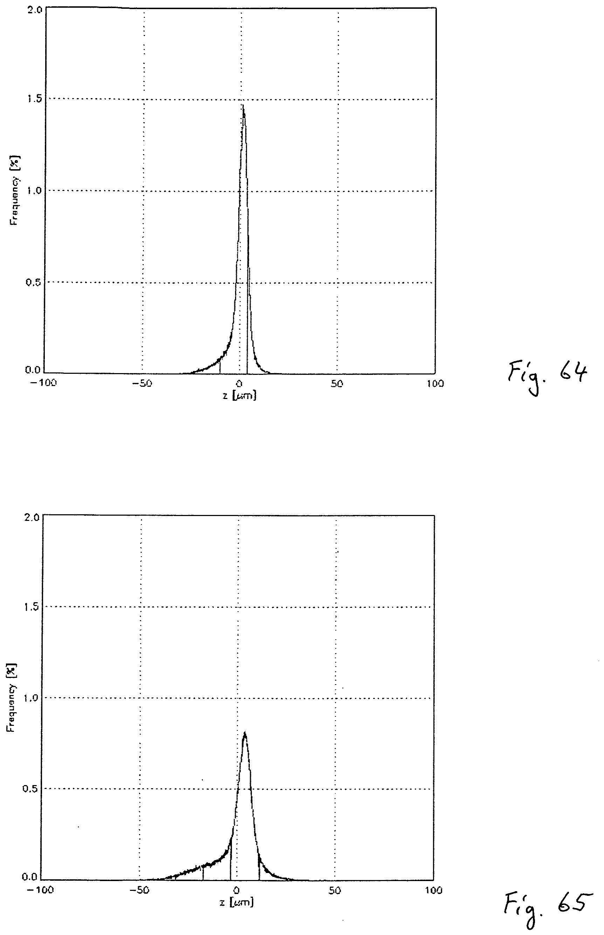

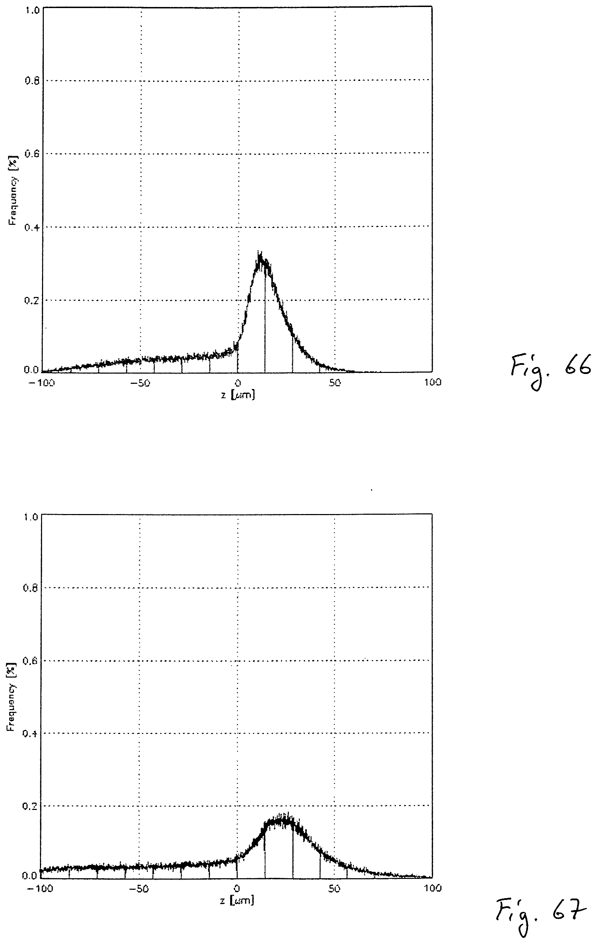

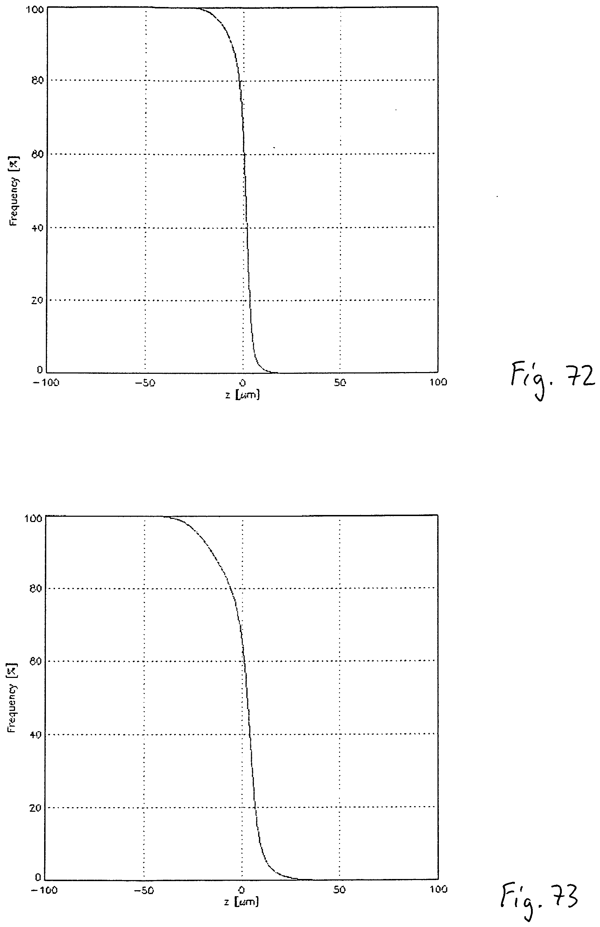

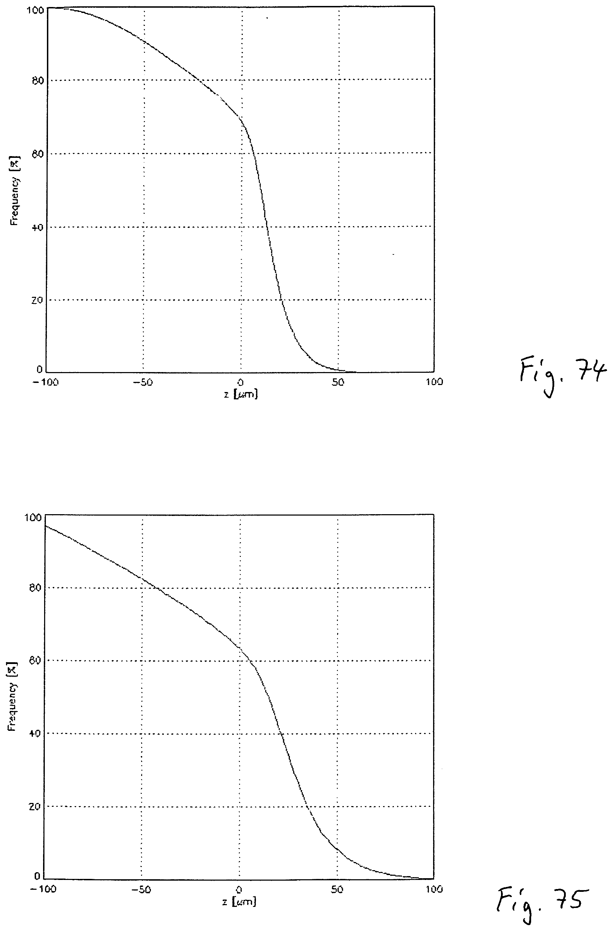

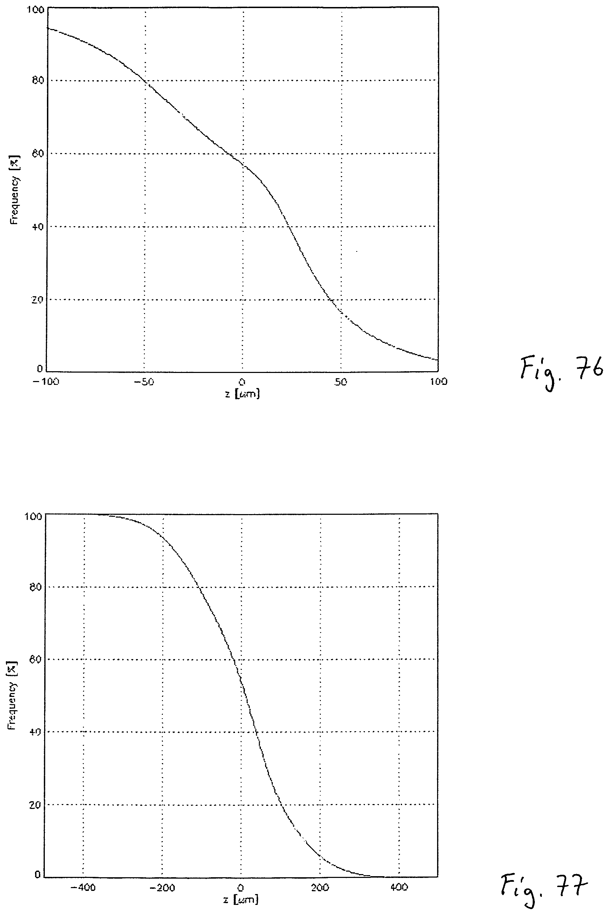

Den nachfolgenden Figuren 1 bis 77 liegen Oberflächenmessungen gemäß den voranstehenden Erläuterungen zugrunde.

In den Draufsichten entsprechen gemäß der zugehörigen Grauwertskala helle Grauwerte hohen Bereichen und dunkle Grauwerte tiefen Bereichen auf den Proben.

Die Topographieaufnahmen wurden mit einem Wert der Grenzwellenlänge Lc von 1 mm rauheitsgefiltert.

Die Topographie der Proben unterscheidet sich erheblich, so dass bei den Darstellungen unterschiedliche Skalierungen der z-Werte verwendet wurden.

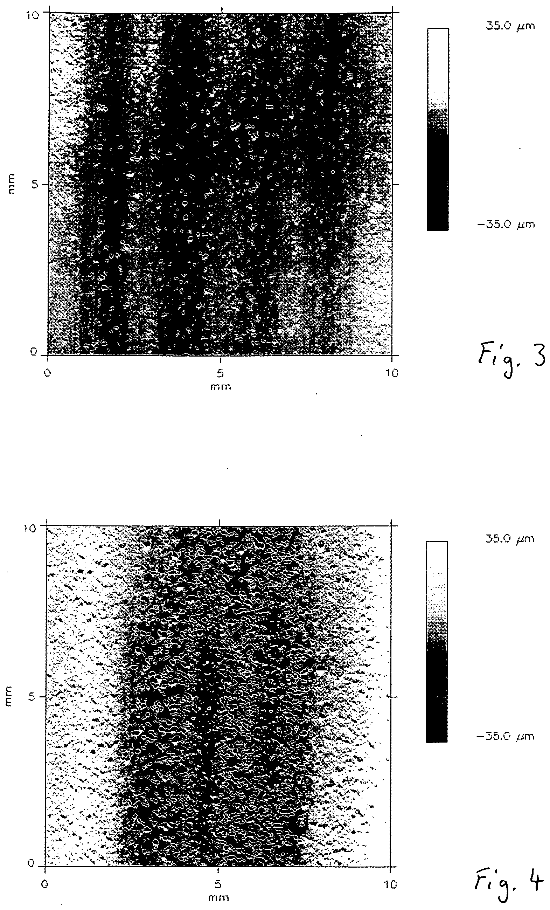

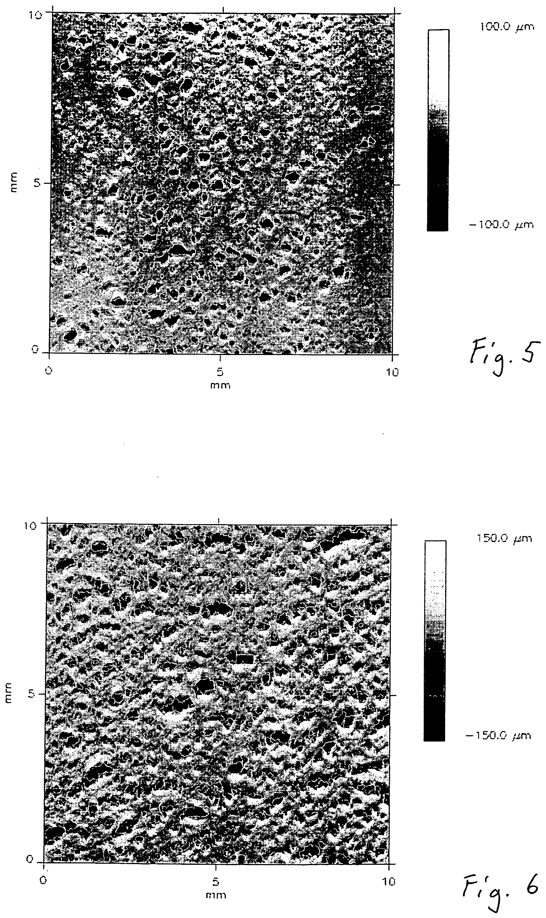

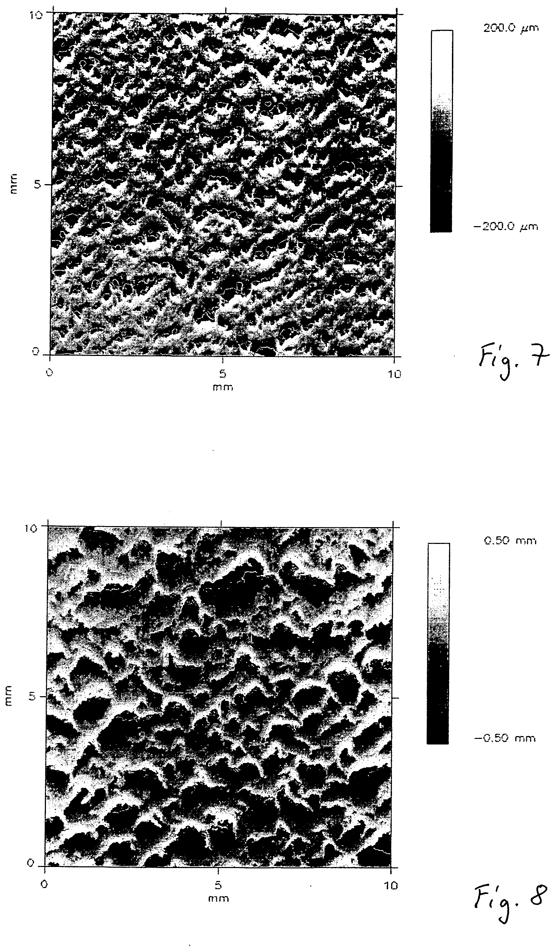

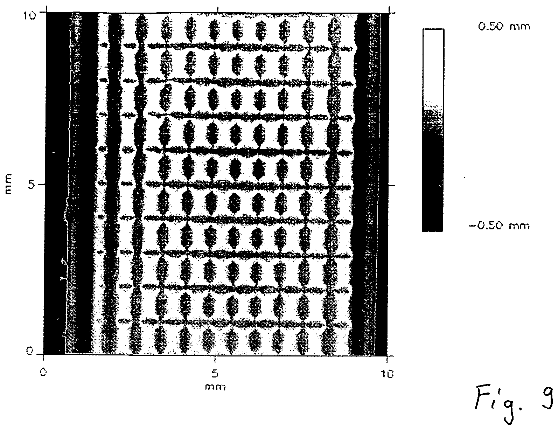

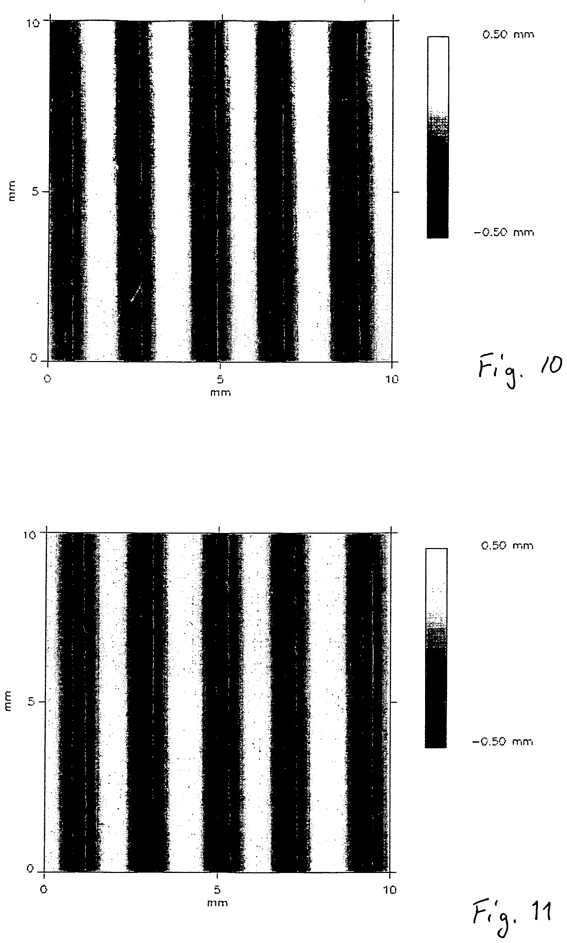

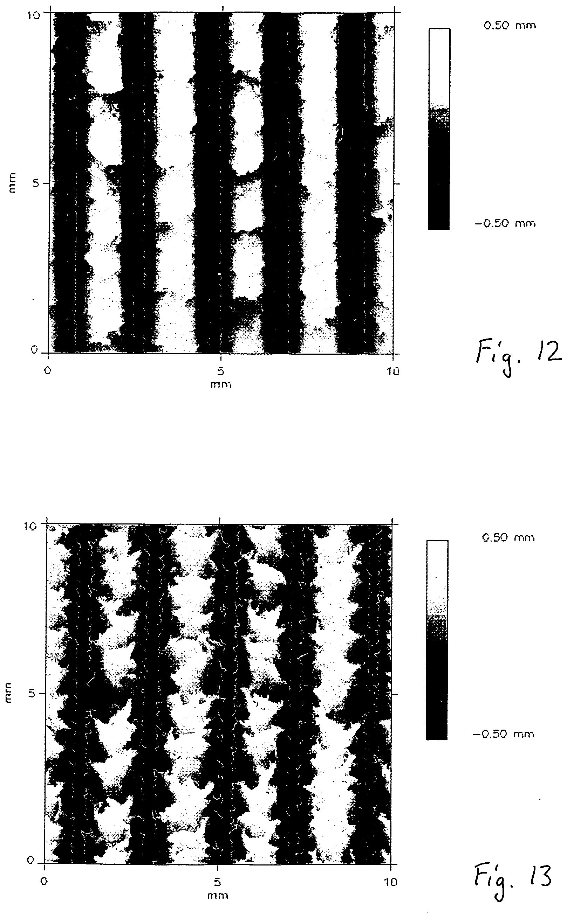

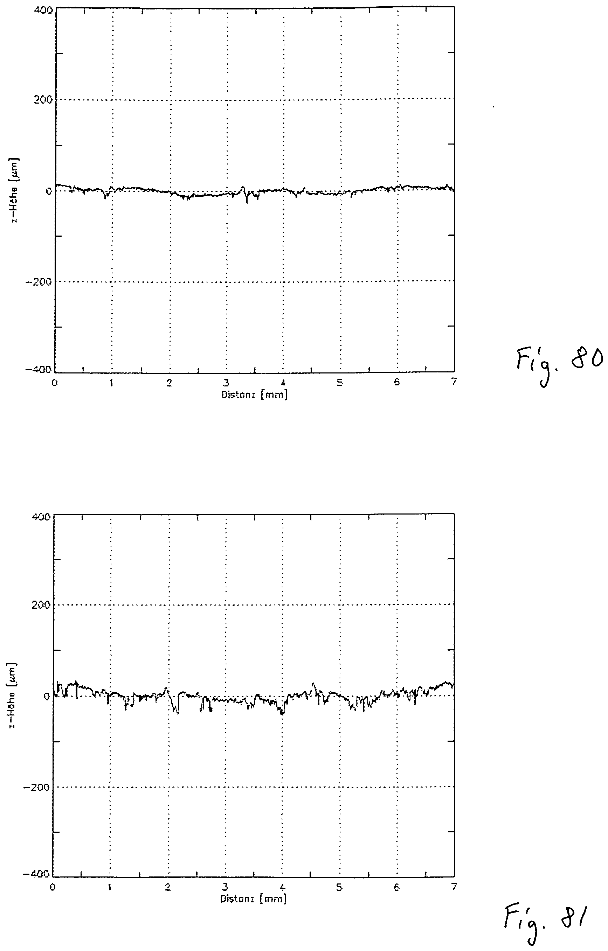

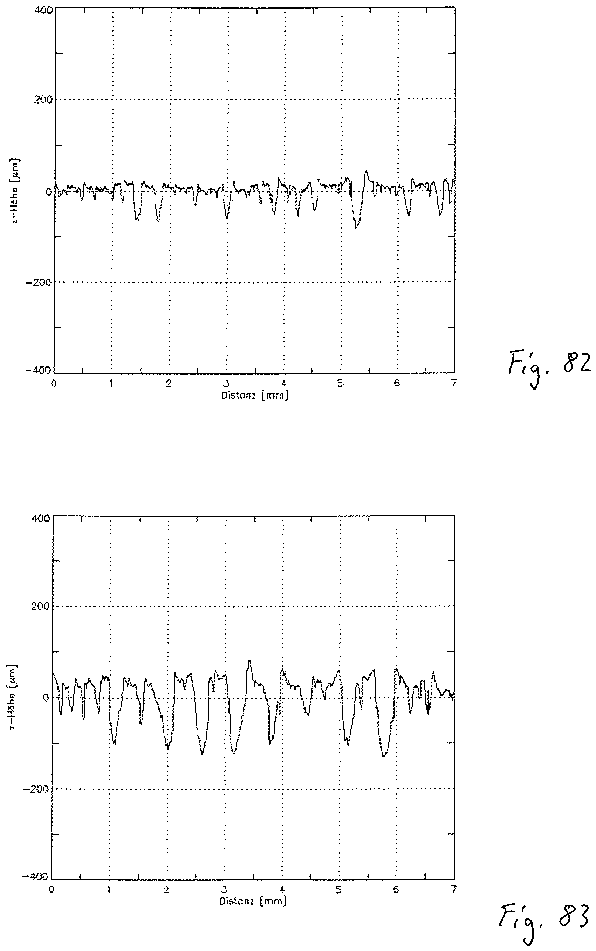

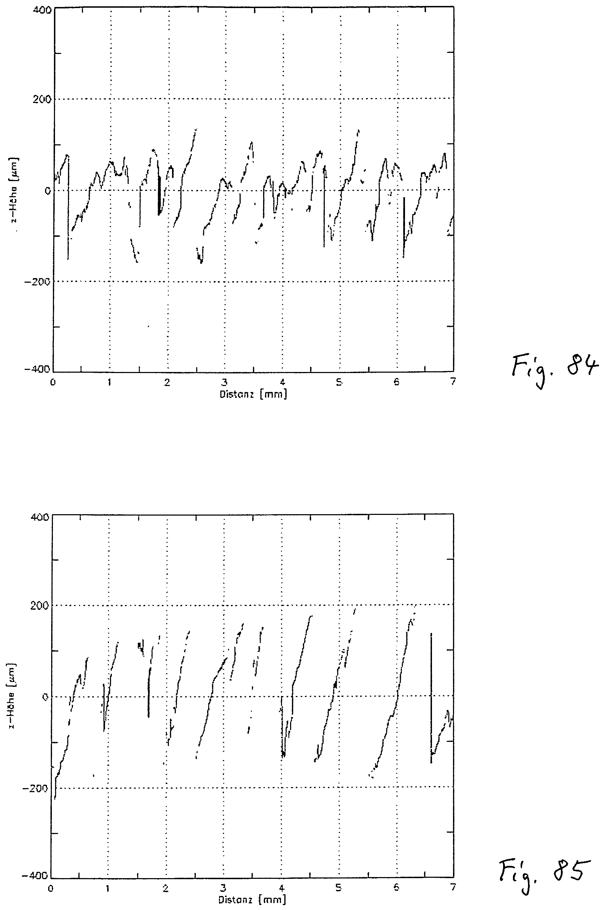

In der nachfolgenden Auflistung sind die zu den jeweiligen Proben gehörenden
Figuren aufgelistet:
Probe 0: Fig. 1, 14, 15, 16, 45, 53, 62, 70, 78
Probe 1: Fig. 2, 17, 18, 46, 54, 63, 71, 79
Probe 2: Fig. 3, 19, 20, 21, 47, 55, 64, 72, 80
Probe 3: Fig. 4, 22, 23, 24, 48, 56, 65, 73, 81
Probe 4: Fig. 5, 25, 26, 49, 57, 66, 74, 82
Probe 5: Fig. 6, 27, 28, 29, 50, 58, 67, 75, 83
Probe 6: Fig. 7, 30, 31, 32, 51, 59, 68, 76, 84
Probe 7: Fig. 8, 33, 34, 52, 60, 69, 77, 85
Probe 8: Fig. 9, 35, 36
Probe 9: Fig. 10, 37, 38
Probe 10: Fig. 11, 39, 40
Probe 11: Fig. 12, 41, 42
Probe 12: Fig. 13, 43, 44

Die Proben 0 bis 12 sind Ausschnitte von Bauprofilleisten aus extrudiertem Kunststoff.

Die Figuren 1 bis 13 zeigen jeweils ein ungefiltertes Messbild eines Ausschnitts der Proben 0 bis 12 in einer Draufsicht mit Maßangaben und einer Höhenmessskala. Gemäß der zugehörigen Grauwertskala entsprechen helle Grauwerte hohen Bereichen und dunkle Grauwerte tiefen Bereichen auf den Proben. Die Topographie der Proben unterscheidet sich erheblich, so dass bei den Darstellungen unterschiedliche Skalierungen der z-Werte verwendet wurden.

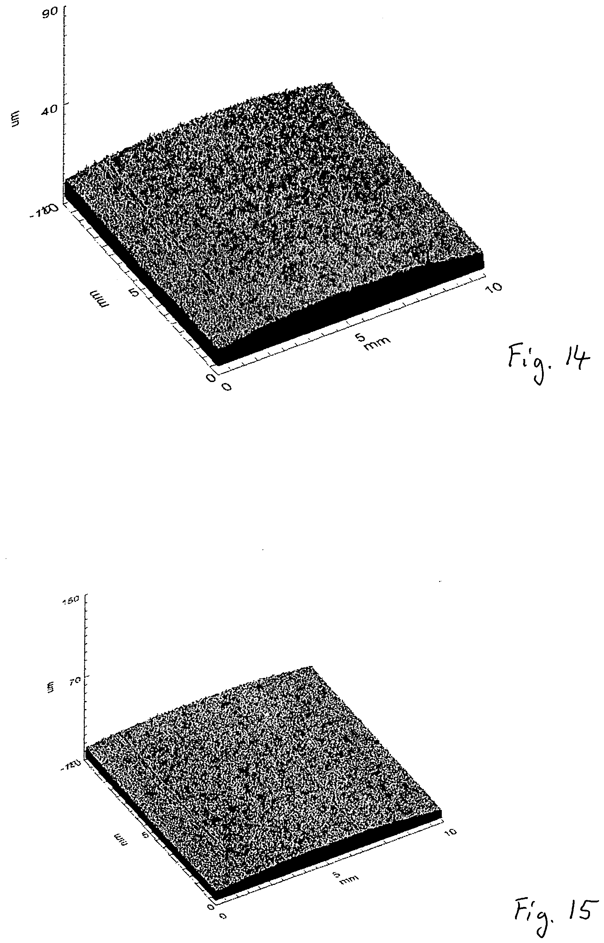

Die Figuren 14 bis 44 zeigen jeweils ein ungefiltertes Messbild eines Ausschnitts der Proben 0 bis 12 in einer perspektivischen Ansicht mit Maßangaben. Die Topographie der Proben unterscheidet sich erheblich, so dass bei den Darstellungen unterschiedliche Skalierungen der z-Werte verwendet wurden. Dieselbe Probe ist jeweils mehrfach dargestellt. Dabei ist die Höhenskala der z-Werte jeweils unterschiedlich gewählt. Das dient der Verdeutlichung der Oberflächenstruktur.

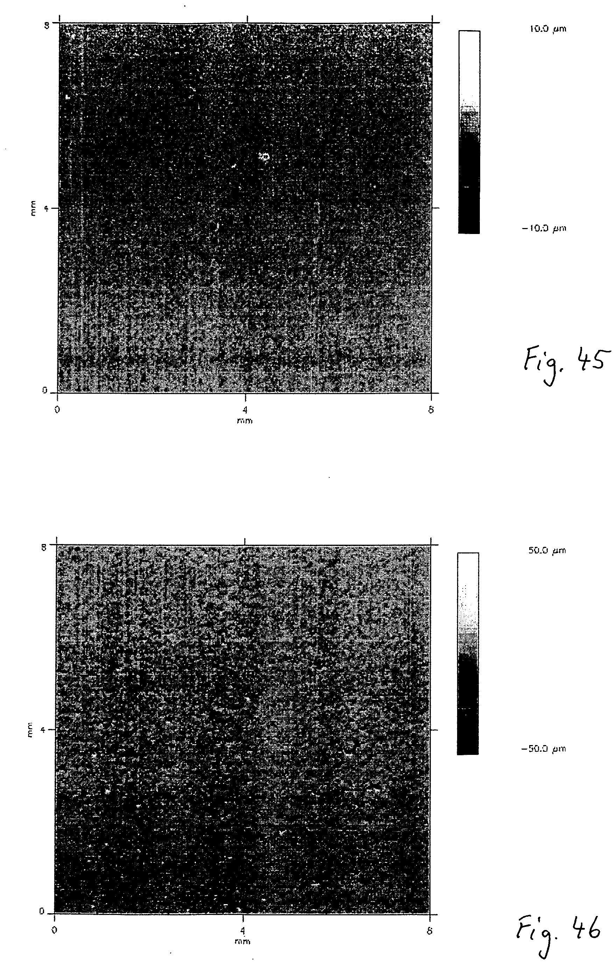

Die Figuren 45 bis 52 zeigen jeweils ein gefiltertes Messbild eines Ausschnitts der Proben 0 bis 7 in einer Draufsicht mit Maßangaben und einer Höhenmessskala. Diese Topographieaufnahmen wurden mit einem Wert der Grenzwellenlänge Lc von 1 mm rauheitsgefiltert. Gemäß der zugehörigen Grauwertskala entsprechen helle Grauwerte hohen Bereichen und dunkle Grauwerte tiefen Bereichen auf den Proben. Die Topographie der Proben unterscheidet sich erheblich, so dass bei den Darstellungen unterschiedliche Skalierungen der z-Werte verwendet wurden.

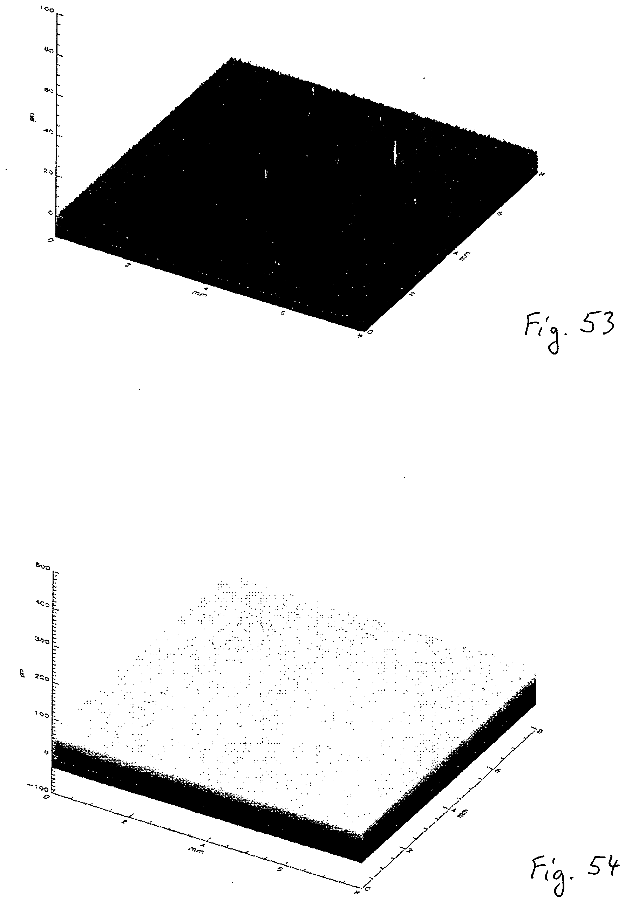

Die Figuren 53 bis 60 zeigen jeweils ein gefiltertes Messbild eines Ausschnitts der Proben 0 bis 7 in einer perspektivischen Ansicht mit Maßangaben. Diese Topographieaufnahmen wurden mit einem Wert der Grenzwellenlänge Lc von 1 mm rauheitsgefiltert. Die Topographie der Proben unterscheidet sich erheblich, so dass bei den Darstellungen unterschiedliche Skalierungen der z-Werte verwendet wurden.

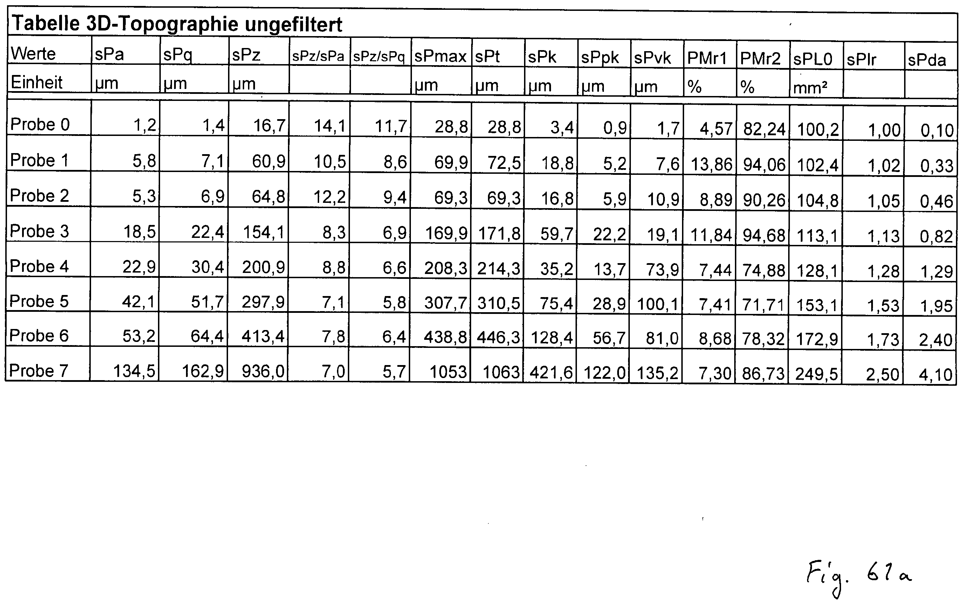

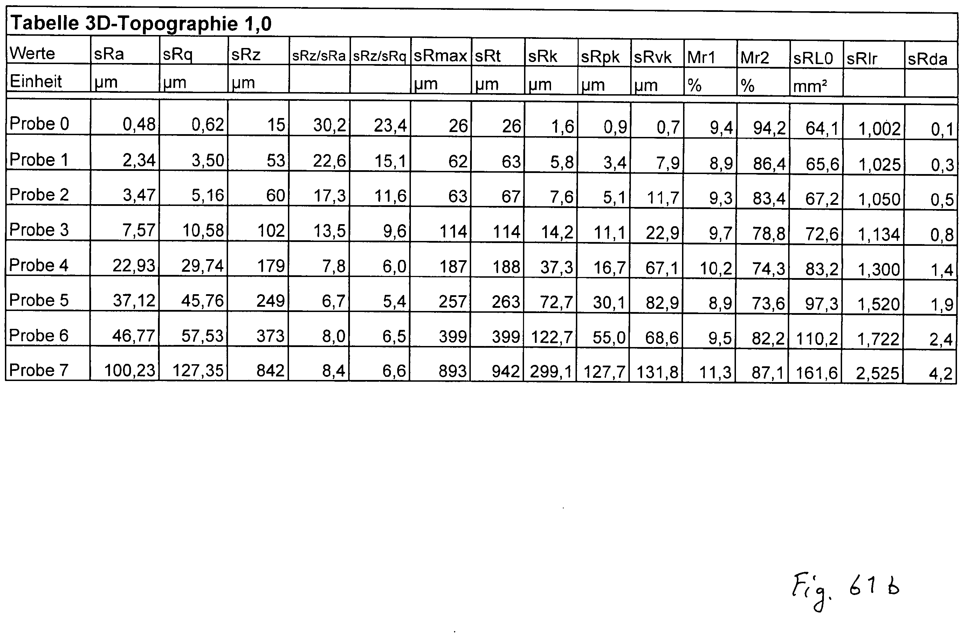

Die Figur 61 a zeigt eine Tabelle mit den ungefilterten Rauheitswerten von Ausschnitten der Proben 0 bis 7. Den Rauheitswerten liegt eine gemessene Originalfläche von 10 mm x 10 mm mit einem Messpunktabstand von 20 µm zugrunde. Die Rauheit nimmt von der glatten Oberfläche der Probe 0 zu der sehr rauen Oberfläche der Probe 7 hin nahezu stetig zu.

Die Figur 61b zeigt eine Tabelle mit den gefilterten Rauheitswerten der Tabelle 61a von Ausschnitten der Proben 0 bis 7. Den Rauheitswerten liegt eine möglichst repräsentativ ausgewählte Messfläche von 8 mm x 8 mm zugrunde. Der Lc-Wert zur Filterung der Rauheit ist hier 1 mm. Die Rauheit nimmt von der glatten Oberfläche der Probe 0 zu der sehr rauen Oberfläche der Probe 7 hin stetig zu.

Diese Rauheitsfilterung glättet in der Fig. 61b einzelne Extremwerte der Fig. 61 a, so dass eine tatsächlich durchschnittliche Rauheit der Proben in der Fig. 61b dargestellt ist. Dadurch werden Messwerte unterschiedlichster Oberflächen vergleichbar und bewertbar.

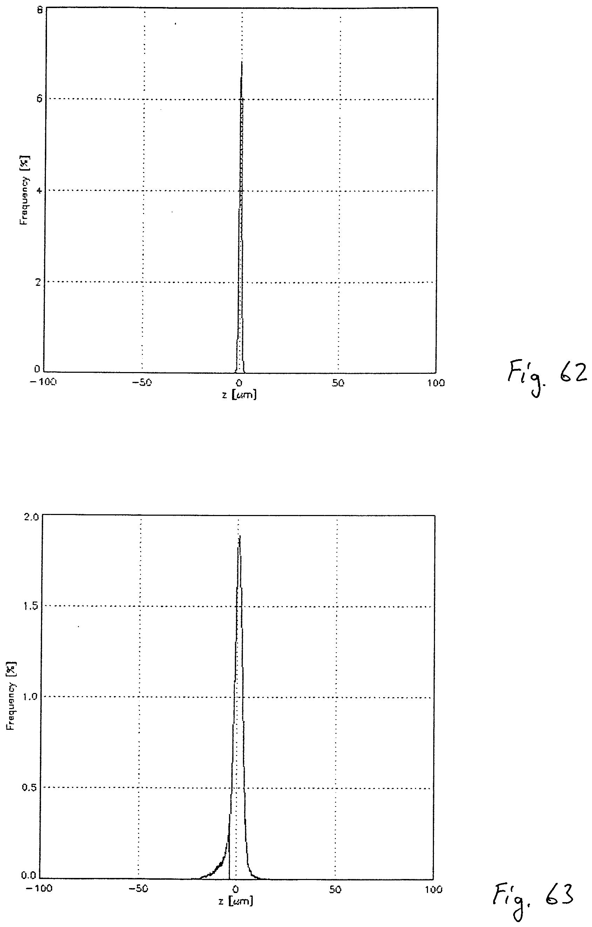

Die Figuren 62 bis 69 zeigen die aus den rauheitsgefilterten Topograhieaufnahmen ermittelten Höhenhistogramme. Der Lc-Wert zur Filterung der Rauheit ist hier wieder 1 mm.

Fig. 62 zeigt ein Höhenhistogramm eines Ausschnitts einer Bauprofilleiste der Probe 0, die als nach dem Stand der Technik glatt betrachtet wird. Am Höhenhistogramm wird das bestätigt. Es ist im wesentlichen ein einziger Peak erkennbar, der in einem sehr schmalen Bereich der z-Achse von rund 5 µm angeordnet ist. Der Peak weist eine Häufigkeit von teilweise mehr als 6% auf.

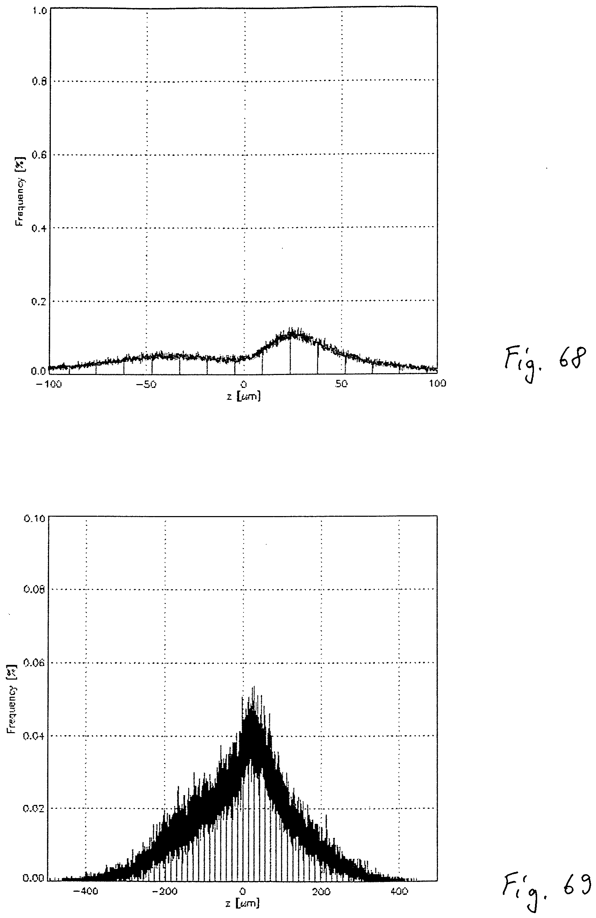

Die Fig. 62 bis 69 zeigen jeweils ein Höhenhistogramm eines Ausschnitts von erfindungsgemäßen Bauprofilleisten. Deren zunehmende Rauheit lässt sich an der zunehmenden Breite der Messkurve an der z-Achse, der zunehmenden Rauhigkeit der Messkurve und der abnehmenden Häufigkeit einzelner Messwerte ablesen. Die größte Häufigkeit ist bei der Probe 1 (Figur 63) bereits unter 2% und nimmt stetig ab, so dass die größte Häufigkeit bei Probe 7 (Figur 69) unter 0,07% liegt.

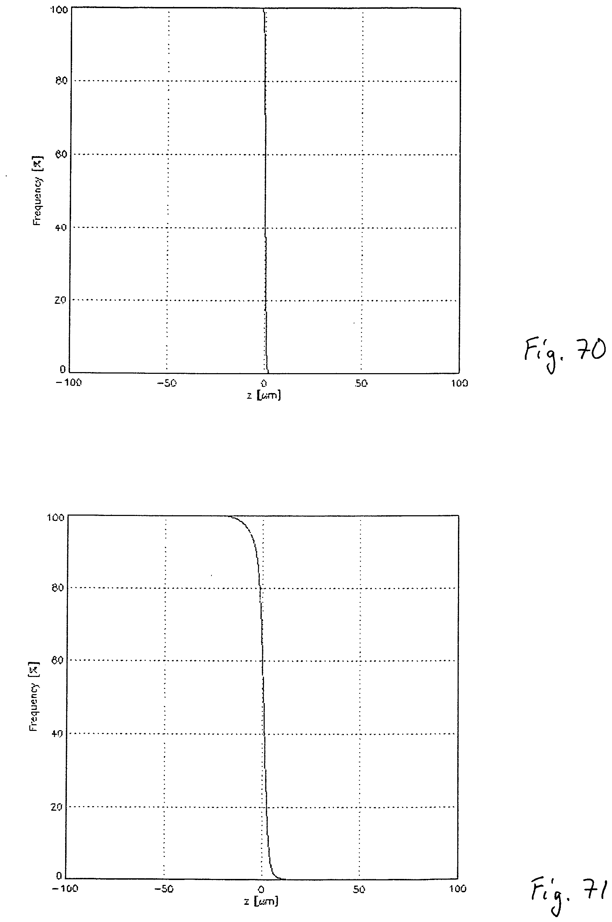

Die Figuren 70 bis 77 zeigen die aus den rauheitsgefilterten Topograhieaufnahmen ermittelten Traglastkurven. Der Lc-Wert zur Filterung der Rauheit ist hier wiederum 1 mm.

Eine Traglastkurve zeigt an jedem Punkt der z-Achse den Querschnittsanteil eines Probekörpers in %. Je tiefer eine Messebene in einem Probekörper liegt, desto weniger Spitzen oder Riefenanteile sind dort anzutreffen. Ohne Riefen oder Spitzen ist der Querschnittsanteil des Probekörpers 100%. Eine Messung oberhalb aller Spitzen, also außerhalb eines Probekörpers ergibt 0% Querschnittsanteil. Eine 100% glatte Oberfläche ergibt in der Traglastkurve eine senkrechte Linie. Je mehr Rauheit eine Oberfläche aufweist, desto mehr verteilt sich die Traglastkurve über die z-Achse. Zumeist ist die Traglastkurve einer rauen Oberfläche im wesentlichen S-förmig.

Fig. 70 zeigt entsprechend voriger Erläuterungen eine Traglastkurve, die eine sehr glatte Oberfläche charakterisiert. Die Traglastkurve bildet eine nahezu senkrechte Linie.

Die Fig. 71 bis 77 zeigen jeweils eine Traglastkurve eines Ausschnitts einer erfindungsgemäßer Bauprofilleisten. Deren zunehmende Rauheit lässt sich an der zunehmenden S-Förmigkeit und der einhergehenden breiten Verteilung entlang der z-Achse ablesen.

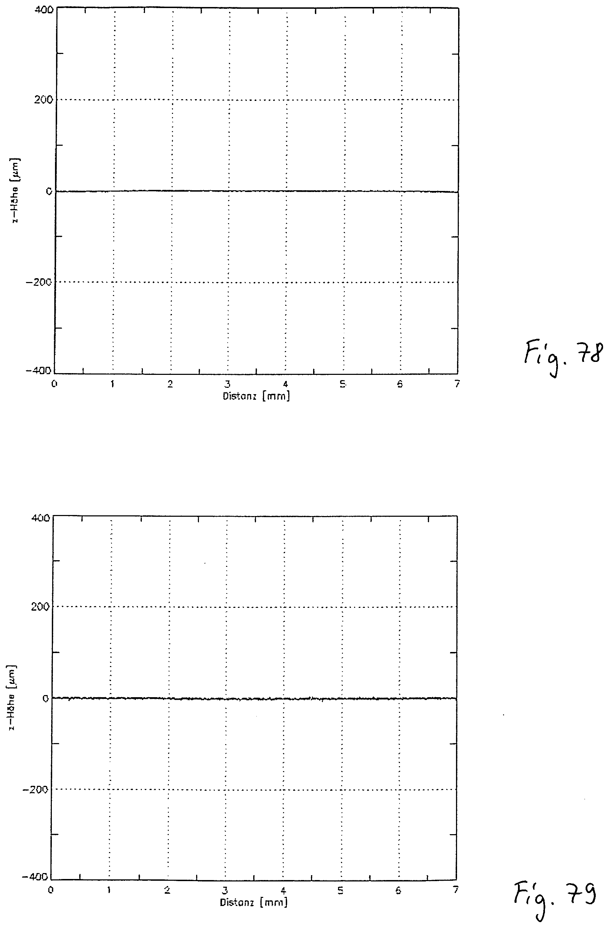

Die Figuren 78 bis 85 zeigen jeweils eine ungefilterte Messkurve einer Linearmessung eines Streckenabschnitts der Proben 0 bis 7 mit Maßangaben. In x-Richtung ist die Messstrecke von 7 mm angegeben. Die Linearmessung ist mit einem Messpunktabstand von 2 µm aufgenommen. Das ergibt insgesamt 3500 Messpunkte je Probe. In z-Richtung ist die Höhenmessskala mit einer einheitlichen Skalierungen der z-Werte von maximal +/- 400 µm angegeben. Die Topographie der Proben unterscheidet sich erheblich.

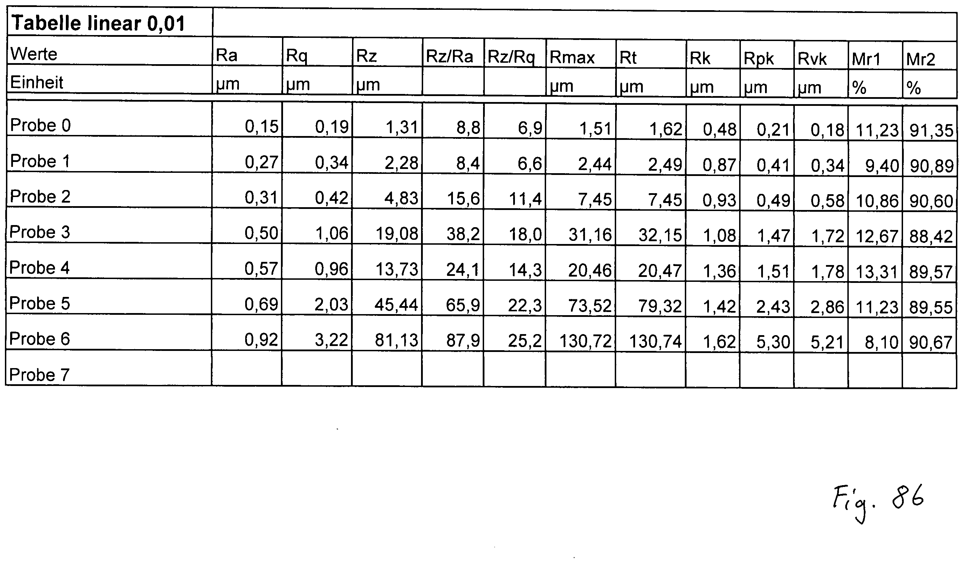

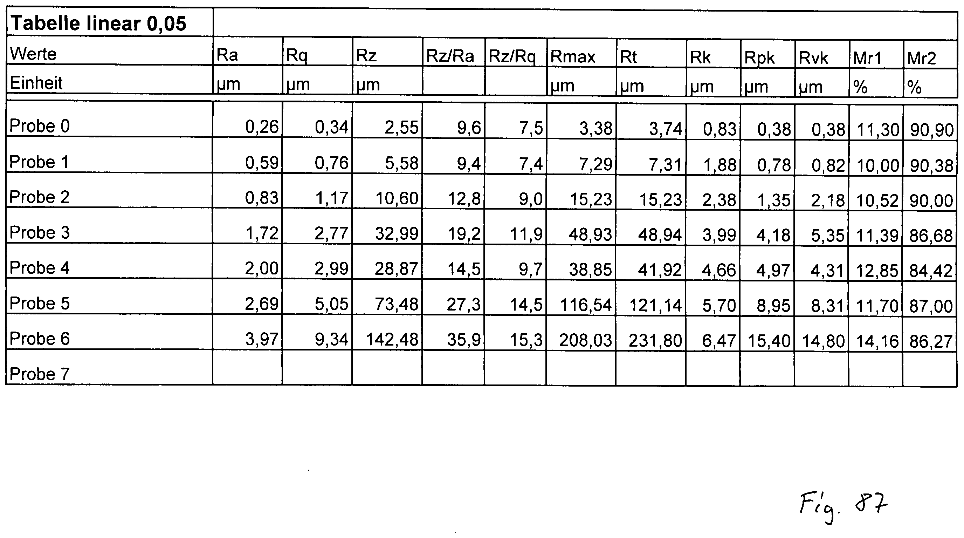

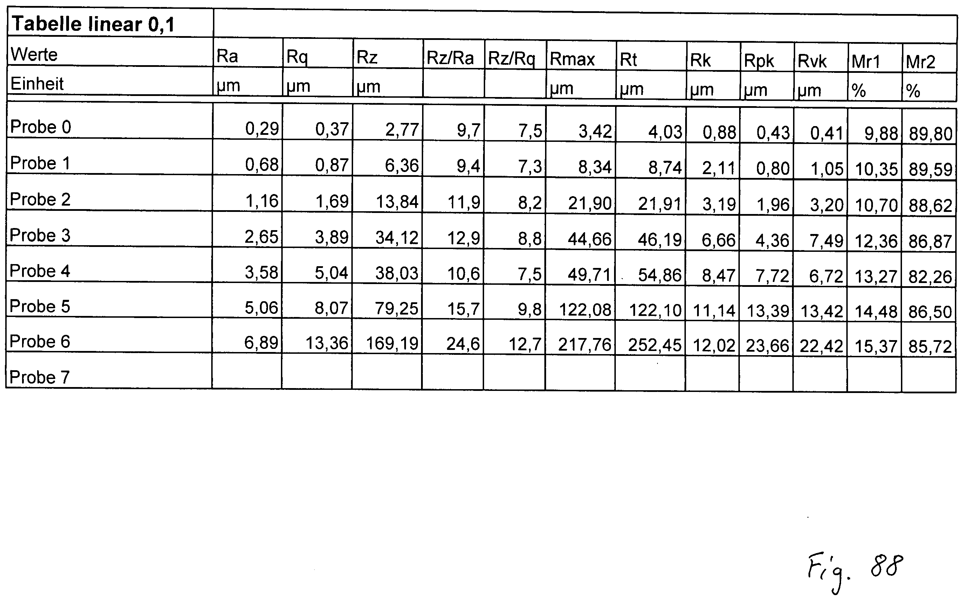

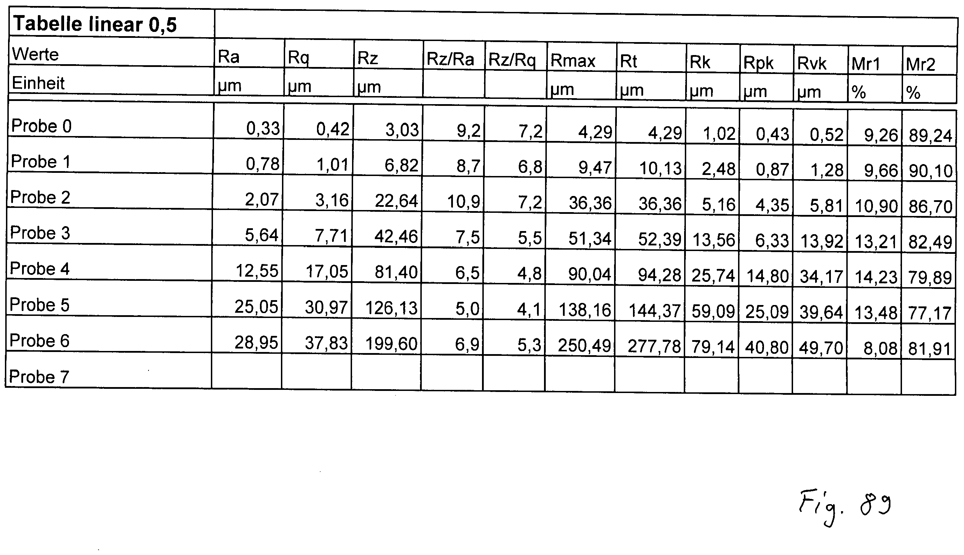

Die Figuren 86 bis 89 zeigen Tabellen mit den gefilterten Rauheitswerten der Linearmessungen analog der Figuren 78 bis 85 der Proben 0 bis 7. In der Figur 86 ist der Lc-Wert zur Filterung der Rauheit gleich 0,01 mm. In der Figur 87 ist der Lc-Wert zur Filterung der Rauheit gleich 0,05 mm. In der Figur 88 ist der Lc-Wert zur Filterung der Rauheit gleich 0,10 mm. In der Figur 89 ist der Lc-Wert zur Filterung der Rauheit gleich 0,50 mm. Die Rauheit nimmt von der glatten Oberfläche der Probe 0 zu der sehr rauen Oberfläche der Probe 7 hin stetig zu.

Nachfolgend werden die Unterschiede der Proben anhand der Figuren erläutert.

Die Probe 0 stellt einen im wesentlichen flachen Ausschnitt einer Bauprofilleiste aus dem Stand der Technik bereit. Die Oberfläche ist nicht strukturiert oder bearbeitet. Diese Oberfläche wird marktüblich als glatt bezeichnet. Eine Oberfläche dieser Qualität entsteht üblicherweise an der Oberfläche bei der Herstellung extrudierter Bauprofilleisten aus Kunststoff.

Die Proben 1 bis 7 stellen jeweils einen im wesentlichen flachen Ausschnitt einer erfindungsgemäßen Bauprofilleiste bereit. Die Oberfläche ist strukturiert. Diese Oberflächen werden als rau bezeichnet. Die Rauhigkeit nimmt von der Probe 1 zur Probe 7 stetig zu.

Probe 1 und 2 weisen eine der Rauhigkeit überlagerte wellige Struktur von im wesentlichen +/- 20 µm auf. Es sind kleine Vertiefungen erkennbar, die bei Probe 2 deutlich ausgeprägter sind. Diese Rauhigkeitsart ist für den Auftrag von bildsamem Material wie Lacken, Farben, Grundierungen und Lasuren sehr gut geeignet. Nach dem Materialauftrag sind die Vertiefungen durch das bildsame Material aufgefüllt und die Oberflächen erscheinen optisch glatt.

Die Probe 3 weist im Messbereich ebenfalls eine der Rauhigkeit überlagerte wellige Struktur von rund +/- 20 µm auf. Die Rauhigkeit ist jedoch deutlich intensiver ausgeprägt mit rauen Strukturen von im wesentlichen +/- 35 µm. Dadurch tritt die Welligkeit im Vergleich zu den rauen Strukturen mehr in den Hintergrund. Gleichzeitig ist die Probe 3 im Querschnitt leicht schüsselförmig. In der Draufsicht zeichnen sich bereits deutlich Hinterschneidungen ab. Diese Rauhigkeitsart ist ebenfalls für den Auftrag von bildsamem Material wie Lacken, Farben, Grundierungen und Lasuren sehr gut geeignet. Nach dem Materialauftrag sind, abhängig von der maximalen Korngröße und den Sieblinien des bildsamen Materials, die Vertiefungen durch das bildsame Material ganz oder teilweise aufgefüllt und die Oberflächen erscheinen optisch glatt oder leicht strukturiert. Ist das bildsame Material ein feinkörniger Putz oder ein Spachtel, so sind nach dem Materialauftrag die Vertiefungen durch das bildsame Material aufgefüllt und die Oberflächen erscheinen optisch glatt.

Die Proben 4 bis 7 weisen im Messbereich weder eine wellige noch eine schüsselförmige Struktur auf.

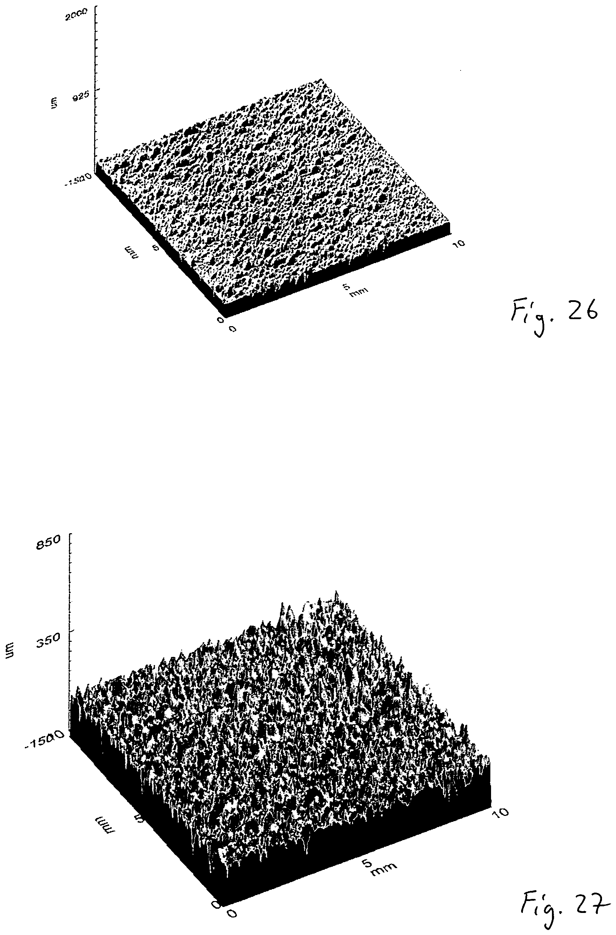

Bei der Probe 4 ist die Rauhigkeit noch intensiver ausgeprägt mit rauen Strukturen von im wesentlichen +/- 60 µm. In der Draufsicht und in der Figur 26 zeichnen sich sehr klar eine Vielzahl von Hinterschneidungen und schuppigen Strukturen ab. Diese Rauhigkeitsart ist sehr gut für den Auftrag von bildsamem Material wie feinkörniger Putz oder Spachtel geeignet. Nach dem Materialauftrag sind die Vertiefungen durch das bildsame Material aufgefüllt und die Oberflächen erscheinen optisch glatt. Falls hier bildsames Material wie Lacke, Farben, Grundierungen und Lasuren verwendet wird, werden die Vertiefungen durch das bildsame Material nur teilweise aufgefüllt und die Oberflächen erscheinen zumindest leicht strukturiert.

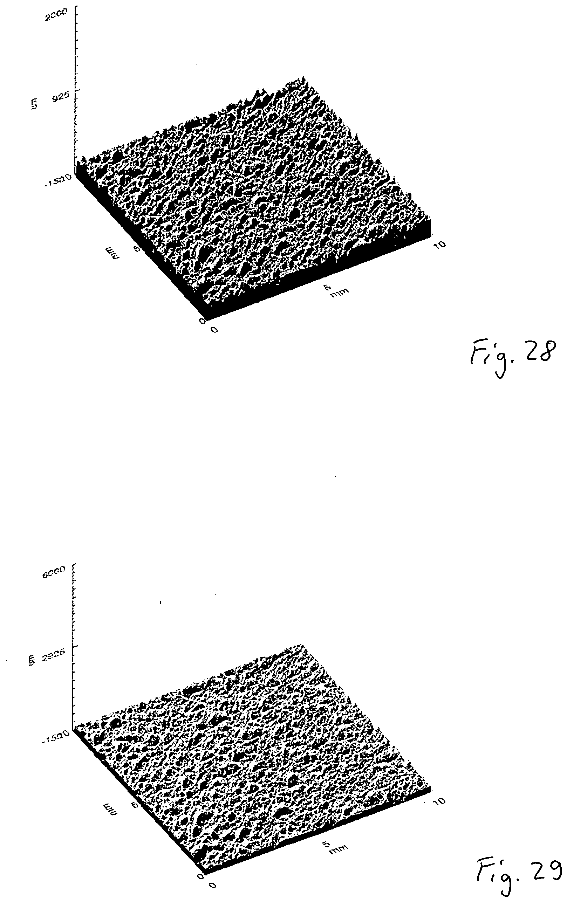

Bei der Probe 5 ist die Rauhigkeit noch stärker ausgeprägt mit rauen Strukturen von im wesentlichen +/- 90 µm. In der Draufsicht und in den Figuren 28 und 29 zeichnen sich sehr klar eine Vielzahl sehr kräftiger Hinterschneidungen und schuppiger Strukturen ab. Diese Rauhigkeitsart ist, wie bei der Probe 4, sehr gut für den Auftrag von bildsamen Material wie feinkörniger Putz oder Spachtel geeignet. Auch mittelkörnige Putze finden guten Halt. Nach dem Materialauftrag sind, abhängig von der maximalen Korngröße und den Sieblinien des bildsamen Materials, die Vertiefungen durch das bildsame Material ganz oder teilweise aufgefüllt und die Oberflächen erscheinen optisch glatt oder leicht strukturiert. Ist das bildsame Material beispielsweise ein mittelkörniger Putz, so sind nach dem Materialauftrag die Vertiefungen durch das bildsame Material aufgefüllt und die Oberflächen erscheinen optisch nur durch das bildsame Material strukturiert.

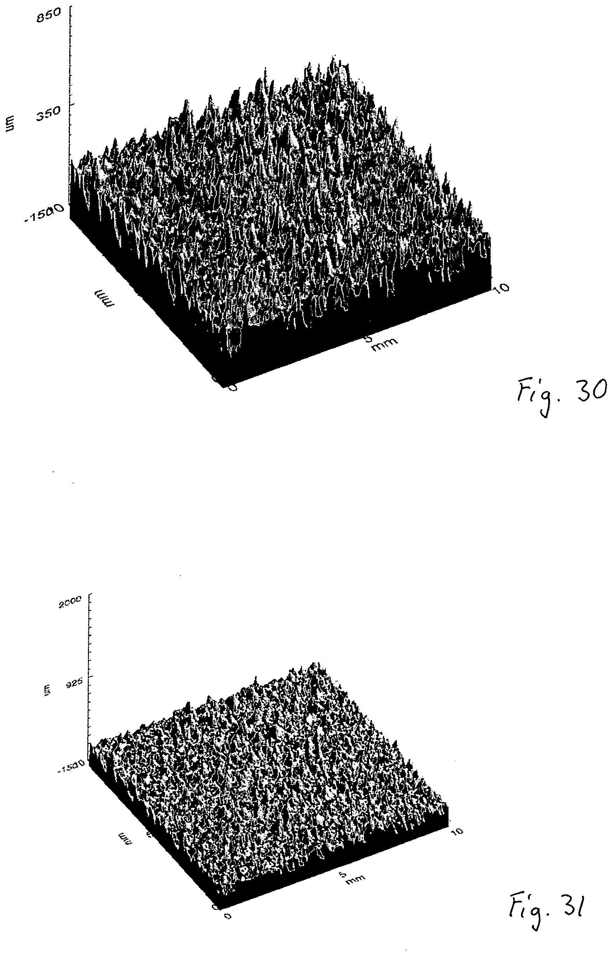

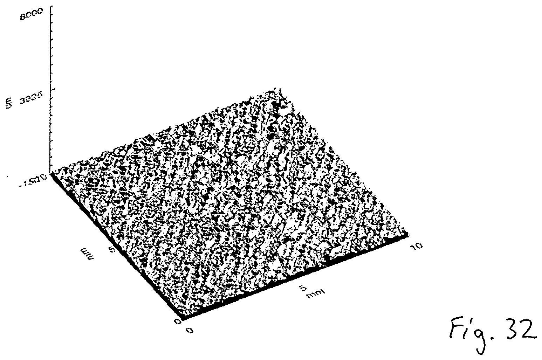

Bei der Probe 6 ist die Rauhigkeit sehr intensiv mit rauen Strukturen von im wesentlichen +/- 130 µm. In der Draufsicht und in den Figuren 31 und 32 zeichnen sich noch großformatigere Hinterschneidungen und schuppige Strukturen ab. Diese Rauhigkeitsart ist bereits für den Auftrag von bildsamem Material wie grobkörnigem Putz geeignet. Auch mittelkörnige Putze finden hervorragenden Halt. Nach dem Materialauftrag sind, abhängig von der maximalen Korngröße und den Sieblinien des bildsamen Materials, die Vertiefungen durch das bildsame Material ganz oder teilweise aufgefüllt und die Oberflächen erscheinen nur durch das bildsame Material strukturiert. Ist das bildsame Material jedoch feinkörniger Putz oder Spachtel, so ist zu erwarten, dass nach dem Materialauftrag die Vertiefungen durch das bildsame Material nur teilweise aufgefüllt sind und die Oberflächen zumindest leicht strukturiert erscheinen. Falls hier bildsames Material wie Lacke, Farben, Grundierungen und Lasuren verwendet wird, werden im wesentlichen nur die Oberflächen der Vertiefungen durch das bildsame Material bedeckt und die nach der Verarbeitung der Bauprofilleiste sichtbare Oberfläche erscheint entsprechend der Rauhigkeit strukturiert.

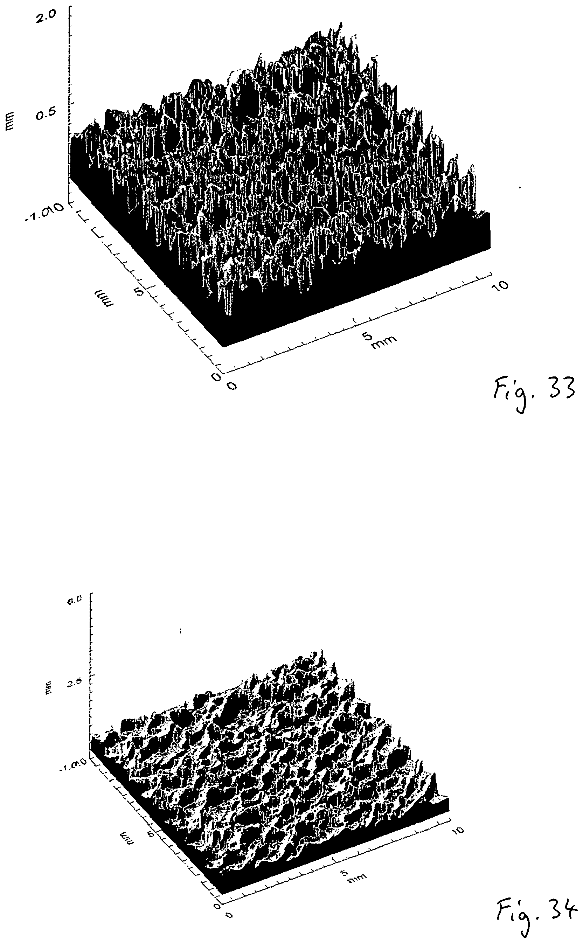

Bei der Probe 7 ist die Rauhigkeit noch mal deutlich erhöht mit rauen Strukturen von im wesentlichen +/- 300 µm. In der Draufsicht und in den Figuren 33 und 34 zeichnen sich für das bloße Auge erkennbare, stark zerklüftete Oberflächenstrukturen ab. Eine schuppige Struktur und eine Vielzahl kräftiger Hinterschneidungen ist vor allem durch die in Figur 33 erkennbaren senkrechten Linien der Messpunkte ablesbar. Diese Rauhigkeitsart ist bestens für den Auftrag von bildsamem Material wie grobkörnigen Putz geeignet. Auch mittelkörnige Putze finden hier weiterhin hervorragenden Halt. Nach dem Materialauftrag sind, abhängig von der maximalen Korngröße und den Sieblinien des bildsamen Materials, die Vertiefungen durch das bildsame Material ganz oder teilweise aufgefüllt und die Oberflächen erscheinen nur durch das bildsame Material strukturiert. Ist das bildsame Material jedoch feinkörniger Putz oder Spachtel, so ist zu erwarten, dass nach dem Materialauftrag die Vertiefungen durch das bildsame Material nur teilweise aufgefüllt sind und die Oberflächen strukturiert erscheinen. Falls hier bildsames Material wie Lacke, Farben, Grundierungen und Lasuren verwendet wird, werden im wesentlichen nur die Oberflächen der Vertiefungen durch das bildsame Material bedeckt und die nach der Verarbeitung der Bauprofilleiste sichtbare Oberfläche erscheint entsprechend der Rauhigkeit strukturiert.

Die Probe 8 stellt einen im wesentlichen geometrisch einheitlich strukturierten Ausschnitt einer Bauprofilleiste aus dem Stand der Technik bereit. Die Oberfläche ist entsprechend der Lehre der DE 195 39 527 C2, der DE 197 09 428 A1 und der DE 200 08 712 U1 mittels Rändelung nach der Extrusion bearbeitet. Die Probe 8 ist Bestandteil einer Anputzleiste für Fensterstöcke, Türstöcke oder dergleichen der Firma APU AG, CH - 8200 Schaffhausen, die mit der DE 197 09 428 A1 bekannt wurde. Rändelräder und die damit hergestellten Oberflächen weisen keine Hinterschneidungen oder schuppige Strukturen auf. Das Raster der Vertiefungen ist, ablesbar in Figur 9, in Richtung der x-Achse rund 0,7 mm und in Richtung der y-Achse rund 1,0 mm. Die Rillenausbildung in Längsrichtung der Bauprofilleiste weist in Richtung der z-Achse eine Tiefe von rund 0,3 mm auf. Die Oberfläche weist im wesentlichen einheitliche geometrische Formen und damit überwiegend Welligkeit auf. Nach Abzug dieser Welligkeit oder alternativ nach Messung der Oberfläche der Vertiefungen ist diese Oberfläche entsprechend der Probe 1 dem Stand der Technik nach als glatt zu bezeichnen. Diese Oberfläche ist zur Verbindung mit einer WDVS (Wärmedämmverbundsystem)-Spachtelmasse vorgesehen. Diese weisen sehr hohe Kleberanteile wie beispielsweise Acrylate auf, um für die vorgesehene Anwendung überhaupt geeignet zu sein. Nach der Verarbeitung ist dieser Ausschnitt der Bauprofilleiste vollständig mit Putz abgedeckt. Es ist erforderlich, dass die Putzschicht dicker ist als das Maß der Vertiefungen. Durch diese Maßnahme ist die Struktur der Vertiefungen an der Putzoberfläche nicht mehr erkennbar. Für bildsames Material wie Lacke, Farben, Grundierungen und Lasuren ist diese Oberflächenstruktur ungeeignet, da im wesentlichen nur die Oberflächen der Vertiefungen durch das bildsame Material bedeckt werden und die nach der Verarbeitung der Bauprofilleiste sichtbare Oberfläche unterschiedlich zu der benachbarten Gebäudeoberfläche ist. Die regelmäßige geometrische Struktur ist als sichtbare Oberfläche ebenfalls optisch unattraktiv.

Die Probe 9 stellt einen Ausschnitt einer Bauprofilleiste aus dem Stand der Technik gemäß der Probe 0 bereit. Unterschiedlich dazu weist die Probe 9 wellenförmig geformte Stege auf. Diese sind über die Länge der Profilleiste im Querschnitt gleichbleibend. Das Raster der Stege ist, ablesbar in Figur 10, in Richtung der x-Achse etwas mehr als 2 mm. Die Stege weisen in Richtung der z-Achse eine Tiefe von rund 0,8 mm auf. Die Oberfläche ist ebenfalls nicht strukturiert oder bearbeitet und wird üblicherweise als glatt bezeichnet.

Die Proben 10 bis 12 stellen jeweils Ausschnitte einer erfindungsgemäßen Bauprofilleiste bereit. Die Querschnittsflächen weisen analog zur Probe 9 wellenförmig geformte Stege auf. Die Oberflächen sind hier jedoch strukturiert und weisen klar messbare Rauheitswerte auf. Die Rauhigkeit nimmt von der Probe 10 zur Probe 12 stetig zu. Diese Oberflächen sind entsprechend ihrer Rauheitswerte analog den Proben 1 bis 7 zur Verbindung mit bildsamem Material geeignet.

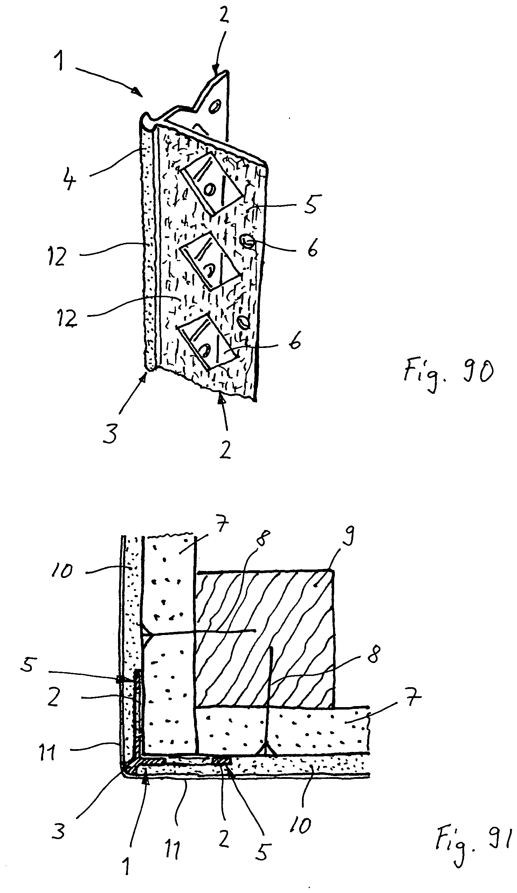

Die Figuren 90 bis 136 zeigen Ausführungsbeispiele erfindungsgemäßer Bauprofilleisten.

Eine Bauprofilleiste 1 (siehe Fig. 90 und 91) ist als extrudiertes Kunststoff-Winkelprofil gebildet und enthält zwei Schenkel 2, die von einem zentralen Eckteil 3 ausgehend rechtwinklig zueinander verlaufen. Das Eckteil 3 weist einen etwa viertelkreisförmigen Querschnitt auf, ragt über die beiden Schenkel 2 hinaus und enthält an seiner gerundeten Außenfläche 4 eine raue Oberfläche. Die nach außen gerichteten Außenflächen 5 der beiden Schenkel 2 enthalten ebenfalls raue Oberflächen sowie Öffnungen 6, beispielsweise größere quadratische und kleinere runde Ausstanzungen.

In ihrer Einbaulage (Fig. 91) ist die Bauprofilleiste 1 an einer von zwei Trockenbauplatten 7, z. B. Gipskartonplatten, gebildeten Außenecke einer Trockenbaukonstruktion befestigt. Die beiden Trockenbauplatten 7 sind mittels Befestigungselementen 8 wie Schrauben oder dergleichen an einem insbesondere aus Holz hergestellten Träger 9 befestigt. Beim Aufbringen einer Schicht von Spachtelmasse 10 auf die Trockenbauplatten 7 dient das Eckteil 3 der Bauprofilleiste 1 jeweils als Abzugskante für ein Spachtelwerkzeug. Die Spachtelmasse 10 überdeckt auch die Schenkel 2 der Bauprofilleiste 1 und dringt durch die darin gebildeten Öffnungen 6 bis zu den Trockenbauplatten 7 vor, wodurch eine gute Haftung der Spachtelmasse 10 am Untergrund auch im Bereich der Bauprofilleiste 1 erzielt wird. Die Oberflächen der Außenflächen 5 der Schenkel 2 weisen eine solche Rauhigkeit auf, dass sie eine optimale Haftgrundlage für die Spachtelmasse 10 bilden im Vergleich mit einer ansonsten glatten und wenig haftfreundlichen Kunststoff-Oberfläche bekannter Bauprofilleisten.

Die gerundete Außenfläche 4 des Eckteils 3 enthält eine Oberfläche mit einer solchen Rauhigkeit, dass Lack oder Farbe 11 als auf der Schicht aus Spachtelschicht 10 aufgebrachte Deckschicht auf dem Eckteil 3 der Bauprofilleiste 1 dauerhaft haftet.

Die Rauhigkeit der jeweiligen Oberflächen wird von einer Verankerungsstruktur 12 für das bildsame Material wie Putz oder Lack bzw. Farbe bereitgestellt, die in oder an der Oberfläche des Kunststoffmaterials der Bauprofilleiste 1 gebildet ist und eingeformte Vertiefungen wie auch Erhöhungen in unregelmäßiger Gestalt und Struktur aufweist. Die Verankerungsstruktur 12 mit den Vertiefungen bzw. Erhöhungen ist in den Ausführungen zu den Fig. 1 bis 89 näher erläutert.

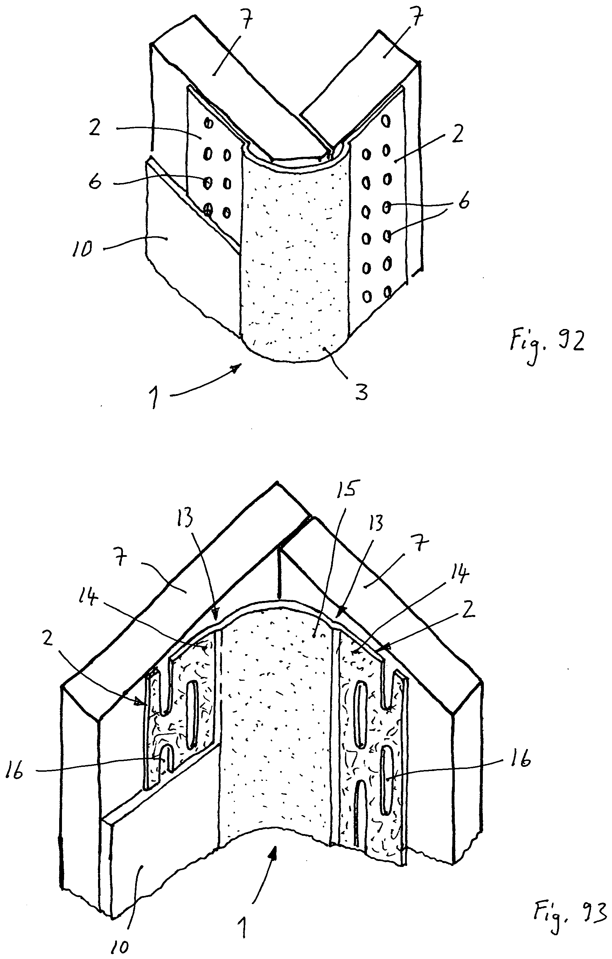

Die Bauprofilleiste 1 gemäß Fig. 92 ist gleichfalls als extrudiertes Kunststoff-Winkelprofil für eine Außenecke gebildet und enthält zwei Schenkel 2, die von einem zentralen Eckteil 3 ausgehend rechtwinklig zueinander verlaufen. Das Eckteil 3 ist als zylinderschaliger Kreisbogenabschnitt gebildet und wölbt sich über den jeweiligen Schenkel 2 nach außen hinaus, so dass es für jeden Schenkel 2 eine Abzugskante für die Spachtelmasse 10 bildet. Die Höhe der Wölbung gegenüber dem Schenkel 2 gibt die Dicke der aufzutragenden Schicht an Spachtelmasse 10 vor. Die Bauprofilleiste 1 ist an ihren Schenkeln 2 durch Spachtelmasse, Nägel, Schrauben oder Klammern an den Trockenbauplatten 7 befestigt.

Die Schenkel 2 enthalten ein Vielzahl von Öffnungen 6 für den Durchtritt von Spachtelmasse 10, weisen jedoch alternativ keine spezielle raue Oberfläche auf. Die Außenfläche 4 des Eckteils 3 ist hingegen mit einer rauen Oberfläche gebildet und weist somit einen Haftgrund für einen Auftrag von Lack oder Farbe (nicht dargestellt) auf den sichtseitigen Bereich der Bauprofilleiste 1 auf.

Die Bauprofilleiste 1 gemäß Fig. 93 ist ein extrudiertes Kunststoff-Winkelprofil für eine von zwei Trockenbauplatten 7 gebildete Innenecke und enthält zwei Schenkel 2, die von einem zentralen Eckteil 3 ausgehend rechtwinklig zueinander verlaufen. Das Eckteil 3 ist als zylinderschaliger Kreisbogenabschnitt gebildet und gegenüber den beiden Schenkel 2 an einer Stufe 13 jeweils einwärts versetzt geformt, so dass der jeweilige Höhenunterschied zwischen der Innenfläche 14 der Schenkel 2 und der Innenfläche 15 des Eckteils 3 die Dicke der Schicht einer aufzutragenden Spachtelmasse 10 bestimmt. Die an den jeweiligen Schenkel 2 angrenzende Innenfläche 15 des Eckteils 3 bildet eine Abzugskante oder Abzugsfläche für ein zum Aufbringen der Spachtelmasse 10 verwendbares Spachtelwerkzeug. Sowohl das Eckteil 4 wie auch die Schenkel 2 weisen an ihren Innenseiten 14 bzw. 15 raue Oberflächen auf, wobei auch hier die Schenkel 2 bevorzugt eine gröbere Rauhigkeit aufweisen wie das Eckteil 3, das zusammen mit der Spachtelmasse 10 mit Lack oder Farbe überstrichen wird. Die Schenkel 2 sind mit Längsöffnungen 16 für den Durchtritt von Spachtelmasse 10 versehen.

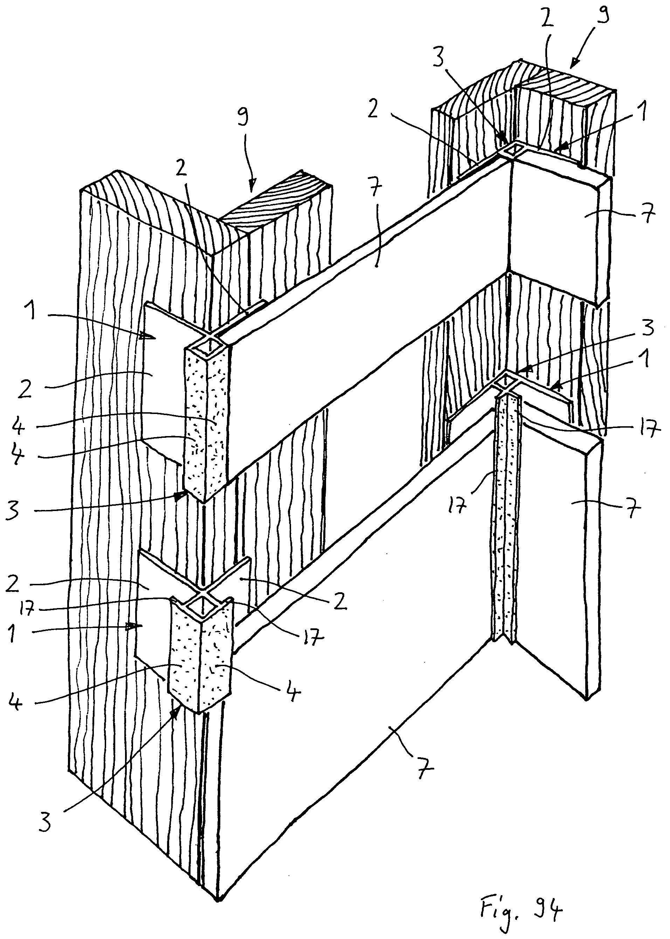

Fig. 94 zeigt einen Ausschnitt einer Trockenbaufassade mit einer eine Außenecke und eine Innenecke bildenden Trägerkonstruktion 9, z. B. einer Holzunterkonstruktion. Eine als extrudiertes Kunststoff-Winkelprofil gebildete Bauprofilleiste 1 ist an der Außenecke wie auch an der Innenecke angebracht, wobei in der Fig. 94 jeweils zwei Abschnitte gleichartiger, jedoch unterschiedlich geformter Bauprofilleisten 1 vertikal übereinander dargestellt sind. Die an der Außenecke befestigte obere Bauprofilleiste 1 enthält zwei glattflächige Schenkel 2, wohingegen das im Querschnitt quadratisch gebildete zentrale Eckteil 3 an seinen beiden sichtbaren Außenflächen 4 eine raue Oberfläche aufweist. Eine Trockenbauplatte 7 ist auf dem Schenkel 2 befestigt und grenzt an das Eckteil 3 an. Die raue Oberfläche der sichtbaren Außenflächen 4 des Eckteils 3 dient als Haftgrund, wenn Lack oder Farbe auf die Trockenbauplatte 7 und die Bauprofilleiste 1 bzw. das Eckteil 3 aufgetragen wird.

Bei der an der Außenecke angeordneten unteren Bauprofilleiste 1 weist jede der beiden sichtseitigen Außenflächen 4 des Eckteils 3 einen verlängerten Außenschenkel 17 auf, der parallel zum innenliegenden Schenkel 2 verläuft und den Rand der Trockenbauplatte 7 übergreift. Die im Vergleich zur vorherigen Bauprofilleiste 1 größere Außenfläche 4 des Eckteils 3 ist ebenfalls mit einer rauen Oberfläche zum besseren Anhaften von Lack oder Farbe gebildet.

Die an der Innenecke befestigte obere Bauprofilleiste 1 enthält ein zentrales Eckteil 3 und zwei Schenkel 2, die in Einbaulage von zwei Trockenbauplatten 7 abgedeckt und somit nicht mehr sichtbar sind. Die Oberflächen des Eckteils 3 und der Schenkel 2 benötigen daher nicht die durch die Verankerungsstruktur gebildete Rauhigkeit für auf sichtseitige Flächen aufzubringendes bildsames Material, können jedoch eine solche Rauhigkeit als Haftgrund für eine Kleb- oder Spachtelmasse beim Anbringen der Trockenbauplatten 7 aufweisen.

Die an der Innenecke befestigte untere Bauprofilleiste 1 enthält abweichend von der oberen Bauprofilleiste 1 am zentralen Eckteil 3 innenseitig zwei zusätzliche Schenkel 17, die jeweils den Rand der entsprechenden Trockenbauplatte 7 übergreifen.

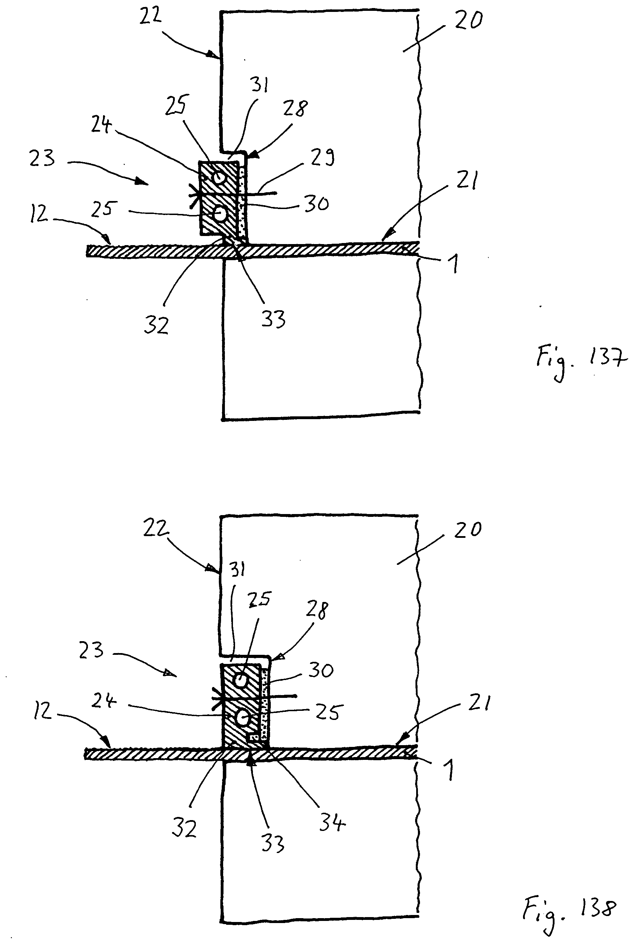

Eine Vorrichtung zum Herstellen einer erfindungsgemäßen Bauprofilleiste 1 ist in den Fig. 137 bis 142 in unterschiedlichen Ausführungsbeispielen dargestellt. Ein Extrusionswerkzeug 20 (siehe Fig. 137) enthält einen Extrusionskanal 21, der einen Querschnitt einer zu extrudierenden und sich durch den Extrusionskanal 21 bewegenden Kunststoff-Bauprofilleiste 1 aufweist und an der Stirnseite 22 des Extrusionswerkzeugs 20 mündet.

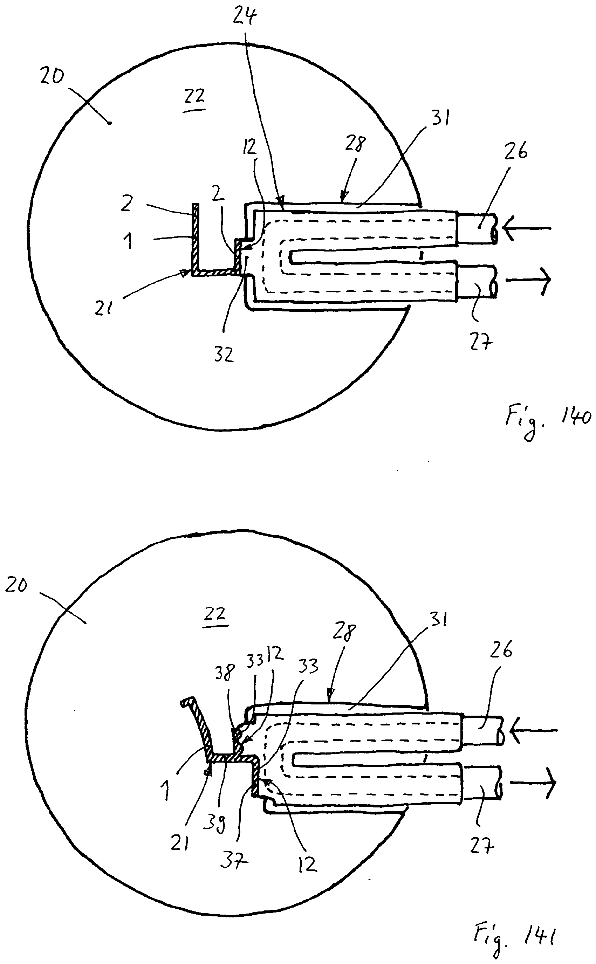

Eine Kühleinrichtung 23 weist ein Kühlteil 24 mit zumindest einem Kühlkanal 25 auf, der über einen Zulauf 26 und einen Ablauf 27 (entsprechend dem Ausführungsbeispiel der Fig. 140 oder 141) an eine Kühlflüssigkeitsversorgung angeschlossen ist. Das Kühlteil 24 besteht aus wärme- bzw. kälteleitfähigem Material wie z. B. Rotguß und ist an der Stirnseite 22 des Extrusionswerkzeugs 20 in einer Ausnehmung 28 teilweise versenkt und z. B. durch eine Verschraubung 29 befestigt, wobei eine wärmedämmende Trennlage 30 zumindest an der Befestigungsstelle zwischen dem Kühlteil 24 und der Stirnseite 22 des Extrusionswerkzeugs 20 angeordnet ist und grundsätzlich ein wärme- bzw. kälteleitender Kontakt zwischen dem Kühlteil 24 und dem Extrusionswerkzeug 20 durch entsprechende Spalte oder Abstände 31 vermieden wird.

Das Kühlteil 24 weist einen Kontaktbereich 32 auf, der am stirnseitigen Austritt des Extrusionskanals 21 aus dem Extrusionswerkzeug 20 derart angeordnet ist, dass er eine seitliche Kühl- oder Kontaktfläche 33 für die daran vorbeigeführte, noch nicht ausgehärtete extrudierte Bauprofilleiste 1 bildet. Die Kontaktfläche 33, die in den Beispielen der Fig. 137 und 138 eine obere ebene Fläche der Bauprofilleiste 1 kontaktiert bzw. bildet, stellt somit eine Fortsetzung einer der Seitenwände des Extrusionskanals 21 dar und kann aufgrund der Kühlungsmöglichkeit eine gegenüber der Temperatur des Extrusionswerkzeugs 20 reduzierte Temperatur aufweisen.

Die Extrusionstemperatur beträgt, abhängig vom Kunststoffmaterial, z. B. 155°C und die Temperatur des Kühlteils 24 kann auf etwa 80°C bis 130°C gekühlt werden. Die Länge der kühlbaren Kontaktfläche 33 in Bewegungsrichtung der Bauprofilleiste 1 beträgt z. B. 10 mm und die Vorschubgeschwindigkeit der Bauprofilleiste 1 beträgt z. B. 8 bis 15 m/min.

Durch die einseitige Abkühlung des Kunststoffes der Bauprofilleiste 1 an der Kontaktfläche 33 des Kühlteils 24 wird die erfindungsgemäße Verankerungsstruktur 12 mit den unregelmäßig gebildeten Vertiefungen hergestellt, wobei durch Variation der genannten Parameter die Rauhigkeit der Verankerungsstruktur 12 bzw. der Oberfläche der Bauprofilleiste 1 unterschiedlich fein oder grob hergestellt werden kann. Die Verankerungsstruktur 12 bzw. die raue Oberfläche wird somit durch einen Temperaturgradienten durch die Bauprofilleiste 1 quer zu ihrer Bewegungsrichtung im Extrusionswerkzeug 20 und damit durch unterschiedliche Temperaturen erzeugt. Eine Variation der Druckverhältnisse bzw. des Materialflusses innerhalb des Extrusionswerkzeugs beeinflusst zusätzlich die Formung der Rauhigkeit. Geringerer Materialfluss bzw. weniger Materialdruck erhöht die Rauhigkeit. Diese Technik lässt sich auch entlang der Breite einer Kühlfläche variieren. Auch die Länge einer Kühl- oder Kontaktfläche 33 oder der Querschnitt der Verbindung zwischen Kühlkreislauf und Kühlfläche (siehe Figur 137 und 138) lässt sich entlang der Breite einer Kühlfläche variieren, wodurch die Rauhigkeit der Verankerungsstruktur 12 gezielt beeinflusst werden kann.

Bei der in der Fig. 138 dargestellten Variante der Kühleinrichtung 23 ist das Kühlteil 24 abweichend von Fig. 137 in der Ausnehmung 28 an der Stirnseite 22 des Extrusionswerkzeugs 20 vollständig versenkt angeordnet, so dass seine Außenseite mit der Stirnseite 22 des Extrusionswerkzeugs 20 in etwa plan abschließt. Der Kontaktbereich 32 ist durch eine Ausnehmung oder Nut 34 teilweise von dem Kühlteil 24 getrennt. Die Nut 34 reduziert denjenigen Materialquerschnitt des Kühlteils 24, über den die Kühlleistung auf den Kontaktbereich 32 übertragen wird bzw. die von der Bauprofilleiste 1 aufgenommene Wärme abgeführt wird. Durch die Lage der Nut 34 zur Kontaktfläche 33 und durch ihre Tiefe kann somit die Wärme- bzw. Kälteübertragung beeinflusst und festgelegt werden und damit die Rauhigkeit der Oberfläche der Bauprofilleiste 1 unterschiedlich gestaltet werden. Im Ausführungsbeispiel gemäß Fig. 138 ist die Nut 34 an der inneren Rückseite des Kühlteils 24 gebildet, sie kann aber auch z. B. von der Vorderseite gebildet sein.

In den Figuren 137 bis 142 tritt das Kühlteil 24 in direkten Kontakt mit dem Kunststoffprofil 1 und stellt damit zumindest einen Anteil des formgebenden Bereichs des Extrusionswerkzeugs 20 bereit. Alternativ kann der formgebende Bereich des Extrusionswerkzeugs 20 einheitlich gebildet sein. Die Kühlung erfolgt dann beispielsweise mittels eines integrierten oder benachbart angeordneten Kühlteils. Bei einem benachbart angeordneten Kühlteil ist die Verbindung zwischen Kühlteil und Extrusionswerkzeug 20 beispielsweise mittels Verschweißen oder Pressen oder dergleichen hergestellt.

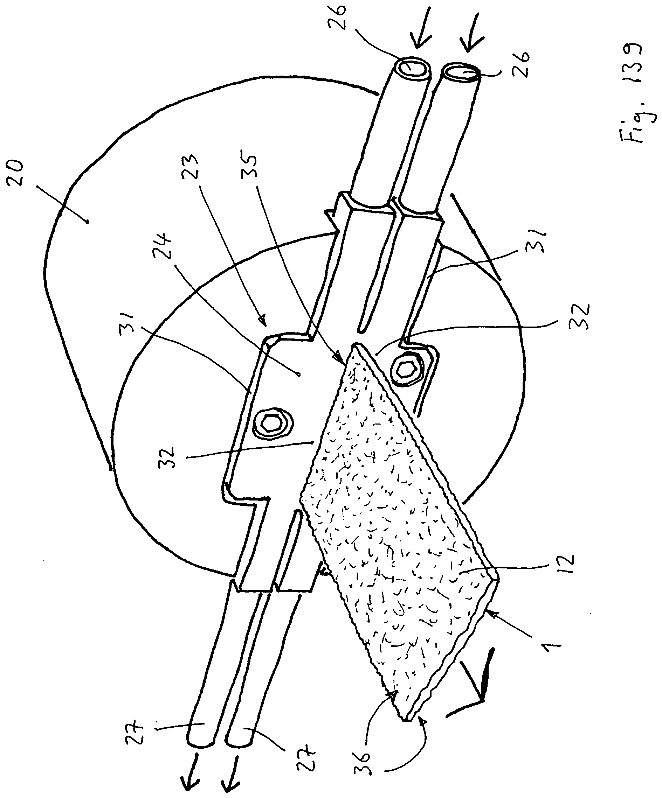

Bei dem Ausführungsbeispiel gemäß Fig. 139 enthält das Kühlteil 24 eine schlitzförmige Öffnung 35, die deckungsgleich vor der Mündung des Extrusionskanals 21 als dessen Verlängerung angeordnet ist und durch die das noch plastische Kunststoffmaterial der Bauprofilleiste 1 gepresst wird. Das Kühlteil 24 weist an der Öffnung 35 zwei sich gegenüberliegende Kontaktbereiche 32 auf, die jeweils durch einen eigenen Kühlkreislauf mit den Zuläufen 26 und den Abläufen 27 gekühlt werden. Damit können an der Bauprofilleiste 1 die beiden sich gegenüberliegenden Flachseiten 36 mit einer jeweiligen Verankerungsstruktur 12 versehen werden. Die Kühleinrichtung 23 bzw. das Kühlteil 24 ist gemäß den vorstehend beschriebenen Beispielen nur an seinem zentralen Teil am Extrusionswerkzeug 20 über eine dämmende Trennlage 30 befestigt, während ansonsten ein thermisch isolierender bzw. trennender Abstand oder Spalt 31 zwischen dem Extrusionswerkzeug 20 und der Kühleinrichtung 23 bzw. dem Kühlteil 24 vorhanden ist.

Fig. 140 zeigt ein Ausführungsbeispiel, bei dem die Kühleinrichtung 23 bzw. das Kühlteil 24 in einer seitlich offenen Vertiefung oder Ausnehmung 28 an der Stirnseite 22 des Extrusionswerkzeugs 20 angeordnet ist und der Zulauf 26 und der Ablauf 27 ebenfalls seitlich angeordnet sind. Die Bauprofilleiste 1 bzw. der Extrusionskanal 21 ist im Querschnitt U-förmig mit zwei Schenkeln 2, wobei der gemäß Fig. 140 rechte Schenkel 2 beispielsweise kürzer ist als der linke Schenkel 2. Das zentrale Kühlteil 24 weist einen vorragenden Kontaktbereich 32 auf, der an der Außenfläche des rechten Schenkels 2 der Bauprofilleiste 1 angrenzt, so dass der rechte Schenkel 2 mit einer Verankerungsstruktur 12 bzw. einer rauen Oberfläche gebildet wird, wenn die Kühleinrichtung 23 auf eine entsprechende Temperatur gekühlt wird.

Bei dem Ausführungsbeispiel der Fig. 141, das eine Abwandlung der Vorrichtung der Fig. 140 darstellt, weist der Extrusionskanal 21 bzw. die zu extrudierende Bauprofilleiste 1 einen rechten äußeren Profilschenkel 37 und einen zurückgesetzten Einputzschenkel 38 auf. Der Kontaktbereich 32 des Kühlteils 24 weist dementsprechend eine bezüglich der Bauprofilleiste 1 bzw. dem entsprechenden Extrusionskanal 21 abgestufte frontseitige Kontaktfläche 33 auf, wobei der gemäß Fig. 141 untere Abschnitt, der dem äußeren Profilschenkel 37 zugeordnet ist, zurückgesetzt ist und an dem Profilschenkel 37 anliegt und der obere vorragende Abschnitt an dem Einputzschenkel 38 und seitlich an dem Basisschenkel 39 der Bauprofilleiste 1 anliegt und an dem Einputzschenkel 38 entsprechend dessen rechtsseitiger Rillen- oder Rippenstruktur gebildet ist.

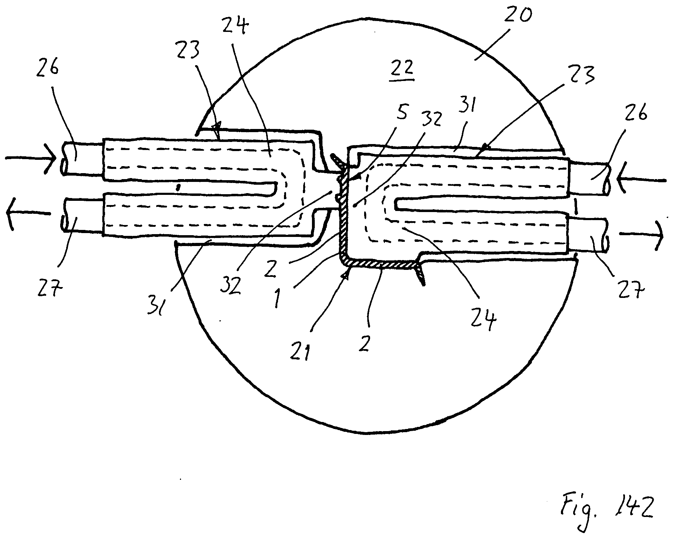

Fig. 142 zeigt ein weiteres Ausführungsbeispiel, bei dem an der Stirnseite 22 des Extrusionswerkzeugs 20 zwei getrennte Kühleinrichtungen 23 in einer sich bezüglich des Extrusionskanals 21 gegenüber liegenden Ausrichtung angebracht sind und die Zuläufe 26 und Abläufe 27 ebenfalls auf den sich gegenüber liegenden Seiten angeordnet sind. Die Bauprofilleiste 1 ist ein zwei Schenkel 2 aufweisendes Winkelprofil, an dem rechtsseitig an den Außenflächen 5 beider Schenkel 2 das Kühlteil 24 der rechten Kühleinrichtung 23 mit seinem Kontaktbereich 32 flächig anliegt und an dem linksseitig in einem schmalen Bereich des vertikalen Schenkels 2 auf der linken Seite oder Innenfläche, die eine Einputzseite darstellt, eine raue Oberfläche im Bereich einer Rillenstruktur hergestellt wird, wohingegen an der rechten Seite eine feine Rauhigkeit für eine zu lackierende Oberfläche hergestellt wird. Die beiden Kühleinrichtungen 23 sind im Bereich außerhalb der Kühlteile 24 durch Spalte oder Abstände 31 vom Extrusionswerkzeug 20 im wesentlichen thermisch getrennt.

Um die raue Oberfläche kontrolliert und kontinuierlich herstellen zu können, ist während der Produktion an der Extrusionslinie ein taktiles Messgerät bzw. ein Taktilometer zur laufenden Überprüfung der Rauheitswerte der Oberfläche erforderlich.

Weitere Ausführungsbeispiele von erfindungsgemäßen Bauprofilleisten mit zumindest teilweise rau gestalteten Oberflächen zur Verwendung bei Putzeckleisten zeigen die Figuren 95 bis 101.

Die Bauprofilleiste 1 der Fig. 95 und 96 ist ein im wesentlichen U-förmiges Profil, das auf eine Eckhalterung 40 eines Metallwinkelprofils 41 aufgesteckt wird, welches an einer Gebäudeecke 42 mittels einer Schicht Nassputz 10 eingeputzt wird. Die Bauprofilleiste 1 dient dabei als Abzugskante. Die gerundete Außenfläche 4 der Bauprofilleiste 1 ist mit einer Verankerungsstruktur 12 in Gestalt der erfindungsgemäßen rauen Oberfläche gebildet und bildet einen Haftgrund für Lack oder Farbe. Die Fig. 97 und 98 zeigen eine Anwendung dieser Bauprofilleiste 1 bei einem Metallwinkelprofil gemäß den Fig. 95 und 96, jedoch sind die Schenkel 2 aus Streckmetall gebildet, das aufgrund seiner Herstellungsweise andere Öffnungen zum Aufnehmen von Nassputz enthält.

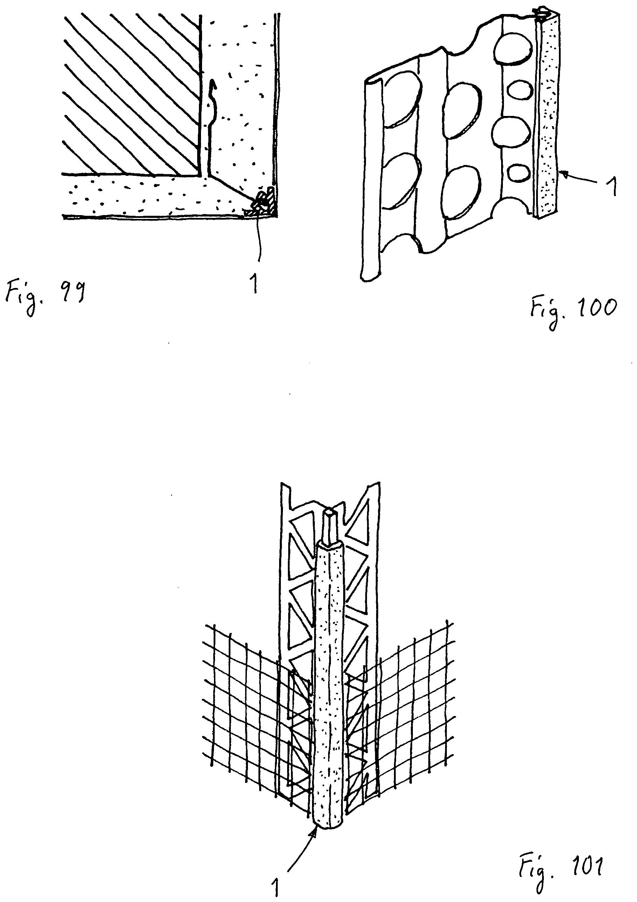

Die Bauprofilleiste 1 der Fig. 99 und 100 ist ein Eckprofil mit zwei rechtwinklig zueinander stehenden Außenflächen mit rauer Oberfläche. Das Eckprofil enthält innenseitig eine Steck- oder Klemmhalterung für einen Haltesteg einer einschenkligen Metalleckleiste. Diese Metalleckleiste mit der Bauprofilleiste 1 wird bevorzugt bei Wärmedämmputzen eingesetzt.

Die Putzeckleiste der Fig. 101, ein sog. Gewebeeckwinkel, enthält ein Kunststoffeckprofil mit einer in etwa quadratischen zentralen Eckhalterung, auf die eine Bauprofilleiste 1 mit rauer Oberfläche aufsteckbar ist. Die aufgesteckte bzw. aufgeklemmte Bauprofilleiste 1 hält ein Armierungsgewebe, das über eine Dämmschicht und die Putzeckleiste gelegt ist.

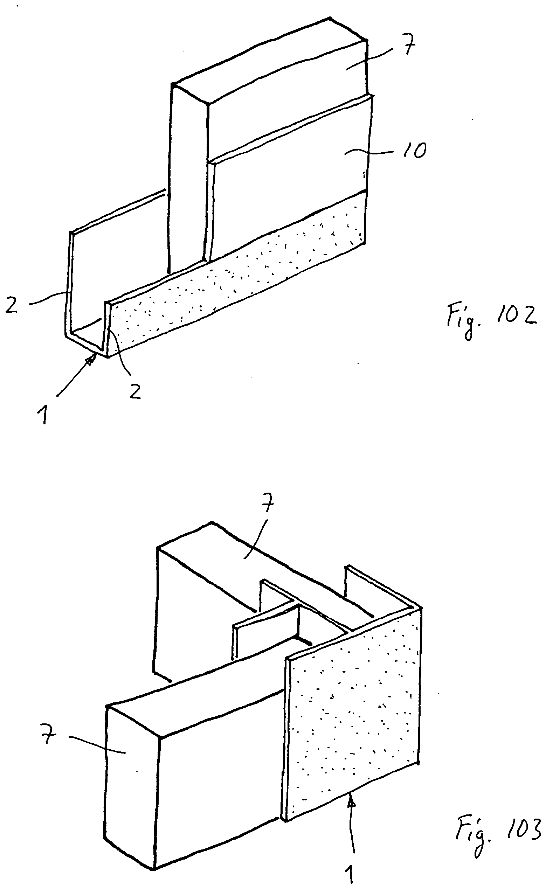

Fig. 102 zeigt eine U-förmige Bauprofilleiste 1 als Einfassprofil beim Trockenbau. Die Bauprofilleiste 1 umfaßt den Unterrand einer Trockenbauplatte 7 mit ihren beiden Schenkeln 2, wobei der vordere sichtseitige Schenkel 2 eine raue Oberfläche aufweist. Eine Schicht aus Spachtelmasse 10 ist in der Dicke des vorderen Schenkels der Bauprofilleiste 1 auf die Trockenbauplatte 7 aufgetragen. Beim Auftragen von Lack oder Farbe auf die Spachtelschicht 10 und die Bauprofilleiste 1 dient die raue Oberfläche als Haftgrund. Auch zumindest eine weitere Fläche wie die Unterseite der Bauprofilleiste 1 kann bei Bedarf ebenfalls mit rauer Oberfläche gebildet sein.

Fig. 103 zeigt eine abgewandelte Bauprofilleiste 1 als Eckleiste beim Trockenbau. Die beiden sichtseitigen Außenflächen weisen raue Oberflächen auf, wohingegen die inneren Schenkel zur Aufnahme von zwei Trockenbauplatten 7 auf raue Oberflächen verzichten können.

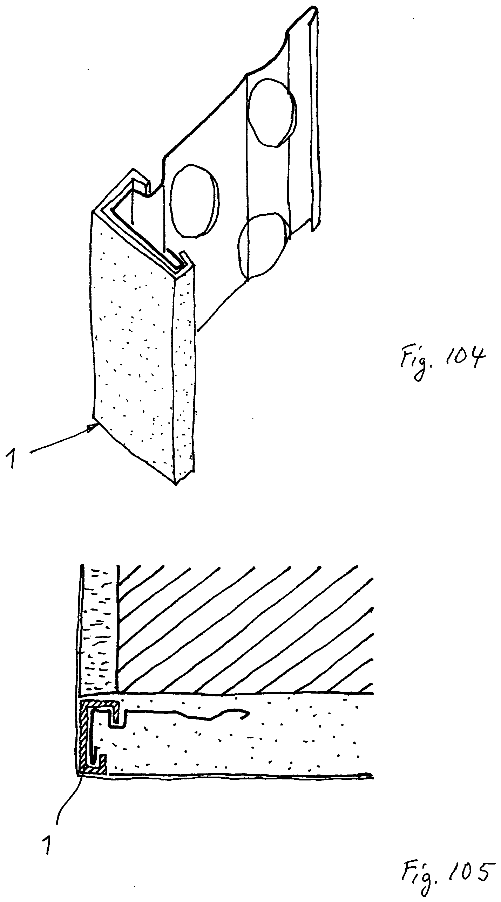

Die Fig. 104 und 105 zeigen ein Putzabschlussprofil mit einer profilierten Metallleiste und einer auf einen Halteschenkel der Metallleiste aufgeklemmten Bauprofilleiste 1, die in der Einbauanordnung mit der einen Außenfläche z. B. mit einer alten Putzschicht einer Mauer fluchtet und mit der anderen Außenfläche die Randbegrenzung einer auf das Putzabschlussprofil aufgebrachten Putzschicht bildet. Die Metallleiste wird z. B. mit Ansetzmörtel an der Mauer befestigt. Die rauen Oberflächen der beiden Außenflächen der Bauprofilleiste 1 werden bei einem Auftrag von Farbe oder Lack überstrichen.

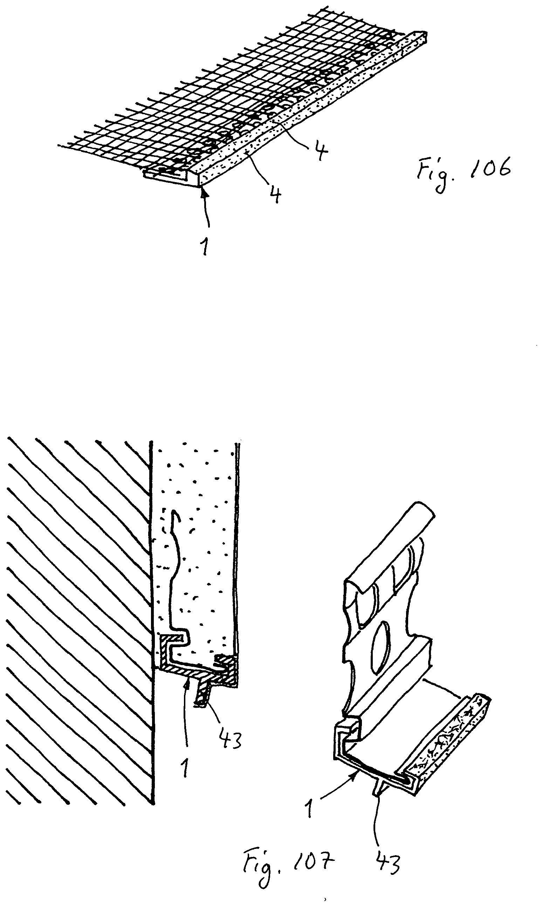

Das in Fig. 106 dargestellte Putzabschlussprofil für WDVS enthält eine Bauprofilleiste 1 mit einem daran befestigten Armierungsgewebe. Die Bauprofilleiste 1 enthält zwei schmale winklig zueinander stehende Außenflächen 4 mit rauer Oberfläche.

Ein Putzabschlussprofil (siehe Fig. 107) als Sockelprofil enthält eine profilierte Metallleiste, auf deren unteren Halteschenkel eine Bauprofilleiste 1 aufgeklemmt oder aufgeschoben ist. Die Bauprofilleiste 1 enthält unterseitig eine Tropfnase 43 und vorderseitig einen U-förmigen Halteabschnitt, der ebenso wie die Tropfnase 43 sichtseitig mit einer rauen Oberfläche gebildet ist. Die vordere Außenfläche des Halteabschnitts stellt eine Abzugskante beim Aufbringen einer Putzschicht dar und wird anschließend überstrichen.

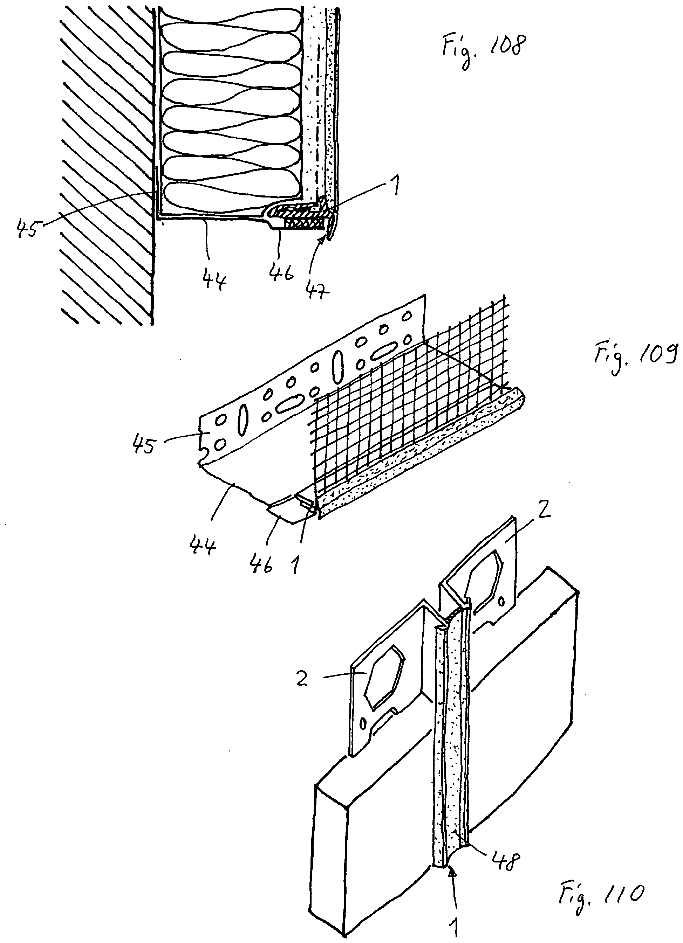

Die Fig. 108 und 109 zeigen ein Sockelprofil mit einer L-förmigen Metallprofilleiste 44, die mit ihrem hinteren Befestigungsschenkel 45 an einer Mauer als unterer Abschluß einer Wärmedämmschicht festgelegt wird und an deren vorderes Trägerblech 46 eine Bauprofilleiste 1 mit einem Klebeband angeklebt ist. Die Bauprofilleiste 1 enthält eine nach unten ragende Lippe 47 mit einer fein gerauten Oberfläche für Farbauftrag und einen darüber liegenden Einputzabschnitt mit gröber gerauter Oberfläche als Haftgrund für einen Fein- oder Strukturputz. Ein Armierungsgewebe ist zwischen einem Schenkel und einem Basisabschnitt der Bauprofilleiste 1 eingeklemmt und in einer Grundspachtelung eingespachtelt.

Fig. 110 zeigt eine Bauprofilleiste 1 als ein einteiliges Dehnungsfugenprofil mit zwei L-förmigen Schenkeln 2 aus Hartkunststoff, die mit einem Mittelteil 48 aus Weichkunststoff miteinander verbunden sind. Die beiden Schenkel 2 sind mit einer Putzschicht eingeputzt und die Bauprofilleiste 1 kann an ihrer mit rauer Oberfläche gebildeten Außenseite überstrichen werden.

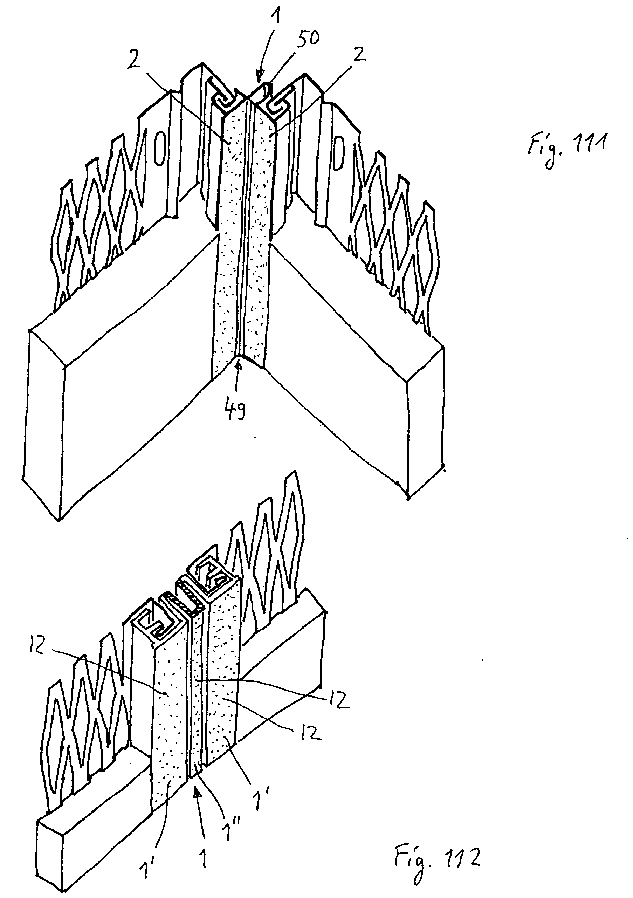

Das Dehnungsfugenprofil der Fig. 111 enthält zwei L-förmige Metallwinkelprofile in einer Anordnung für eine Dehnfuge an einer Innenecke zweier Mauern. Die Bauprofilleiste 1 ist ein Hartkunststoffprofil mit zwei Schenkeln 2 mit sichtseitigen Außenflächen mit rauer Oberfläche. Die beiden Schenkel 2 sind mittels einer auftrennbaren geschwächten Verbindung 49 sowie mittels einer dahinter liegenden Schlaufe 50 miteinander verbunden. Bei Bewegungen der beiden benachbarten Mauern kann die geschwächte Verbindung 49 aufreißen, wobei dann die Abdichtung durch die Schlaufe 50 weiterhin besteht.

Fig. 112 zeigt ein ähnliches Dehnungsfugenprofil für eine Dehnungsfuge zwischen zwei in einer Ebene angeordneten Wänden (nicht dargestellt), an denen die zwei L-förmigen Metallwinkelprofile beidseits der Fuge angeordnet sind. Die Bauprofilleiste 1 enthält zwei Seitenteile 1' aus hartem Kunststoff und ein dazwischenliegendes Mittelteil 1" aus weichem Kunststoff, wobei die Seitenteile 1' an den Halteschenkeln der Metallwinkelprofile aufgeschoben werden. Eine derartige Bauprofilleiste 1 ist in der DE 100 14 097 C2 offenbart. Gegenüber dieser bekannten Bauprofilleiste sind die sichtseitigen Außenflächen der erfindungsgemäßen Bauprofilleiste 1 gemäß der Fig. 112 mit einer Verankerungsstruktur 12 mit einer rauen Oberfläche gebildet, die nach dem Aufbringen einer Putzschicht bis an die beiden äußeren Seitenteile überstrichen werden können und als Haftgrundlage dienen.

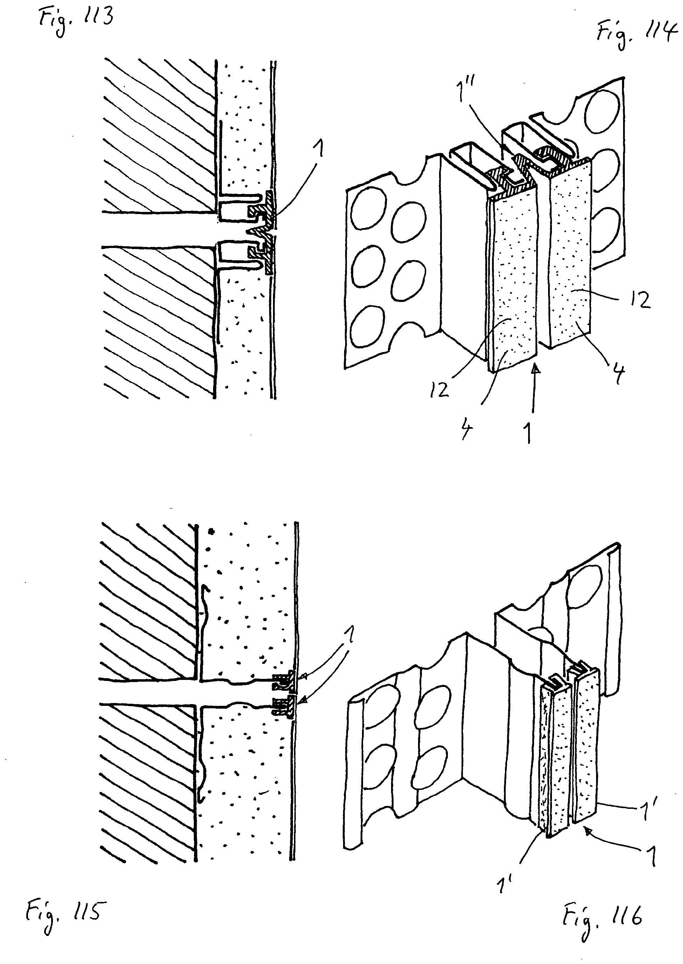

Das in den Fig. 113 und 114 dargestellte Dehnungsfugenprofil enthält ebenfalls zwei Metallprofile zum Anbringen an eine jeweilige Wand beidseits einer Fuge und eine Bauprofilleiste 1, die aus Weichkunststoff besteht und über zwei Verankerungsschenkel an den Metallprofilen festgeklemmt wird. Ein V-förmiges Mittelteil 1" der Bauprofilleiste 1 kann sich bei einer Weitung der Fuge entsprechend anpassen und behält seine Dichtigkeit bei. Die beiden sichtbaren Außenflächen 4 der Bauprofilleiste 1 weisen eine Verankerungsstruktur 12 mit einer rauen Oberfläche auf. Eine aufgebrachte Putzschicht kann gemeinsam mit der Bauprofilleiste 1 überstrichen werden.

Die Bauprofilleiste 1 des Dehnungsfugenprofils der Fig. 115 und 116 unterscheidet sich vom voranstehenden Ausführungsbeispiel im wesentlichen dadurch, dass statt eines V-förmigen Mittelteils lediglich zwei voneinander unabhängige Abschlussprofile 1' angeordnet sind, die bei einer Weitung der Fuge sich unabhängig voneinander bewegen. Die Bauprofilleiste 1 enthält beispielhaft an den sichtseitigen Außenflächen eine Oberfläche mit feiner Rauhigkeit und an den am Putz anliegenden Seitenflächen kleine Oberflächen mit einer gröberen Rauhigkeit.

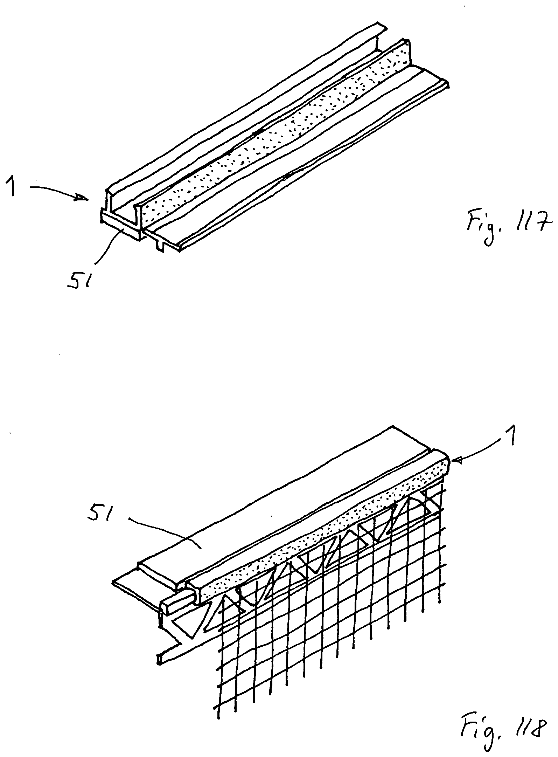

Ein weiteres Ausführungsbeispiel einer Bauprofilleiste 1 (siehe Fig. 117) ist ein Putzanschlußprofil in Gestalt eines Leibungsanschlußprofils für Fenster oder Türen. Eine derartige Bauprofilleiste 1 ist grundsätzlich aus der EP 1 285 143 B1 bekannt und enthält darüber hinaus an dem sichtseitigen Einputzschenkel eine raue Oberfläche, die nach dem Einbau der Bauprofilleiste und Entfernen des Abziehstreifens überstrichen werden kann.

Das in Fig. 118 dargestellte Putzanschlußprofil enthält ein Kunststoffwinkelprofil mit einem Schaumklebeband 51 zum Anbringen der Leiste an der Unterseite eines Fensterblechs. An einem Eckhaltebereich des Kunststoffwinkelprofils ist eine Bauprofilleiste 1 aufgeklemmt, die eine sichtseitige Außenfläche mit einer rauen Oberfläche aufweist. Die aufgeklemmte Bauprofilleiste kann ein Armierungsgewebe festhalten.

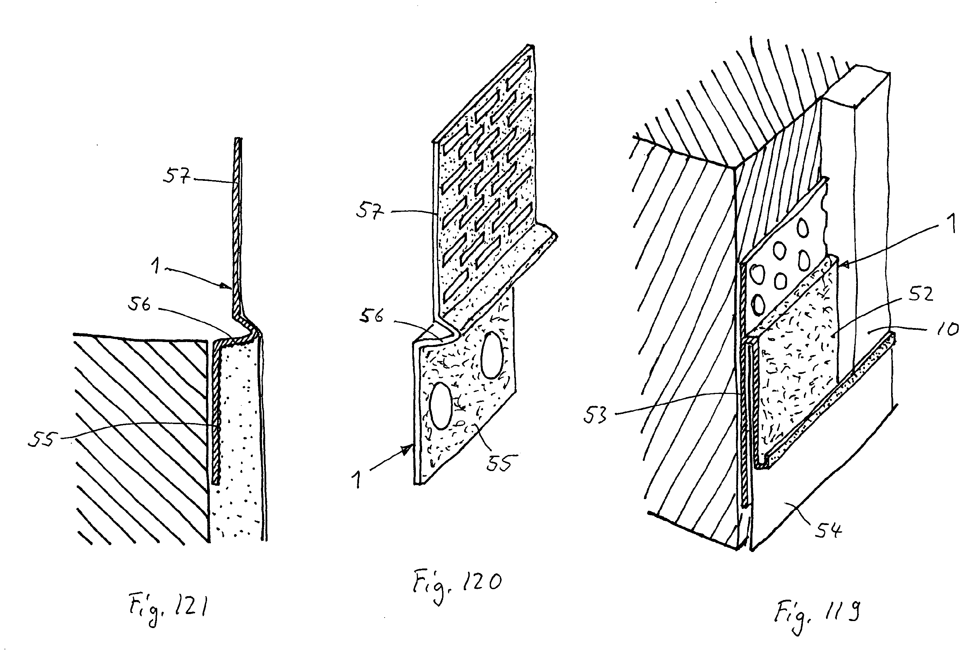

Das Putzanschlußprofil bzw. die Bauprofilleiste 1 der Fig. 119 bildet einen Übergang von Putz auf Blech. Die Bauprofilleiste 1 weist eine Befestigungsbasis zum Anbringen an einem Untergrund wie einer Wand oder einer anderen Tragkonstruktion und einen langen dünnen Schenkel 52, der parallel zu der Befestigungsbasis 53 verläuft und eine Tasche bildet, in die ein Blech 54 eingeschoben wird. Das freie Ende des Schenkels 52 enthält einen U-förmigen Abschluß, dessen Außenfläche eine Oberfläche mit feiner Rauhigkeit zum Überstreichen aufweist. Die Oberfläche des Schenkels 52 ist mit einer vergleichsweise groben Rauhigkeit gebildet, damit die auf den Schenkel 52 aufgebrachte dünne Putzschicht 10 sicher haften kann.

Das Putzanschlußprofil bzw. die Bauprofilleiste 1 der Fig. 120 und 121 stellt ein Dachbelüftungsprofil für Dachkonstruktionen mit Hinterlüftung dar. Die Bauprofilleiste 1 enthält einen Befestigungsschenkel 55 und einen Winkelabschnitt 56, der die Dicke einer aufzubringenden Putzschicht festlegt, sowie einen freien Schenkel 57 mit Längsschlitzen. Der Befestigungsschenkel 55 und der Winkelabschnitt 56 enthalten Oberflächen mit großer Rauhigkeit zum sicheren Anhaften von Putz, während der freie sichtbare Schenkel eine Oberfläche mit feiner Rauhigkeit zum Überstreichen aufweist.

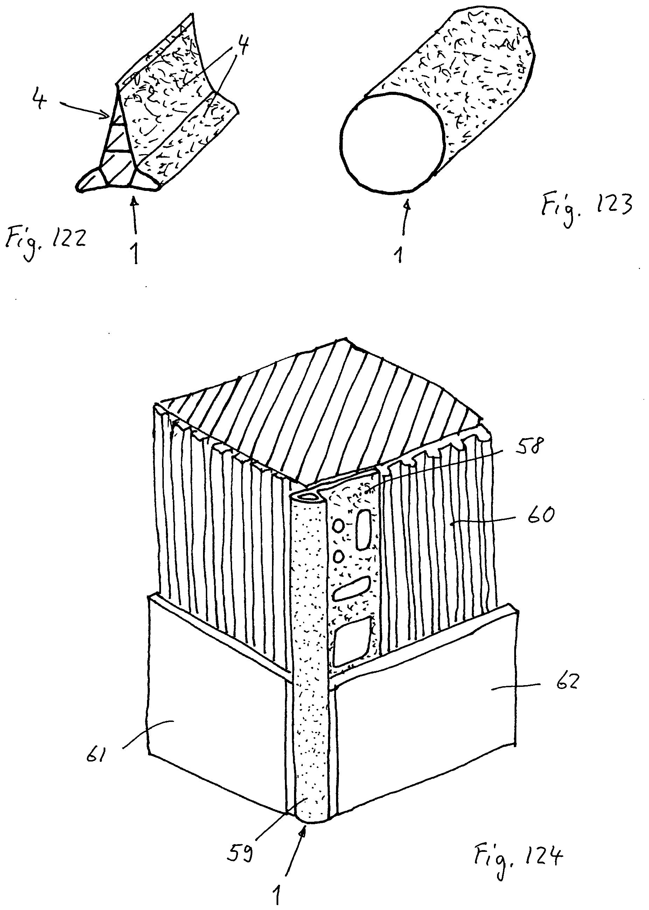

Die Fig. 122 zeigt eine Bauprofilleiste 1, die als Fugenprofil z. B. bei Beton- oder Estrichflächen verwendet wird und in Fugen eingesetzt und eingebettet ist, die größere Flächen in mehrere kleinere Flächen unterteilen. Die Bauprofilleiste 1 kann an einer Außenfläche 4 oder an beiden sich gegenüberliegenden Außenflächen 4 mit einer rauen Oberfläche versehen sein.

Die in Fig. 123 dargestellte Bauprofilleiste 1 ist als rohrförmiger Abstandshalter mit einer Außenfläche mit rauer Oberfläche gebildet und wird in eine Betonwand eingegossen. Durch die rohrförmige Bauprofilleiste erstrecken sich Schrauben, mit denen sich gegenüberliegende Betonschalungsplatten für das Gießen der Betonwand miteinander verbunden werden.

Die in Fig. 124 dargestellte Bauprofilleiste 1 stellt ein Flieseneckprofil dar und enthält einen Befestigungsschenkel 58 sowie ein Eckprofil 59 mit abgerundeter Außenfläche, dessen Oberfläche als Haftgrund für einen Farb- oder Lackauftrag mit feiner Rauhigkeit gebildet ist, während der Befestigungsschenkel 58, der Öffnungen aufweist und mit Fliesenkleber 60 an der Mauer befestigt ist, eine Oberfläche mit grober Rauhigkeit für den Fliesenkleber 60 aufweist. Die linksseitige Fliese 61 grenzt unter Bildung einer Fuge an das Eckprofil 59 an, während die rechtsseitige Fliese 62 auf den Befestigungsschenkel 58 geklebt wird und eine Fuge zu dem Eckprofil 59 verbleibt. Beide Fugen werden mit Fugenfüllmaterial geschlossen.

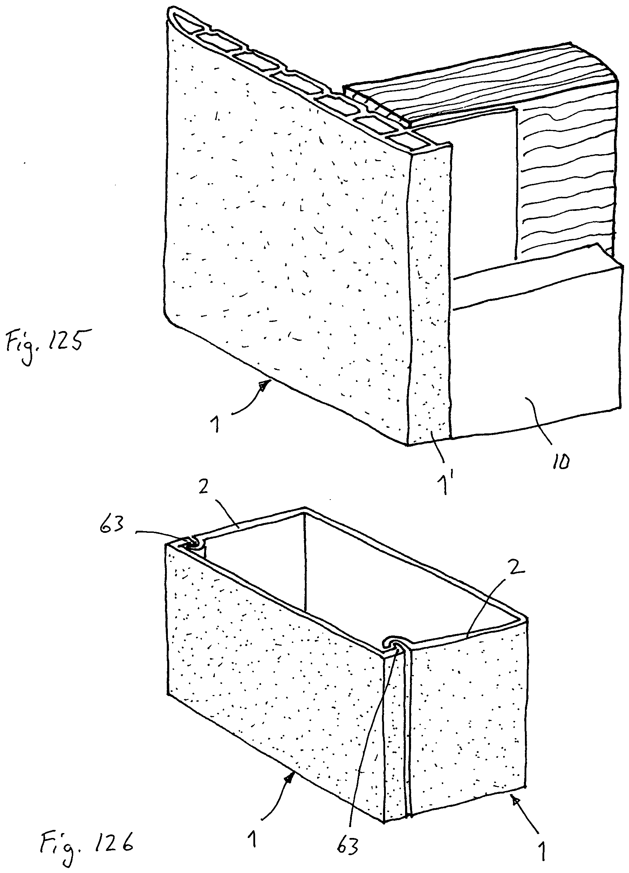

Die in Fig. 125 dargestellte Bauprofilleiste 1 ist ein großflächiges Fassadenbauprofil mit einer sichtseitigen großen Außenfläche mit rauer Oberfläche für einen Farbauftrag. Die Schmalseite 1' weist dieselbe raue Oberfläche auf und dient als Abzugskante oder Abzugsfläche für eine Putzschicht 10 oder als Haltevorrichtung bzw. Aufnahmeraum für den Endbereich einer Trockenbauplatte. Die Bauprofilleiste 1 ist mit ihrer Rückseite sowie mit einem rückwärtigen Schenkel an einer Fassadenunterkonstruktion befestigt und sie kann mit sich längs erstreckenden Hohlkammern gebildet sein.

Ein in Fig. 126 dargestellter Kabelschacht für Aufputzinstallation, beispielsweise bei Elektroinstallationen, ist aus zwei Bauprofilleisten 1 hergestellt, wobei die erste Bauprofilleiste 1 ein trog- oder rinnenförmiges Basisteil bildet, dessen Schenkel 2 zwei sich gegenüberliegende Außenflächen mit rauer Oberfläche aufweisen, und die zweite Bauprofilleiste 1 einen Deckel bildet, der seitlich jeweils eine hakenförmige Rastleiste 63 zum Eingriff an einem Gegenstück an der ersten Bauprofilleiste 1 aufweist und sichtseitig ebenfalls eine raue Oberfläche aufweist.

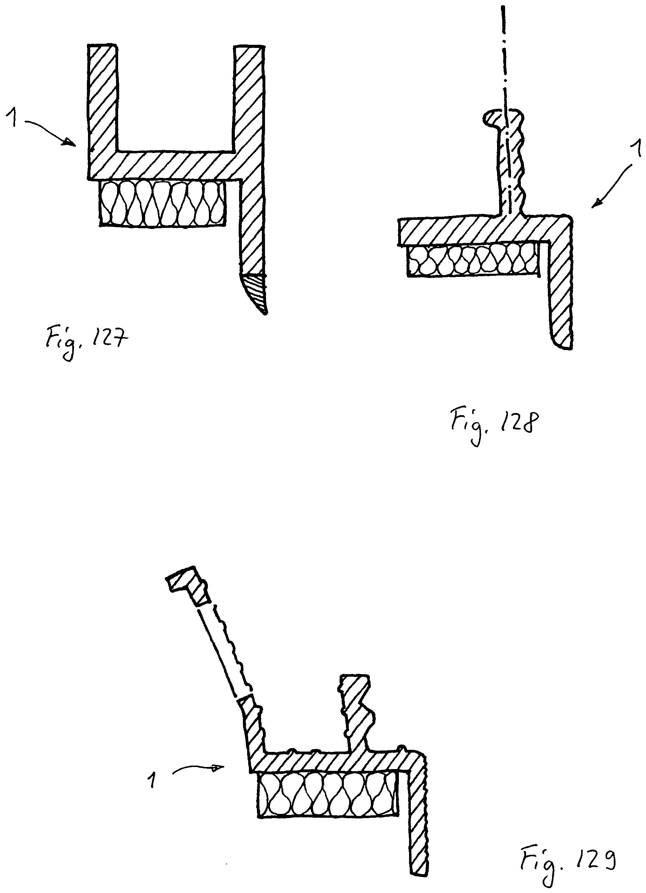

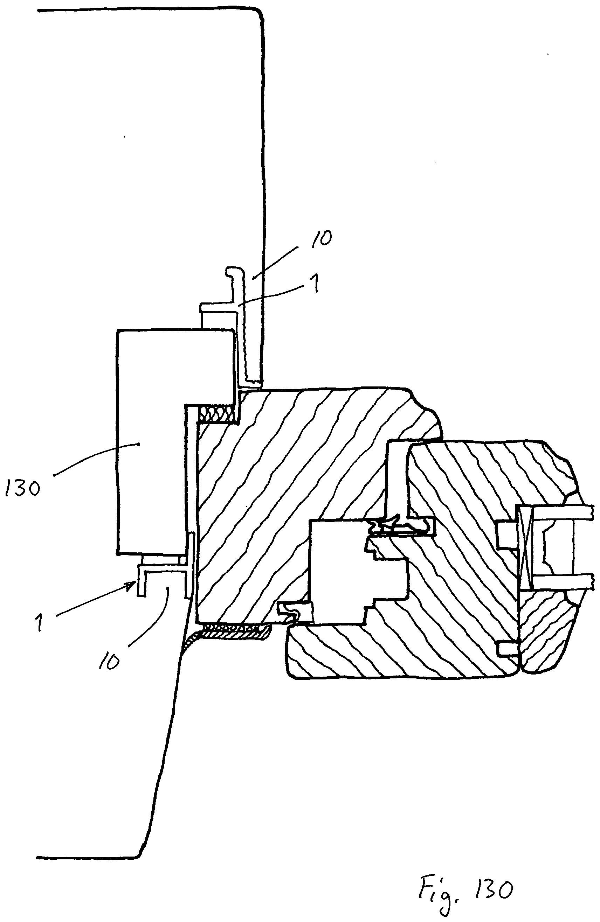

Die Fig. 127 bis 130 zeigen Bauprofilleisten 1 zur Anwendung an Blindstöcken. Ein beispielhaft dargestellter Blindstock 64 (siehe Fig. 130) ist an einer Leibung einer Wandöffnung befestigt und trägt zur Außenseite hin wie auch zur Innenseite hin jeweils ein Bauprofilleiste 1 als Anschluß an eine jeweilige Putzschicht 10.

Die in Fig. 128 dargestellte Bauprofilleiste 1 enthält eine Befestigungsbasis, die zur Befestigung der Bauprofilleiste 1 mittels eines Schaumklebebandes an einer äußerer Seitenfläche des Blindstocks dient, sowie einen Steg, der sich am der Wandöffnung zugewandten Ende der Befestigungsbasis rechtwinklig zu dieser in Richtung über das Schaumklebeband hinaus erstreckt und in einer Einbauanordnung über die Stirnseite des Blindstocks hinaus reicht und damit den Blindstock teilweise optisch abdeckt. Der Steg weist an seiner in Einbaustellung sichtseitigen Frontseite eine raue Oberfläche auf. Die Bauprofilleiste enthält des weiteren einen Einputzschenkel, der auf der dem Schaumklebeband und dem Steg gegenüberliegenden Einputzseite der Bauprofilleiste insbesondere rechtwinklig von der Befestigungsbasis absteht und zweckmäßigerweise gegenüber dem Steg einwärts zurückversetzt ist und als Haftgrundlage für eine aufzubringende Putzschicht ebenfalls eine raue Oberfläche aufweist. Am Einputzschenkel ist ein Armierungsgewebe anextrudiert, das als Verstärkung in der ersten Putzschicht eingebettet ist.

Bei der Bauprofilleiste 1 gemäß Fig. 127 ragen zwei Einputzschenkel rechtwinklig von einer Befestigungsbasis z. B. gleich weit ab, wobei der vordere Einputzschenkel mit einem sich abwärts erstreckenden Steg fluchtet und der hintere Einputzschenkel am Ende des Befestigungsschenkels ansetzt. Der Steg endet mit einer weichen Lippe, die beim Einbau eines Fenster- oder Türstocks aufgrund ihrer Flexibilität gegenüber einem starren Ende einen Bewegungsspielraum bietet. Der Steg reicht über die freie Klebefläche des Schaumklebebandes hinaus, zumindest etwa 1 mm, bevorzugt 3 bis 5 mm und bis zu etwa 10 mm, so dass der Steg eine ausreichende Anschlagfläche zum Anlegen an der Stirnseite des Blindstocks aufweist. Die sichtseitige Frontseite der Bauprofilleiste enthält eine raue Oberfläche, damit bildsames Material wie Farbe oder Putz daran verbessert haften kann.

Die in Fig. 129 dargestellte Bauprofilleiste 1 enthält einen hinteren abgeschrägten Einputzschenkel sowie einen vorderen Einputzschenkel, der um beispielsweise etwa 2 bis 3 mm gegenüber dem Steg einwärts versetzt ist, so dass auf einen Grundputz, der bis zu einer am vorderen Einputzschenkel gebildeten Putzabzugskante aufgetragen wird, ein Fein- oder Strukturputz mit einer Dicke von etwa 2 bis 3 mm aufgetragen werden kann, wobei die Basis des Stegs die Abzugskante für diesen Fein- oder Strukturputz bildet. Der vordere Einputzschenkel kann außenseitig eine Profilierung als Haftgrund für den Fein- oder Strukturputz aufweisen. Auch innenseitig kann der vordere Einputzschenkel eine Strukturierung oder Profilierung als Haftgrund aufweisen, ebenso wie auch der innere Einputzschenkel. Die Außenfläche des Steges enthält eine Oberfläche mit feiner Rauhigkeit für einen Farbauftrag, während die Oberfläche des vorderen Einputzschenkels wie auch die Außenfläche der Befestigungsbasis eine gröbere Rauhigkeit für den Putz aufweisen können.

Die in Fig. 130 dargestellte außenseitige Bauprofilleiste 1 enthält an den von Putz abgedeckten Schenkel- und Stegflächen eine Oberfläche mit gröberer Rauhigkeit, während die innenseitige Bauprofilleiste eine Oberfläche mit geringerer Rauhigkeit für einen Farbauftrag aufweist.

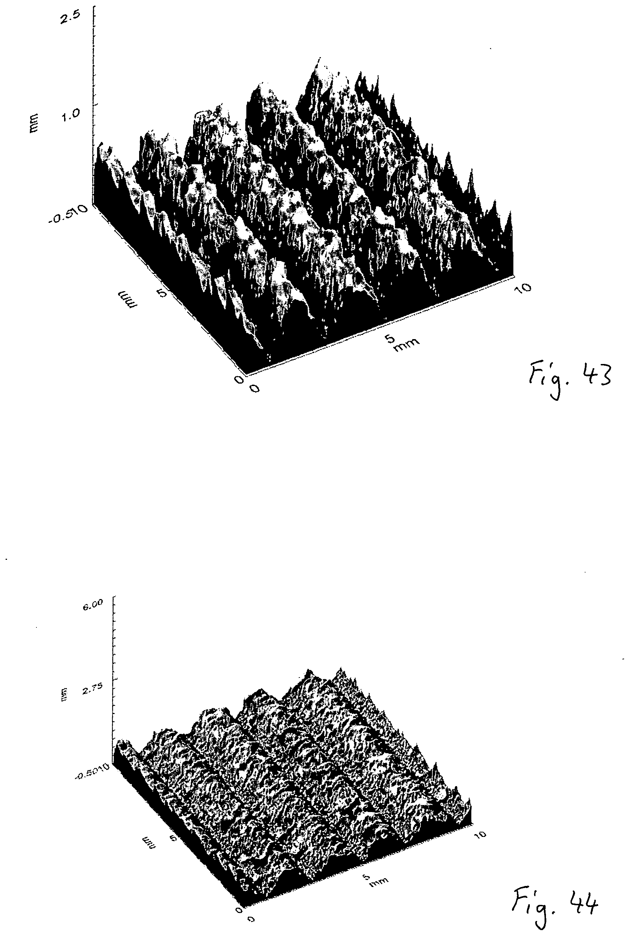

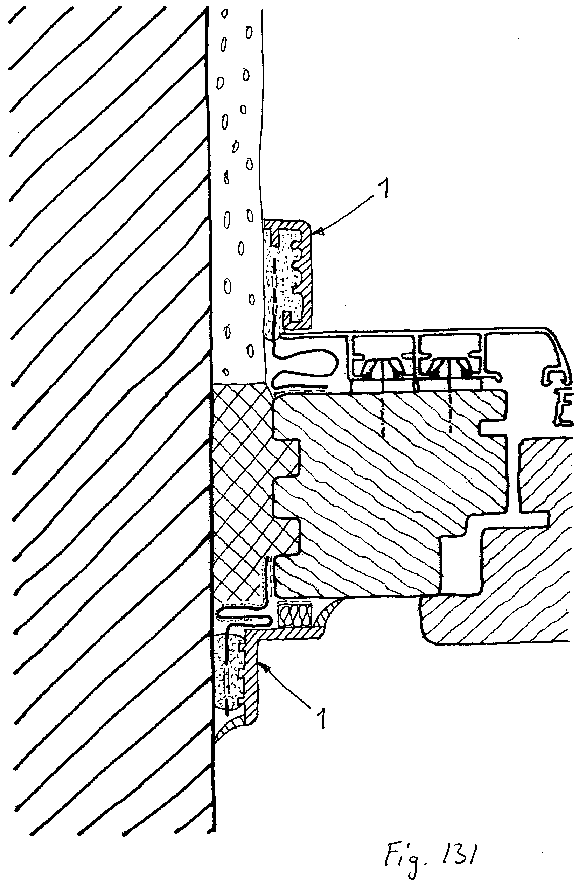

Die in Fig. 131 dargestellte äußere (obere) Bauprofilleiste 1 ist eine Renovierungsleiste einer äußeren Abdichtungsanordnung, die in Fig. 44 der DE 10 2005 002 177 A1 als Profilleiste 9 gezeigt und beschrieben ist und auf die zur näheren Erläuterung verwiesen wird. Sowohl der eine Klebe- oder Dichtmasse enthaltende Innenraum wie auch die Außenfläche der Bauprofilleiste können mit einer rauen Oberfläche als Haftgrund gebildet sein. Auch die innere (untere) Bauprofilleiste 1 der Fig. 131 ist in Fig. 44 der DE 10 2005 002 177 A1 dargestellt und kann sowohl an der Außenfläche wie auch an der Innenfläche eine raue Oberfläche aufweisen. Die Rauheit der Außenflächen ist bevorzugt für einen Auftrag von Farbe oder Lack angepasst gebildet.

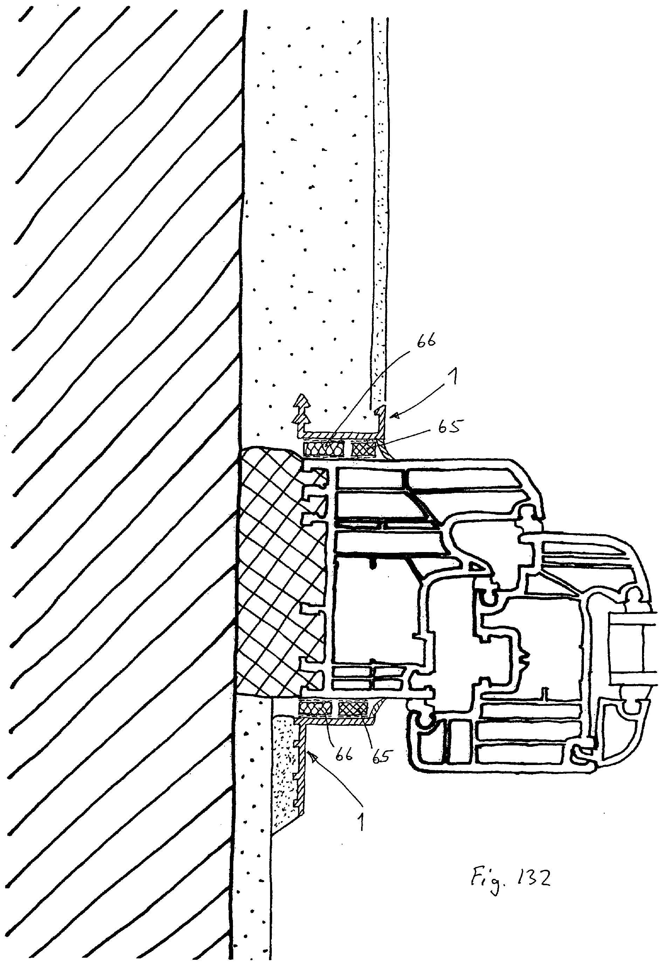

Fig. 132 zeigt einen in einer Leibung angebrachten Fensterstock, der außenseitig mittels einer ein Leibungsanschlußprofil bildenden Bauprofilleiste 1 und innenseitig mittels einer ein Renovierungsprofil bildenden Bauprofilleiste 1 an die jeweiligen Putzschichten unmittelbar oder mittelbar angeschlossen ist. Die beiden Bauprofilleisten 1 sind mittels einer Montageeinrichtung 65 und einer Abdichtungseinrichtung 66 in Gestalt von jeweiligen Dichtungsbändern mit dem Fensterstock verbunden. Zumindest die sichtseitigen Außenflächen der beiden Bauprofilleisten können mit rauen Oberflächen versehen sein. Die Rauheit der Außenflächen ist wieder bevorzugt für einen Auftrag von Farbe oder Lack angepasst gebildet.

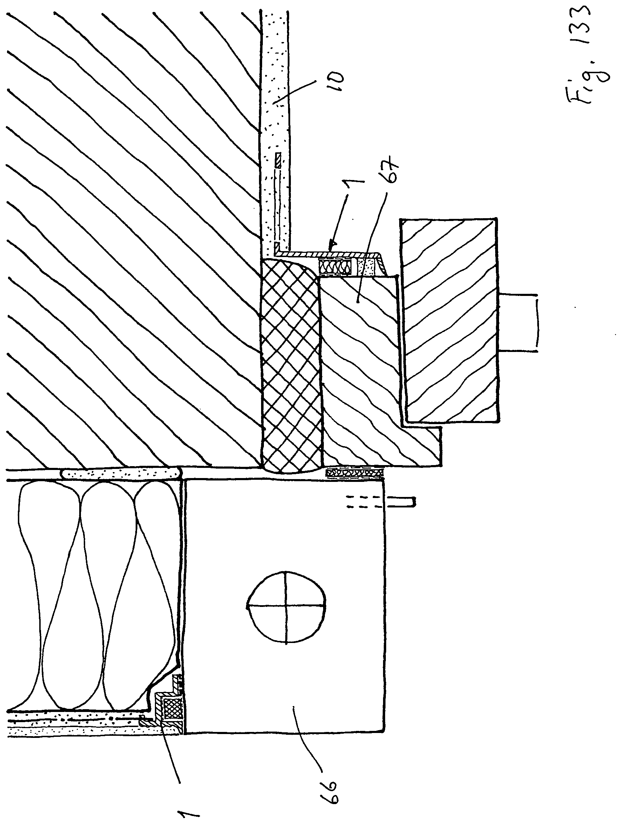

Fig. 133 zeigt eine äußere (linke) Bauprofilleiste 1 als Renovierungsleiste oberhalb eines Rollokastens 66 sowie eine innere (rechte) Bauprofilleiste 1 als Leibungsanschlussleiste zwischen einem Fensterrahmen 67 und einer Putzschicht 10. Der vordere Einputzschenkel der äußeren Bauprofilleiste 1 kann zusätzlich zu der gewellten Oberfläche noch mit einer Rauhigkeit als Haftgrund für Spachtelmasse oder Feinputz gebildet sein. Die innere Bauprofilleiste 1 kann eine sichtseitige Innenfläche mit einer rauen Oberfläche für einen Farbauftrag enthalten.

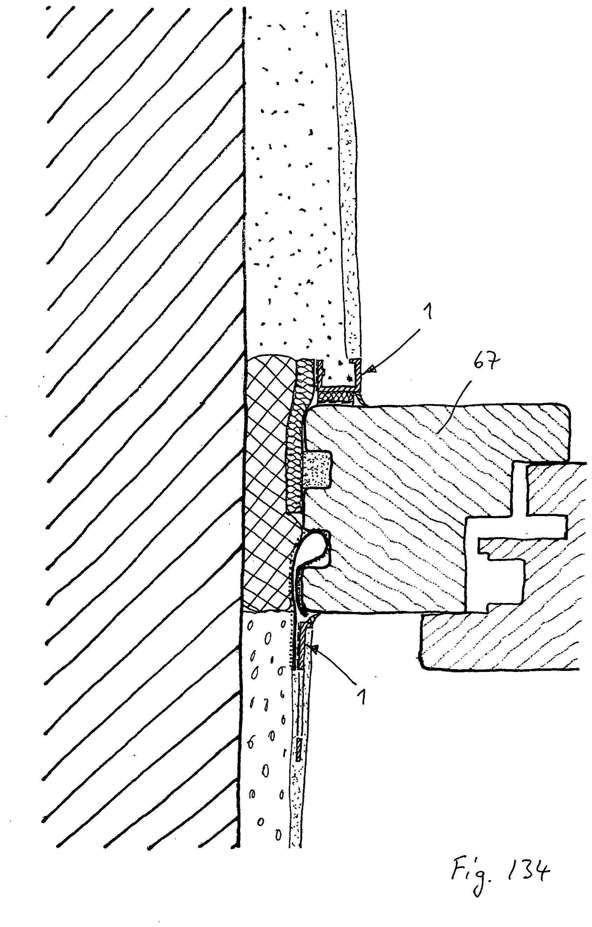

Die in Fig. 134 dargestellte Abdichtungsanordnung an einem in einer Leibung befestigten Fensterrahmen 67 entspricht der in der DE 10 2005 002 177 A1 in Fig. 1 gezeigten und beschriebenen Abdichtungsanordnung, so dass zur näheren Erläuterung hierauf verwiesen wird. Sowohl bei der äußeren wie auch bei der inneren Bauprofilleiste 1 sind erfindungsgemäß die relevanten Bereiche mit rauen Oberflächen gebildet.

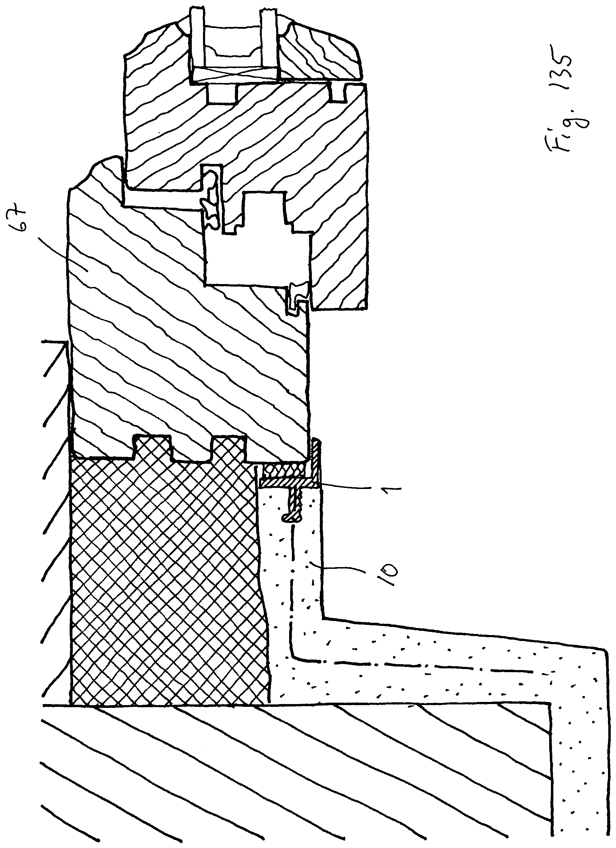

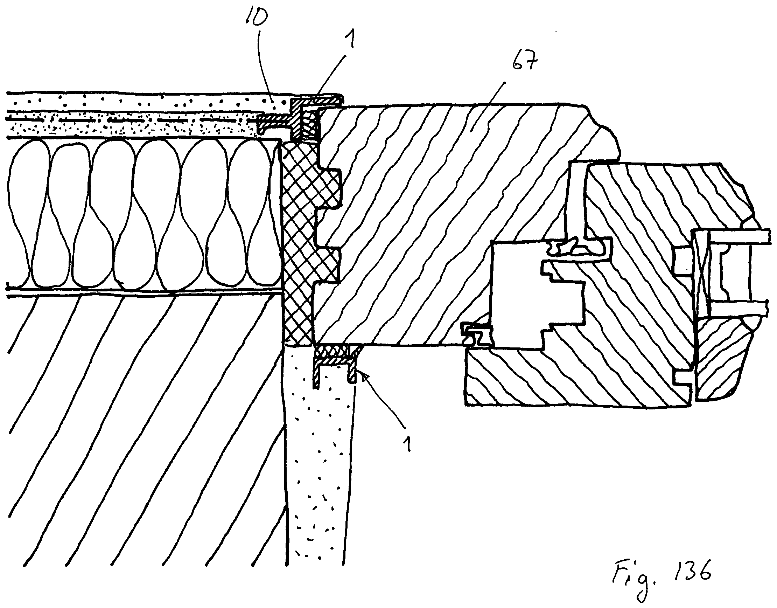

Die Fig. 135 und 136 zeigen jeweils eine Anordnung eines Fensterrahmens an einer Leibung eines Mauerwerks. Die eine rauminnenseitige Putzanschlußanordnung bildende Bauprofileiste 1 der Fig. 135 ist mittels eines Schaumklebebandes an der der Montagefuge bzw. der Leibung zugewandten Rückseite des Fensterrahmens befestigt. Bei dieser Anordnung greift der Steg der Bauprofilleiste 1 über den Randbereich der dem Innenraum zugewandten Innenseite des Fensterrahmens und die Frontfläche des Steges bleibt auch nach dem Aufbringen einer Leibungsputzschicht 10 sichtbar. Die Frontfläche des Steges kann jedoch mit einer erfindungsgemäßen rauen Oberfläche als Haftgrund für einen Farbauftrag gebildet sein. Der Steg liegt als Montagehilfe beim Anbringen der Bauprofilleiste 1 an der Innenseite des Fensterrahmens an.

Die eine raumaußenseitige Putzanschlußanordnung bildende Bauprofilleiste 1 der Fig. 136 ist in vergleichbarer Weise über ihre Befestigungsbasis mittels eines Schaumklebebandes an der der Montagefuge bzw. der Leibung zugewandten Rückseite des Fensterrahmens befestigt. Bei dieser Anordnung der Bauprofilleiste 1 greift ihr Steg über den Randbereich der dem Außenraum zugewandten Außenseite des Fensterrahmens und die Frontfläche des Steges bleibt auch nach dem Aufbringen einer äußeren Putz- oder Spachtelschicht 10 sichtbar oder sie wird von einer dünnen Spachtelschicht überzogen oder mit einem Farbauftrag versehen. Dafür erhält die Frontfläche ebenfalls eine erfindungsgemäße raue Oberfläche bzw. Verankerungsstruktur. Auch bei diesem Ausführungsbeispiel liegt der Steg als Montagehilfe beim Anbringen der Profilleiste an der Außenseite des Fensterrahmens an. Eine rauminnenseitige Putzanschlußleiste bekannnter Bauart stellt den innenseitigen Übergang zwischen dem Fensterrahmen und der Putzschicht an der Mauer des Innenraums dar und kann mit einer rauen Oberfläche als Haftgrund für einen Farbauftrag versehen sein.

## Patentansprüche

1. Bauprofilleiste aus extrudiertem Kunststoff, die an ihrer Oberfläche eine Vertiefungen aufweisende Verankerungsstruktur als Haftgrund für aufzubringendes bildsames Material aufweist, wobei die Vertiefungen (12) unregelmäßig geformt und/oder unregelmäßig angeordnet sind **dadurch gekennzeichnet, dass** die Verankerungsstruktur durch Erstarrung lediglich einer Oberflächenschicht des plastischen Kunststoffmaterials aufgrund einer Kühlung bei der Extrusion gebildet ist.

2. Bauprofilleiste nach Anspruch 1,
**dadurch gekennzeichnet, dass** die Vertiefungen (12) räumlich, insbesondere in der Längserstreckung und/oder der Querstreckung der Bauprofilleiste (1), unregelmäßig geformt und/oder unregelmäßig angeordnet sind.

3. Bauprofilleiste nach Anspruch 1 oder 2,
**dadurch gekennzeichnet, dass** eine durchschnittliche Fläche der Verankerungsstruktur von 2 mm x 2 mm durchschnittlich mehr als 9 oder 25 oder 100 oder 225 oder 400 Vertiefungen (12) aufweist.

4. Bauprofilleiste nach einem der Ansprüche 1 bis 3,
**dadurch gekennzeichnet, dass** zumindest einige der Vertiefungen (12) zumindest eine Hinterschneidung aufweisen.

5. Bauprofilleiste nach einem der Ansprüche 1 bis 4,
**dadurch gekennzeichnet, dass** die Verankerungsstruktur bzw. die Vertiefungen (12) und ein zugeordneter basisgebender Bereich der Bauprofilleiste (1) aus unterschiedlichen Kunststoffen gebildet sind.

6. Bauprofilleiste nach einem der Ansprüche 1 bis 5,
**dadurch gekennzeichnet, dass** benachbarte Vertiefungen (12) unterschiedlich geformt sind.

7. Bauprofilleiste nach einem der Ansprüche 1 bis 6,
**dadurch gekennzeichnet, dass** die Häufigkeit des Auftretens zweier im wesentlichen oder annähernd identischer Vertiefungen (12) bezogen auf einen Radius ihres 10-fachen maximalen räumlichen Einzelmaßes kleiner 1/10 oder kleiner 1/20 oder kleiner 1/50 oder kleiner 1/100 oder kleiner 1/300 ist.

8. Bauprofilleiste nach einem der Ansprüche 1 bis 7,
**dadurch gekennzeichnet, dass** die Bauprofilleiste (1) einen oder mehrere insbesondere längserstreckte Bereiche mit einer Verankerungsstruktur bzw. Vertiefungen (12) aufweist.

9. Bauprofilleiste nach einem der Ansprüche 1 bis 8,
**dadurch gekennzeichnet, dass** die Verankerungsstruktur eine Schichtdicke von 0,03 mm bis 5 mm, bevorzugt eine Schichtdicke von 0,05 bis 3 mm und insbesondere eine Schichtdicke von 0,1 mm bis 1,5 mm aufweist.

10. Bauprofilleiste nach einem der Ansprüche 1 bis 9,
**dadurch gekennzeichnet, dass** der sPa-Wert oder der sRa-Wert im Bereich der Verankerungsstruktur größer 1 µm (Klasse 1) oder 3 µm (Klasse 2) oder 8 µm (Klasse 3) oder 20 µm (Klasse 4) oder 50 µm (Klasse 5) ist, und/oder
dass der sPz-Wert oder der sRz-Wert im Bereich der Verankerungsstruktur größer 25 µm (Klasse 1) oder 50 µm (Klasse 2) oder 100 µm (Klasse 3) oder 200 µm (Klasse 4) oder 400 µm (Klasse 5) ist.

11. Bauprofilleiste nach Anspruch 10,
**dadurch gekennzeichnet, dass** das Verhältnis des sPz-Wertes zum sPa-Wert oder des sRz-Wertes zum sRa-Wert im Bereich der Verankerungsstruktur kleiner 20 oder 13 oder 8 oder 6 oder 4,5 ist.

12. Bauprofilleiste nach einem der Ansprüche 1 bis 11,
**dadurch gekennzeichnet, dass** der sPIr-Wert oder der sRIr-Wert im Bereich der Verankerungsstruktur größer 1,1 (Klasse 1) oder 1,3 (Klasse 2) oder 1,6 (Klasse 3) oder 2,0 (Klasse 4) oder 2,5 (Klasse 5) ist.

13. Bauprofilleiste nach einem der Ansprüche 1 bis 12,
**dadurch gekennzeichnet, dass** das Höhenhistogramm im Bereich der Verankerungsstruktur im wesentlichen eine dreieckige Grundform aufweist und/oder dass die Traglastkurve im Bereich der Verankerungsstruktur im wesentlichen S-förmig gebildet ist.

14. Bausatz umfassend eine Bauprofilleiste nach einem der Ansprüche 1 bis 13, sowie ein bildsames Material zum Aufbringen auf die Oberfläche der Bauprofilleiste, **dadurch gekennzeichnet, dass** das bildsame Material einer ersten Gruppe A zugeordnet ist und ein Korngemisch mit einem Größtkorn bis 50 µm aufweist und/oder der Gruppe der Anstrichmittel insbesondere der Bautenanstrichmittel wie Lacke, Farben, Grundierungen und Lasuren zuzuordnen ist oder
dass das bildsame Material einer zweiten Gruppe B zugeordnet ist und ein Korngemisch mit einem Größtkorn größer 50 µm bis 1200 µm aufweist und/oder der Gruppe der Spachtelmassen und feinkörnigen Putze zuzuordnen ist oder
dass das bildsame Material einer dritten Gruppe C zugeordnet ist und ein Korngemisch mit einem Größtkorn größer 1200 µm aufweist und/oder der Gruppe der grobkörnigen Putze zuzuordnen ist.

15. Bausatz nach Anspruch 14, **dadurch gekennzeichnet, dass** Bauprofilleisten mit Rauheitswerten der Klassen 1 bis 3 bevorzugt zur Verbindung mit bildsamen Material der Gruppe A vorgesehen sind
und/oder
dass Bauprofilleisten mit Rauheitswerten der Klassen 3 bis 4 bevorzugt zur Verbindung mit bildsamen Material der Gruppe B vorgesehen sind und/oder
dass Bauprofilleisten mit Rauheitswerten der Klassen 4 bis 5 bevorzugt zur Verbindung mit bildsamen Material der Gruppe C vorgesehen sind.

16. Verfahren zum Herstellen einer Bauprofilleiste nach einem der Ansprüche 1 bis 15,
**dadurch gekennzeichnet,**
**dass** bei der Extrusion das plastische Kunststoffmaterial der Bauprofilleiste (1) bei ihrem Austritt aus dem Extrusionswerkzeug (20) und vor einer Kalibrierung derart gekühlt wird, dass die Verankerungsstruktur durch Erstarrung lediglich einer Oberflächenschicht des plastischen Kunststoffmaterials erzeugt wird.

17. Verfahren nach Anspruch 16,
**dadurch gekennzeichnet, dass** in Richtung der Materialdicke eine anteilige Kühlung der Oberflächenschicht erfolgt.

18. Verfahren nach Anspruch 16 oder 17,
**dadurch gekennzeichnet, dass** die Bauprofilleiste insbesondere im Bereich der Verankerungsstruktur teilkalibriert oder nicht kalibriert ist.

19. Verfahren nach einem der Ansprüche 16 bis 18,
**dadurch gekennzeichnet, dass** die Kühlung mittels einer Kühleinrichtung erfolgt, die ein Teil des Extrusionswerkzeugs ist oder an diesem angebracht ist.

20. Vorrichtung zum Herstellen einer Bauprofilleiste nach einem der Ansprüche 1 bis 15,
**dadurch gekennzeichnet,**
**dass** eine Kühleinrichtung an einem Extrusionswerkzeug (20) am Austritt der extrudierten Bauprofilleiste (1) vor einer Kalibriereinrichtung derart angeordnet oder integriert ist, dass eine Kontaktfläche der Kühleinrichtung mit der austretenden extrudierten Bauprofilleiste (1) in Formgebungskontakt ist und die Verankerungsstruktur (12) herstellt.

## Claims

1. A profiled building strip made of extruded plastic, having on its surface an anchoring structure with indentations, as an adhesive surface for moldable material to be applied,
wherein the indentations (12) are irregularly shaped and/or nonuniformly arranged, **characterized in that** the anchoring structure is formed by solidification of only a surface layer of the moldable plastic material due to cooling during the extrusion.

2. The profiled building strip according to Claim 1,
**characterized in that** the indentations (12) are irregularly shaped and/or nonuniformly arranged spatially, in particular in the longitudinal extension and/or the transverse extension of the profiled building strip (1).

3. The profiled building strip according to Claim 1 or 2,
**characterized in that** an average surface area of the anchoring structure of 2 mm x 2 mm has on average more than 9 or 25 or 100 or 225 or 400 indentations (12).

4. The profiled building strip according to one of Claims 1 to 3,
**characterized in that** at least some of the indentations (12) have at least one undercut.

5. The profiled building strip according to one of Claims 1 to 4,
**characterized in that** the anchoring structure or the indentations (12) and an associated area of the profiled building strip (1) forming the base are made of different plastics.

6. The profiled building strip according to one of Claims 1 to 5,
**characterized in that** adjoining indentations (12) have different shapes.

7. The profiled building strip according to one of Claims 1 to 6,
**characterized in that** the frequency of occurrence of two essentially or approximately identical indentations (12), based on a radius of 10 times their maximum spatial single dimension, is less than 1/10 or less than 1/20 or less than 1/50 or less than 1/100 or less than 1/300.

8. The profiled building strip according to one of Claims 1 to 7,
**characterized in that** the profiled building strip (1) has one or more in particular elongated areas having an anchoring structure or indentations (12).

9. The profiled building strip according to one of Claims 1 to 8,
**characterized in that** the anchoring structure has a layer thickness of 0.03 mm to 5 mm, preferably a layer thickness of 0.05 to 3 mm, and in particular a layer thickness of 0.1 mm to 1.5 mm.

10. The profiled building strip according to one of Claims 1 to 9,
**characterized in that** the sPa value or the sRa value in the area of the anchoring structure is greater than 1 µm (Class 1) or 3 µm (Class 2) or 8 µm (Class 3) or 20 µm (Class 4) or 50 µm (Class 5), and/or
that the sPz value or the sRz value in the area of the anchoring structure is greater than 25 µm (Class 1) or 50 µm (Class 2) or 100 µm (Class 3) or 200 µm (Class 4) or 400 µm (Class 5).

11. The profiled building strip according to Claim 10,
**characterized in that** the ratio of the sPz value to the sPa value, or of the sRz value to the sRa value, in the area of the anchoring structure is less than 20 or 13 or 8 or 6 or 4.5.

12. The profiled building strip according to one of Claims 1 to 11,
**characterized in that** the sPIr value or the sRIr value in the area of the anchoring structure is greater than 1.1 (Class 1) or 1.3 (Class 2) or 1.6 (Class 3) or 2.0 (Class 4) or 2.5 (Class 5).

13. The profiled building strip according to one of Claims 1 to 12,
**characterized in that** the vertical histogram in the area of the anchoring structure has an essentially triangular basic shape, and/or that the load curve in the area of the anchoring structure has an essentially S shape.

14. An assembly kit that includes a profiled building strip according to one of Claims 1 to 13 and a moldable material for application to the surface of the profiled building strip,
**characterized in that** the moldable material is associated with a first group A, and contains a granular mixture with a maximum grain size of up to 50 µm, and/or is to be associated with the group of coating agents, in particular architectural coatings such as lacquers, paints, primers, and glazes, or
that the moldable material is associated with a second group B, and contains a granular mixture with a maximum grain size greater than 50 µm to 1200 µm, and/or is to be associated with the group of spackling compounds and fine-grained plasters, or
that the moldable material is associated with a third group C, and contains a granular mixture with a maximum grain size greater than 1200 µm, and/or is or to be associated with the group of coarse-grained plasters.

15. The assembly kit according to Claim 14,
**characterized in that** profiled building strips having roughness values of Classes 1 to 3 are preferably provided for joining to moldable material of group A
and/or
that profiled building strips having roughness values of Classes 3 to 4 are preferably provided for joining to moldable material of group B
and/or
that profiled building strips having roughness values of Classes 4 to 5 are preferably provided for joining to moldable material of group C.

16. A method for producing a profiled building strip according to one of Claims 1 to 15,
**characterized in that**
during the extrusion, the moldable plastic material of the profiled building strip (1) upon exiting the extrusion die (20) and prior to a calibration is cooled in such a way that the anchoring structure is produced by solidification of only a surface layer of the moldable plastic material.

17. The method according to Claim 16,
**characterized in that** partial cooling of the surface layer takes place in the direction of the material thickness.

18. The method according to Claim 16 or 17,
**characterized in that** the profiled building strip is partially calibrated or uncalibrated in particular in the area of the anchoring structure.

19. The method according to one of Claims 16 to 18,
**characterized in that** the cooling takes place by means of a cooling device which is a part of the extrusion die or is mounted on same.

20. A device for producing a profiled building strip according to one of Claims 1 to 15,
**characterized in that**
a cooling device is situated on or integrated into an extrusion die (20) at the exit of the extruded profiled building strip (1), upstream from a calibration device, in such a way that a contact surface of the cooling device is in shaping contact with the exiting extruded profiled building strip (1) and produces the anchoring structure (12).

## Revendications

1. Profilé de construction en matière plastique extrudée, qui présente sur sa surface une structure d'ancrage présentant des creux en tant que base d'adhérence pour un matériau souple à déposer, dans lequel les creux (12) sont formés de manière irrégulière et/ou sont disposés de manière irrégulière, **caractérisé en ce que** la structure d'ancrage est formée par solidification uniquement d'une couche de surface du matériau de matière plastique à l'état plastique en raison d'un refroidissement lors de l'extrusion.

2. Profilé de construction selon la revendication 1, **caractérisé en ce que** les creux (12) sont formés de manière irrégulière et/ou sont disposés de manière irrégulière dans l'espace, en particulier dans l'extension longitudinale et/ou l'extension transversale du profilé de construction (1).

3. Profilé de construction selon la revendication 1 ou 2, **caractérisé en ce qu'**une face moyenne de la structure d'ancrage de 2 mm x 2 mm présente en moyenne plus de 9 ou 25 ou 100 ou 225 ou 400 creux (12).

4. Profilé de construction selon l'une quelconque des revendications 1 à 3, **caractérisé en ce qu'**au moins certains des creux (12) présentent au moins une contre-dépouille.

5. Profilé de construction selon l'une quelconque des revendications 1 à 4, **caractérisé en ce que** la structure d'ancrage ou les creux (12) et une région de base associée du profilé de construction (1) sont formés de matières plastiques différentes.

6. Profilé de construction selon l'une quelconque des revendications 1 à 5, **caractérisé en ce que** des creux voisins (12) sont formés de manière différente.

7. Profilé de construction selon l'une quelconque des revendications 1 à 6, **caractérisé en ce que** la fréquence d'apparition de deux creux (12) essentiellement ou approximativement identiques par rapport à un rayon de 10 fois leur dimension individuelle spatiale maximale est inférieure à 1/10 ou inférieure à 1/20 ou inférieure à 1/50 ou inférieure à 1/100 ou inférieure à 1/300.

8. Profilé de construction selon l'une quelconque des revendications 1 à 7, **caractérisé en ce que** le profilé de construction (1) présente une ou plusieurs région(s) en particulier étendue(s) longitudinalement avec une structure d'ancrage ou des creux (12).

9. Profilé de construction selon l'une quelconque des revendications 1 à 8, **caractérisé en ce que** la structure d'ancrage présente une épaisseur de couche de 0,03 mm à 5 mm, de préférence une épaisseur de couche de 0,05 mm à 3 mm et en particulier une épaisseur de couche de 0,1 mm à 1,5 mm.

10. Profilé de construction selon l'une quelconque des revendications 1 à 9, **caractérisé en ce que** la valeur sPa ou la valeur sRa dans la région de la structure d'ancrage est supérieure à 1 µm (classe 1) ou 3 µm (classe 2) ou 8 µm (classe 3) ou 20 µm (classe 4) ou 50 µm (classe (5), et/ou
la valeur sPz ou la valeur sRz dans la région de la structure d'ancrage est supérieure à 25 µm (classe 1) ou 50 µm (classe 2) ou 100 µm (classe 3) ou 200 µm (classe 4) ou 400 µm (classe 5).

11. Profilé de construction selon la revendication 10, **caractérisé en ce que** le rapport de la valeur sPz à la valeur sPa ou de la valeur sRz à la valeur sRa dans la région de la structure d'ancrage est inférieur à 20 ou 13 ou 8 ou 6 ou 4,5.

12. Profilé de construction selon l'une quelconque des revendications 1 à 11, **caractérisé en ce que** la valeur sPIr ou la valeur sRIr dans la région de la structure d'ancrage est supérieure à 1,1 (classe 1) ou 1,3 (classe 2) ou 1,6 (classe 3) ou 2,0 (classe 4) ou 2,5 (classe 5).

13. Profilé de construction selon l'une quelconque des revendications 1 à 12, **caractérisé en ce que** l'histogramme de la hauteur dans la région de la structure d'ancrage présente essentiellement une forme de base triangulaire et/ou **en ce que** la courbe de charge portante dans la région de la structure d'ancrage est essentiellement en forme de S.

14. Ensemble de construction comprenant un profilé de construction selon l'une quelconque des revendications 1 à 13 ainsi qu'un matériau souple à déposer sur la surface du profilé de construction, **caractérisé en ce que**
le matériau souple est associé à un premier groupe A et présente un mélange de grains avec un plus gros grain de 50 µm et/ou doit être associé au groupe des moyens de revêtement en particulier des moyens de revêtement pour bâtiments tels que laque, peintures, primaires et lasures, ou
le matériau souple est associé à un deuxième groupe B et présente un mélange de grains avec un plus gros grain de 50 µm à 1200 µm et/ou doit être associé au groupe des mastics et des enduits à grain fin, ou
le matériau souple est associé à un troisième groupe C et présente un mélange de grains avec un plus gros grain supérieur à 1200 µm et/ou doit être associé au groupe des enduits à gros grain.

15. Ensemble de construction selon la revendication 14, **caractérisé en ce que**
il est prévu des profilés de construction avec des valeurs de rugosité des classes 1 à 3, de préférence pour la liaison à un matériau souple du groupe A, et/ou il est prévu des profilés de construction avec des valeurs de rugosité des classes 3 à 4, de préférence pour la liaison à un matériau souple du groupe B, et/ou il est prévu des profilés de construction avec des valeurs de rugosité des classes 4 à 5, de préférence pour la liaison à un matériau souple du groupe C.

16. Procédé de fabrication d'un profilé de construction selon l'une quelconque des revendications 1 à 15, **caractérisé en ce que** lors de l'extrusion on refroidit le matériau de matière plastique à l'état plastique du profilé de construction (1) à sa sortie hors de l'outil d'extrusion (20) et avant un calibrage, de telle manière que la structure d'ancrage soit produite par solidification uniquement d'une couche de surface du matériau de matière plastique à l'état plastique.

17. Procédé selon la revendication 16, **caractérisé en ce que** l'on effectue un refroidissement proportionné de la couche de surface dans la direction de l'épaisseur de matière.

18. Procédé selon la revendication 16 ou 17, **caractérisé en ce que** le profilé de construction est partiellement calibré ou n'est pas calibré en particulier dans la région de la structure d'ancrage.

19. Procédé selon l'une quelconque des revendications 16 à 18, **caractérisé en ce que** l'on effectue le refroidissement au moyen d'un dispositif de refroidissement, qui est une partie de l'outil d'extrusion ou qui est installé sur celui-ci.

20. Dispositif de fabrication d'un profilé de construction selon l'une quelconque des revendications 1 à 15, **caractérisé en ce qu'**un dispositif de refroidissement est disposé ou intégré sur un outil d'extrusion (20) à la sortie du profilé de construction extrudé (1) avant un dispositif de calibrage, de telle manière qu'une face de contact du dispositif de refroidissement soit en contact de formage avec le profilé de construction extrudé sortant (1) et produise la structure d'ancrage (12).
